(19) **Europäisches Patentamt
European Patent Office
Office européen des brevets**

(11) **EP 4 651 503 A1**

(12) **EUROPEAN PATENT APPLICATION**
published in accordance with Art. 153(4) EPC

(43) Date of publication:
**19.11.2025 Bulletin 2025/47**

(51) International Patent Classification (IPC):
*H04N 23/60* (2023.01)   *G06T 7/55* (2017.01)
*G06T 7/70* (2017.01)   *H04N 23/63* (2023.01)

(21) Application number: **23916240.7**

(52) Cooperative Patent Classification (CPC):
**G06T 7/55; G06T 7/70; H04N 23/60; H04N 23/63**

(22) Date of filing: **20.12.2023**

(86) International application number:
**PCT/JP2023/045703**

(87) International publication number:
**WO 2024/150626 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 JP 2023001712**

(71) Applicant: **Sony Group Corporation
Tokyo 108-0075 (JP)**

(72) Inventor: **UYAMA Keisuke
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND METHOD**

(57)     The present disclosure relates to an information processing device and method that can suppress a decrease in accuracy of navigation of imaging for 3D modeling.

First orientation information and first three-dimensional shape information are generated on the basis of a first captured image generated by first imaging of imaging a 3D object, second orientation information is calibrated on the basis of the first captured image, the first orientation information, and a second captured image, second imaging to generate second three-dimensional shape information is controlled or guidance information for the second imaging to generate the second three-dimensional shape information is generated, on the basis of the second orientation information reflecting the calibration result and the first three-dimensional shape information, and the output of the guidance information is controlled. The present disclosure is applicable to, for example, an information processing device, an imaging device, an imaging communication device, an electronic device, an information processing method, a program, an information processing system, or the like.

*FIG. 4*

## Description

### TECHNICAL FIELD

The present disclosure relates to an information processing device and method, and more particularly to an information processing device and method that can suppress a decrease in accuracy of navigation of imaging for 3D modeling.

### BACKGROUND ART

As a known method for 3D modeling of a 3D object having a three-dimensional shape, there is a method called photogrammetry that images the 3D object from multiple directions and generates 3D data on the basis of the plurality of captured images (see, for example, Patent Document 1). Furthermore, there is a method called real-time 3D modeling that generates 3D data instantaneously (in real time) on the basis of information such as captured images, orientation information, and depth. Moreover, in recent years, a method collectively called Neural Rendering (for example, neural radiance fields (NeRF) and the like) has been proposed in which Neural Fields are constructed on the basis of the orientations of captured images and the captured images to generate an image or a three-dimensional model from any viewpoint.

### CITATION LIST

### PATENT DOCUMENT

Patent Document 1: Japanese Patent Application Laid-Open No. 2018-63693

### SUMMARY OF THE INVENTION

### PROBLEMS TO BE SOLVED BY THE INVENTION

In a case where imaging navigation (imaging control, imaging guidance, or both) is performed to obtain captured images to be used in 3D modeling as in such methods, there is a possibility that the lower the accuracy of the position and orientation of the imaging unit that performs the imaging, the lower the accuracy of navigation.

The present disclosure has been made in view of such circumstances, and it is therefore an object of the present disclosure to suppress a decrease in accuracy of navigation of imaging for 3D modeling.

### SOLUTIONS TO PROBLEMS

An information processing device of one aspect of the present technology includes: a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object; a calibration unit that calibrates second orientation information indicating a position and orientation of a second imaging unit that performs second imaging on the basis of the first captured image, the first orientation information, and a second captured image generated by the second imaging of imaging the 3D object; and an imaging control unit that reflects a calibration result in the second orientation information and controls the second imaging to generate second three-dimensional shape information representing the three-dimensional shape of the 3D object on the basis of the second orientation information reflecting the calibration result and the first three-dimensional shape information.

An information processing method of one aspect of the present technology includes: generating first orientation information indicating a position and orientation of a first imaging unit that performs first imaging and first three-dimensional shape information representing a three-dimensional shape of a 3D object on the basis of a first captured image generated by the first imaging of imaging the 3D object; calibrating second orientation information indicating a position and orientation of a second imaging unit that performs second imaging on the basis of the first captured image, the first orientation information, and a second captured image generated by the second imaging of imaging the 3D object; and reflecting a calibration result in the second orientation information and controlling the second imaging to generate second three-dimensional shape information representing the three-dimensional shape of the 3D object on the basis of the second orientation information reflecting the calibration result and the first three-dimensional shape information.

An information processing device of another aspect of the present technology includes: a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object; a calibration unit that calibrates second orientation information indicating a position and orientation of a second imaging unit that performs second imaging on the basis of the first captured image, the first orientation information, and a second captured image generated by the second imaging of imaging the 3D object; and a guidance information output control unit that reflects a calibration result in the second orientation information, generates guidance information for the second imaging to generate second three-dimensional shape information representing the three-dimensional shape of the 3D object on the basis of the second orientation information reflecting the calibration result and the first three-dimensional shape information, and controls output of the guidance information.

An information processing method of another aspect of the present technology includes: generating first orientation information indicating a position and orientation of a first imaging unit that performs first imaging and first three-dimensional shape information representing a three-dimensional shape of a 3D object on the basis of a first captured image generated by the first imaging of imaging the 3D object; calibrating second orientation information indicating a position and orientation of a second imaging unit that performs second imaging on the basis of the first captured image, the first orientation information, and a second captured image generated by the second imaging of imaging the 3D object; and reflecting a calibration result in the second orientation information, generating guidance information for the second imaging to generate second three-dimensional shape information representing the three-dimensional shape of the 3D object on the basis of the second orientation information reflecting the calibration result and the first three-dimensional shape information, and controlling output of the guidance information.

In the information processing device and method of one aspect of the present technology, first orientation information indicating a position and orientation of a first imaging unit that performs first imaging and first three-dimensional shape information representing a three-dimensional shape of a 3D object are generated on the basis of a first captured image generated by the first imaging of imaging the 3D object, second orientation information indicating a position and orientation of a second imaging unit that performs second imaging is calibrated on the basis of the first captured image, the first orientation information, and a second captured image generated by the second imaging of imaging the 3D object, a calibration result is reflected in the second orientation information, and the second imaging to generate second three-dimensional shape information representing the three-dimensional shape of the 3D object is controlled on the basis of the second orientation information reflecting the calibration result and the first three-dimensional shape information.

In the information processing device and method of another aspect of the present technology, first orientation information indicating a position and orientation of a first imaging unit that performs first imaging and first three-dimensional shape information representing a three-dimensional shape of a 3D object are generated on the basis of a first captured image generated by the first imaging of imaging the 3D object, second orientation information indicating a position and orientation of a second imaging unit that performs second imaging is calibrated on the basis of the first captured image, the first orientation information, and a second captured image generated by the second imaging of imaging the 3D object, a calibration result is reflected in the second orientation information, guidance information for the second imaging to generate second three-dimensional shape information representing the three-dimensional shape of the 3D object is generated on the basis of the second orientation information reflecting the calibration result and the first three-dimensional shape information, and the output of the guidance information is controlled.

BRIEF DESCRIPTION OF DRAWINGS

Fig. 1 is a diagram for describing an overview of photogrammetry.
Fig. 2 is a diagram for describing an overview of real-time 3D modeling.
Fig. 3 is a diagram comparing photogrammetry and real-time 3D modeling.
Fig. 4 is a diagram illustrating an example of a method for assisting in imaging for 3D modeling.
Fig. 5 is a diagram illustrating an example of how imaging control and imaging guidance are performed.
Fig. 6 is a diagram illustrating an example of overlap.
Fig. 7 is a diagram illustrating an example of how imaging is performed in accordance with a distance from a subject.
Fig. 8 is a diagram illustrating an example of how parallel processing is performed.
Fig. 9 is a diagram illustrating an example of scoring processing.
Fig. 10 is a diagram illustrating an example of scoring processing.
Fig. 11 is a diagram illustrating an example of scoring processing.
Fig. 12 is a diagram illustrating an example of scoring processing.
Fig. 13 is a diagram illustrating an example of scoring processing.
Fig. 14 is a diagram illustrating an example of output of a scoring result.
Fig. 15 is a diagram illustrating an example of output of overlap information.
Fig. 16 is a diagram illustrating a display example of guidance information.
Fig. 17 is a diagram illustrating a display example of guidance information.
Fig. 18 is a diagram illustrating a display example of guidance information.
Fig. 19 is a diagram illustrating a display example of guidance information.
Fig. 20 is a diagram illustrating a display example of guidance information.
Fig. 21 is a diagram illustrating a display example of guidance information.
Fig. 22 is a diagram illustrating a display example of guidance information.
Fig. 23 is a diagram illustrating a display example of guidance information.

Fig. 24 is a diagram illustrating a display example of guidance information.

Fig. 25 is a diagram illustrating a display example of guidance information.

Fig. 26 is a diagram illustrating an example of device calibration.

Fig. 27 is a diagram illustrating an example of calibration processing.

Fig. 28 is a diagram for describing imaging timing calibration processing.

Fig. 29 is a diagram for describing imaging timing calibration processing.

Fig. 30 is a diagram for describing imaging timing calibration processing.

Fig. 31 is a diagram for describing installation guidance processing.

Fig. 32 is a diagram for describing orientation information calibration processing.

Fig. 33 is a diagram illustrating an example of orientation information calibration processing.

Fig. 34 is a diagram for describing orientation information calibration processing.

Fig. 35 is a diagram for describing orientation information calibration processing.

Fig. 36 is a diagram for describing orientation information calibration processing.

Fig. 37 is a diagram for describing imaging timing calibration processing.

Fig. 38 is a diagram illustrating an example of calibration processing.

Fig. 39 is a block diagram illustrating a main configuration example of an imaging device.

Fig. 40 is a flowchart for describing an example of a flow of 3D modeling processing.

Fig. 41 is a flowchart for describing an example of a flow of real-time 3D modeling processing.

Fig. 42 is a flowchart for describing an example of a flow of photogrammetry processing.

Fig. 43 is a block diagram illustrating a main configuration example of an information processing system.

Fig. 44 is a block diagram illustrating a main configuration example of an imaging communication device.

Fig. 45 is a block diagram illustrating a main configuration example of an imaging device.

Fig. 46 is a block diagram illustrating a main configuration example of a server.

Fig. 47 is a flowchart for describing an example of a flow of 3D modeling processing.

Fig. 48 is a flowchart for describing an example of a flow of 3D modeling processing, following the flowchart in Fig. 47.

Fig. 49 is a block diagram illustrating a main configuration example of an imaging communication device.

Fig. 50 is a block diagram illustrating a main configuration example of a server.

Fig. 51 is a flowchart for describing an example of a flow of 3D modeling processing.

Fig. 52 is a flowchart for describing an example of a flow of 3D modeling processing, following the flowchart in Fig. 51.

Fig. 53 is a block diagram illustrating a main configuration example of an imaging communication device.

Fig. 54 is a block diagram illustrating a main configuration example of a calibration unit.

Fig. 55 is a flowchart for describing an example of a flow of 3D modeling processing.

Fig. 56 is a flowchart for describing an example of a flow of imaging timing calibration processing.

Fig. 57 is a flowchart for describing an example of a flow of installation guidance processing.

Fig. 58 is a flowchart describing an example of a flow of orientation information calibration processing.

Fig. 59 is a block diagram illustrating a main configuration example of a calibration unit.

Fig. 60 is a flowchart for describing an example of a flow of 3D modeling processing.

Fig. 61 is a flowchart describing an example of a flow of orientation information calibration processing.

Fig. 62 is a flowchart for describing an example of a flow of imaging timing calibration processing.

Fig. 63 is a block diagram illustrating a main configuration example of a computer.

## MODE FOR CARRYING OUT THE INVENTION

Hereinafter, modes for carrying out the present disclosure (hereinafter referred to as embodiments) will be described. Note that the description will be given in the following order.

    1. 3D modeling
    2. Imaging control
    3. Imaging guidance output
    4. Combination
    5. Calibration processing
    6. First embodiment (imaging device)
    7. Second embodiment (information processing system)
    8. Third embodiment (information processing system)
    9. Appendix

<1. 3D modeling>

<Photogrammetry>

As a known method for generating (reconstructing) a three-dimensional shape model of an object having a three-dimensional shape (also referred to herein as a 3D object), there is a method called photogrammetry that images the 3D object from multiple directions and generates 3D data on the basis of the plurality of captured images. Note that generating a three-dimensional shape model of a 3D object is also referred to herein as 3D modeling.

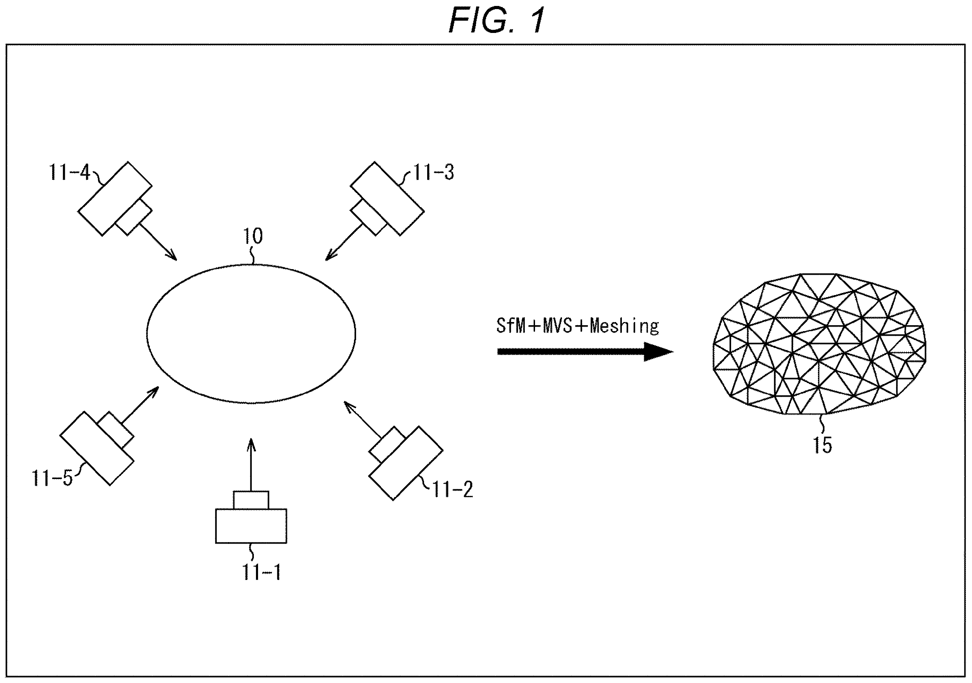

Photogrammetry is a method for reconstructing a highly accurate three-dimensional model from a plurality of images captured from various viewpoints using the principle of triangulation. Note that the "accuracy" of the 3D data (3D model) may herein include not only reproducibility (accuracy, resolution, or the like) of the three-dimensional shape of the target 3D object but also reproducibility (accuracy, resolution, or the like) of the texture applied to the surface of the 3D model. For example, cameras such as cameras 11-1 to 11-5 illustrated in Fig. 1 image a 3D object 10 from a plurality of viewpoints to obtain a plurality of captured images. Then, processing called structure from motion (SfM) and processing called multi view stereo (MVS) are performed using these captured images and the like, and meshing and texturing are further performed as post-processing to generate 3D data 15.

In SfM, for example, a corresponding point is searched for between the captured images, the position and orientation of each camera are derived using epipolar constraint, and the position of each corresponding point in the three-dimensional space is determined by triangulation based on the position and orientation of the camera. This point on the three-dimensional space is also referred to herein as a three-dimensional point. That is, the three-dimensional point for each corresponding point is determined. Then, the three-dimensional point cloud determined as described above is entirely optimized using bundle adjustment.

In MVS, for example, denser corresponding points are searched for using the three-dimensional point cloud derived as described above, and resultant three-dimensional points are added.

As described above, in photogrammetry, global optimization calculation, that is, bundle adjustment, is performed to minimize an error, so that a highly accurate result can be obtained, but the computation load is high. Furthermore, photogrammetry is based on geometric calculation rather than physical measurement, so that, in principle, the higher the resolution of the image being used, the more accurate the model being restored.

<Real-time 3D modeling>

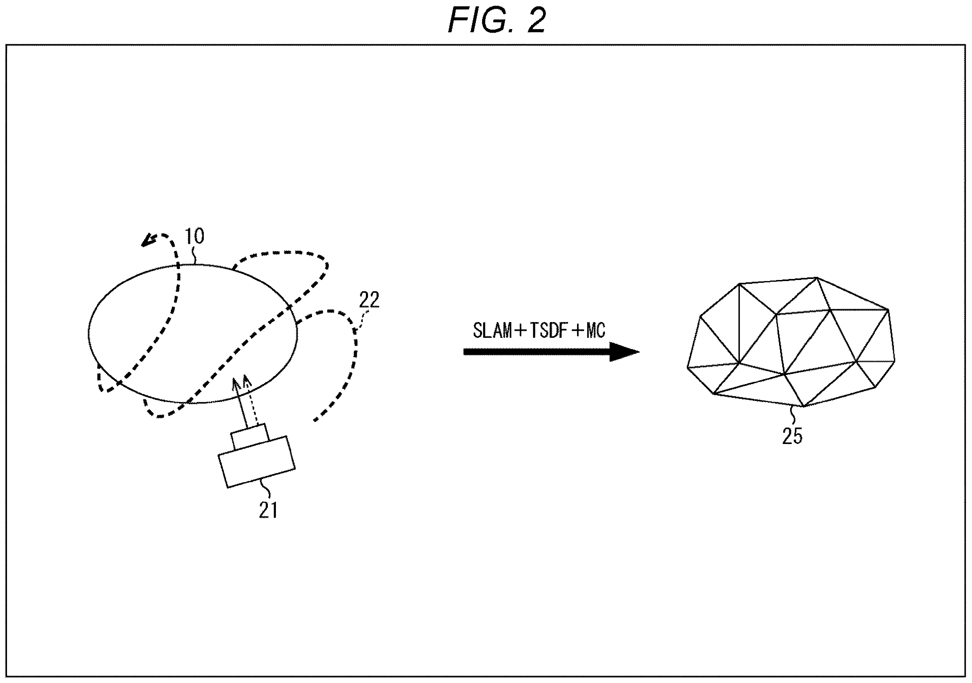

As a 3D modeling method different from such photogrammetry, there is a method called real-time 3D modeling that generates 3D data instantaneously (in real time) on the basis of information such as captured images, orientation information, and depth. In this method, for example, as illustrated in Fig. 2, the 3D object 10 is imaged while a camera 21 is moved around the 3D object 10 as indicated by a dotted line 22. The camera 21 includes not only an image sensor but also a light detection and ranging (Lidar) scanner (direct Time of Flight (dToF) module), and obtains a captured image and detects a depth (distance to the subject).

In recent years, with the development of science and technology, miniaturization and functionality enhancement of the dToF module have progressed, and a relatively long-distance depth (for example, about 5 m) can also be accurately measured regardless of whether it is indoors or outdoors. This makes it easy to experience real-time modeling and capturing at the consumer level.

Moreover, the camera 21 further includes an inertial sensor, and detects acceleration and angular velocity of (also referred to herein as inertial information regarding) the camera 21.

In the real-time 3D modeling, processing called simultaneous localization and mapping (SLAM) is performed to generate orientation information indicating the position and orientation of the camera 21. Furthermore, a truncated signed distance function (TSDF) is updated using the orientation information and the depth, and 3D data 25 (mesh and texture) is generated by processing called marching cubes (MC).

In SLAM, for example, the position and orientation of the camera are estimated on the basis of the captured image and the inertial information (self-localization). In updating the TSDF, the correspondence between the depth and voxels are established, and the volume is detected. In MC, the calculation of isosurfaces is performed using adjacent voxels. With SLAM real-time orientation information, it is possible to detect the volume of voxels (not via the point cloud) by superimposing a plurality of frames of depth (how far the light beam has reached). Voxel representation allows for estimation of a viewpoint (missing viewpoint) that is overshadowed and needs to be captured. This makes it possible to detect a perforated structure or a protruding structure of the 3D object.

<Neural Rendering>

Moreover, in recent years, a method collectively called Neural Rendering (for example, neural radiance fields (NeRF) and the like) has been proposed in which Neural Fields are constructed on the basis of the orientations of captured images and the captured images to generate an image or a three-dimensional model from any viewpoint.

<Comparative example>

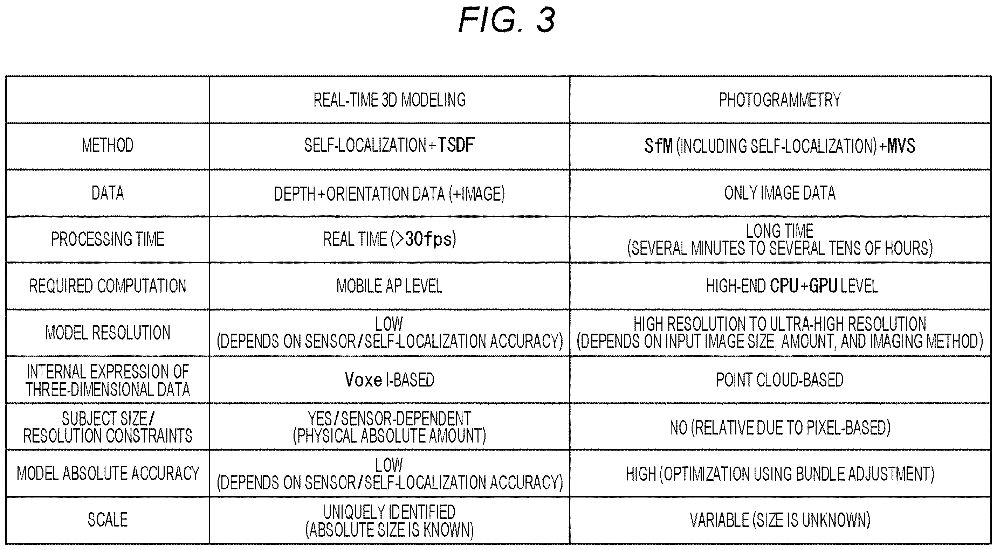

Each 3D modeling method as described above has different characteristics, and no single method excels in all aspects. Fig. 3 shows the results of comparing the characteristics of photogrammetry and real-time 3D modeling. As shown in Fig. 3, when comparing the methods, photogrammetry uses SfM (including self-localization) and MVS, whereas real-time 3D modeling uses self-localization (SLAM) and TSDF. Furthermore, when comparing the data to be used, photogrammetry uses only image data, whereas real-time 3D modeling uses depth and orientation data in addition to image data. Furthermore, when comparing the processing times, photogrammetry requires a longer time ranging from several minutes to several tens of hours, whereas real-time 3D modeling allows near-instantaneous (real-time) processing such as 30 fps (frame/sec).

Furthermore, when comparing the required computational power, photogrammetry requires high-end central processing unit (CPU) and graphics processing unit (GPU) level computational power, and real-time 3D modeling requires mobile application processor (AP) level computational power. Furthermore, when comparing the resolutions of the models to be generated, photogrammetry, although depending on the factors such as the resolution, number, and capturing method of captured images, results in relatively high resolution, and real-time 3D modeling, although depending on factors such as the depth and the accuracy of self-localization, results in relatively low resolution.

Furthermore, regarding the internal representation of three-dimensional data to be generated, photogrammetry is point cloud-based, whereas real-time 3D modeling is voxel-based. Furthermore, photogrammetry has no subject size and resolution constraints, whereas real-time 3D modeling depends on the sensor. Furthermore, when comparing the absolute accuracy of the models, photogrammetry results in relatively high absolute accuracy due to the optimization using bundle adjustment, and real-time 3D modeling, although depending on factors such as the sensor and the accuracy of self-localization, results in relatively low absolute accuracy. Furthermore, when comparing the scales, the scale is variable (size is unknown) for photogrammetry, whereas the scale is uniquely identified (absolute size is known) for real-time 3D modeling.

There are such differences in characteristics between photogrammetry and real-time 3D modeling, for example. That is, it is possible to reduce a workload and processing volume of 3D modeling in a case where real-time 3D modeling is applied as compared with a case where photogrammetry or Neural Rendering is applied. It is, however, possible to generate highly accurate 3D data in a case where photogrammetry or Neural Rendering is applied as compared with a case where real-time 3D modeling is applied.

<Facilitation of 3D modeling>

For example, in order to obtain more accurate 3D data, photogrammetry or Neural Rendering may be applied as described above. However, in this case as well, it is desirable that the workload and processing volume of 3D modeling be smaller. In order to reduce the workload and processing volume of 3D modeling, it is required that 3D data be generated with as highest possible accuracy while minimizing the imaging frequency.

For example, in a case where captured images necessary for 3D modeling cannot be obtained, there is a possibility that the accuracy of 3D data decreases. Conversely, if an attempt is made to obtain an excessive number of captured images to avoid a shortage, there is a possibility that the imaging frequency increases unnecessarily, and the user's workload increases accordingly. Furthermore, in that case, since 3D modeling processing is performed using unnecessary captured images, there is a possibility that the processing volume increases unnecessarily.

That is, in order to obtain more accurate 3D data with less workload and processing volume, it is required that the 3D object be imaged in a more appropriate position and orientation. However, in each of the known 3D modeling methods, it is difficult for the photographer to identify the appropriate position and orientation for imaging.

For example, photogrammetry requires a significant amount of time for 3D modeling processing, so that it is difficult for the photographer to instantaneously review a 3D modeling result during imaging. It is therefore difficult for the photographer to identify, during imaging, the appropriate position and orientation for imaging. As a result, for example, there is a possibility that the number of images captured in the appropriate position and orientation is not sufficient, and the accuracy of 3D data obtained by photogrammetry decreases. Furthermore, when imaging is performed excessively and haphazardly in any position and orientation to avoid a shortage of images captured in the appropriate position and orientation, there is a possibility that not only the user's workload increases, but also the number of captured images increases unnecessarily, and the load (processing volume, processing time, and the like) of the 3D modeling processing increases unnecessarily.

<2. Imaging control>

<Imaging control based on scoring result>

Therefore, 3D modeling is performed twice, and imaging for the second 3D modeling is controlled using the result of the first 3D modeling.

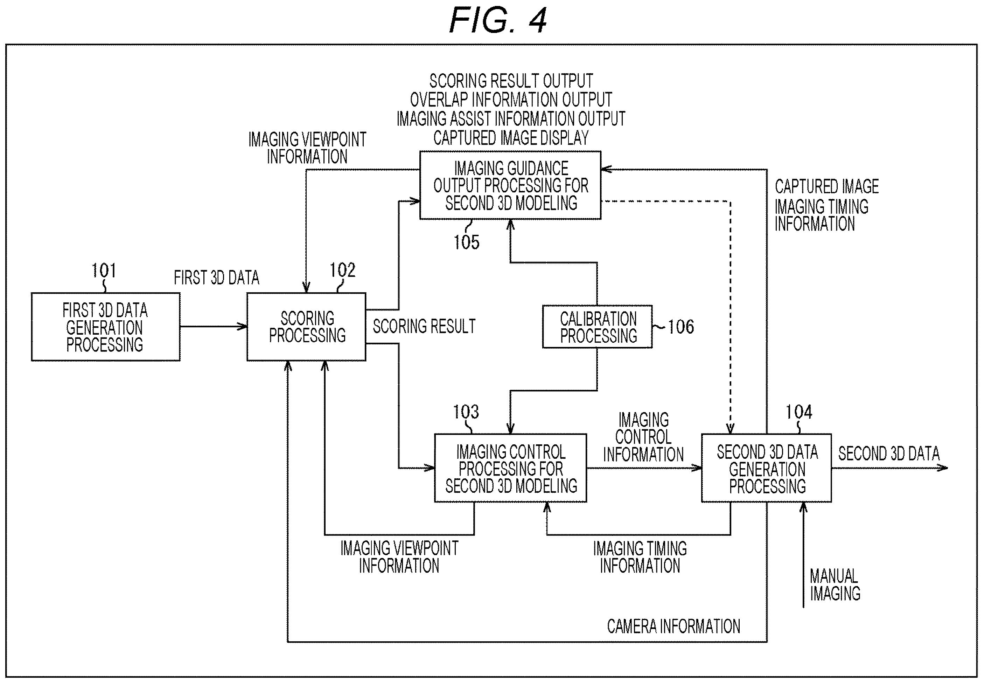

For example, it is assumed that second imaging for imaging a 3D object having a three-dimensional shape and second 3D modeling processing of generating second 3D data (second three-dimensional shape information) representing the three-dimensional shape of the 3D object using a second captured image obtained by the second imaging are performed (second 3D data generation processing 104 in Fig. 4). At that time, the second imaging for the second 3D modeling processing is controlled so that the second imaging is performed in a more appropriate position and orientation (imaging control processing for second 3D modeling 103 in Fig. 4). In order to achieve such control, first 3D data generation processing 101 and scoring processing 102 in Fig. 4 are performed.

The first 3D data generation processing 101 is processing of generating first 3D data (first three-dimensional shape information) representing the three-dimensional shape of the 3D object. That is, in the first 3D data generation processing 101, first imaging of imaging the 3D object and first 3D modeling processing of generating the first 3D data using the first captured image obtained by the first imaging are performed.

The scoring processing 102 is processing of evaluating (scoring) the accuracy of the second 3D data that can be generated using the second captured image generated by the second imaging performed so far. This scoring is performed on the basis of the first 3D data generated by the first 3D modeling processing. In the imaging control processing for second 3D modeling 103, the second imaging is controlled on the basis of the scoring result.

That is, on the basis of the first 3D data generated on the basis of the first captured image obtained by the first imaging, the accuracy of the second 3D data that can be generated on the basis of the second captured image obtained by the second imaging up to this point is evaluated (scoring is performed). By doing so, it is possible to generate the scoring result more easily. Furthermore, the second imaging is controlled on the basis of the scoring result. By doing so, it is possible to control the second imaging so that the second imaging is performed in a more appropriate position and orientation. That is, it is possible to perform the second 3D modeling processing using the second captured image captured in a more appropriate position and orientation. It is therefore possible to generate more accurate 3D data while suppressing an increase in load (workload and processing volume) of the 3D modeling. That is, it is possible to perform the 3D modeling more easily.

Note that the captured image refers herein to any image captured by an image sensor or the like unless otherwise specified. For example, with the use of an imaging device or the like, the following images are typically obtained. For example, a still image is captured by the image sensor or the like at the timing when a shutter button or the like is operated, and is stored in a storage medium or the like as an imaging result. Furthermore, the capturing of a moving image by the image sensor or the like starts at the timing when the shutter button or the like is operated, and the moving image is stored in the storage medium or the like as an imaging result. Furthermore, an image (also referred to as an acquired image in some cases) is captured by the image sensor or the like before the shutter button or the like is operated, is not stored in the storage medium as an imaging result, and is used for display on a monitor or the like. Herein, the captured image includes these images. That is, the captured image may be a still image or a moving image. Furthermore, the captured image may or may not be stored in the storage medium or the like as an imaging result. Furthermore, the captured image may or may not be displayed on the monitor or the like. Furthermore, the captured image may be captured before the shutter button or the like is operated, may be captured at the timing when the shutter button or the like is operated, or may be captured after the shutter button or the like is operated. Furthermore, the captured image may be data itself (so-called RAW data) captured by the image sensor or the like. Furthermore, the captured image may be an image subjected to color separation processing or color conversion processing. Furthermore, the captured image may be an image subjected to signal processing such as defect correction, noise reduction, automatic white balance (AWB), or gamma correction. Moreover, other image processing may be performed.

<First imaging>

Herein, an imaging unit (image sensor) that performs the first imaging is also referred to as a first imaging unit. Furthermore, an imaging unit (image sensor) that performs the second imaging is also referred to as a second imaging unit.

As described above, the first imaging is performed in the first 3D data generation processing 101. That is, the first captured image is generated by the first imaging unit. At that time, the distance (depth) from the first imaging unit to the subject (3D object) appearing in the first captured image may be detected by a depth sensor. The depth detection method using the depth sensor may be any method. Furthermore, the depth sensor may be a sensor integrated with the first imaging unit, or may be a sensor that is different from the first imaging unit and is installed at a different position from the first imaging unit. Note that, in the following description, unless otherwise specified, it is assumed that this depth is appropriately calibrated for the first captured image. Furthermore, when the first imaging is performed, inertial information regarding (angular velocity and acceleration of) the first imaging unit may be detected by an inertial information sensor. The method for detecting the inertial information using the inertial information sensor may be any method. Furthermore, the inertial information sensor may be a sensor integrated with the first imaging unit, or may be a sensor that is different from the first imaging unit and is installed at a different position from the first imaging unit.

The generated first captured image is used in the first 3D data generation processing. Furthermore, in a case where the depth and the inertial information are generated, they are also used in the first 3D data generation processing.

Note that the number of first imaging units (image sensors), depth sensors, and inertial information sensors may each be any number, whether singular or plural. That is, the number of first imaging units, depth sensors, and inertial information sensors may all be the same, or two of them may be the same or different from each other.

<First 3D modeling processing>

As described above, the first 3D modeling processing is performed in the first 3D data generation processing 101. In the first 3D modeling processing, the first 3D data (first three-dimensional shape information) representing the three-dimensional shape of the 3D object is generated on the basis of the first captured image generated by the first imaging of imaging the 3D object.

This first 3D data may have less information volume and be of less accuracy than the second 3D data (second three-dimensional shape information) generated by the second 3D data generation processing 104.

By doing so, it is possible to suppress an increase in the load of the scoring processing 102 and the imaging control processing for second 3D modeling 103. That is, by further simplifying (reducing the information volume and accuracy of) the first 3D data, it is possible to suppress an increase in the load of scoring and imaging control performed using the first 3D data. Furthermore, in general, it is also possible to suppress an increase in the load of the first 3D data generation (first 3D modeling processing). That is, it is possible to control the second imaging with a lower load.

Furthermore, the method of the first 3D modeling processing may be any method. For example, in the first 3D modeling processing, orientation information corresponding to the angle of view of the first captured image may be derived, and the first 3D data may be generated on the basis of the orientation information, the first captured image, and the depth of the subject (3D object) in the first captured image. For example, the first 3D data may be generated by updating TSDF and performing MC on the basis of these pieces of information.

Note that this orientation information is information indicating the position and orientation of the first imaging unit in the three-dimensional space. The method for deriving the orientation information may be any method. For example, the orientation information may be derived on the basis of the inertial information regarding (acceleration and angular velocity of) the first imaging unit. For example, SLAM may be applied.

That is, the real-time 3D modeling described above may be applied as the first 3D modeling processing. By doing so, it is possible to perform the first 3D modeling processing instantaneously (in real time), and obtain the first 3D data instantaneously (in real time). Therefore, the imaging control processing for second 3D modeling can be performed instantaneously (in real time). That is, it is possible to perform the 3D modeling more easily. Note that the orientation information regarding the first imaging unit and the first 3D data may be generated using a neural network that takes the first captured image, the inertial information regarding the first imaging unit, and the depth as inputs.

Furthermore, the first 3D data may be any data as long as the first 3D data represents the three-dimensional shape of the 3D object; specifically, the first 3D data may be a point cloud, or may include a mesh representing the three-dimensional shape of the 3D object through vertexes and connections and a texture applied to the surface of the mesh. This first 3D data is supplied to the scoring processing 102.

<Scoring processing>

In the scoring processing 102, as described above, the accuracy of the second 3D data that can be generated using the second captured image generated by the second imaging performed so far is evaluated. This scoring is performed on the basis of the first 3D data generated by the first 3D modeling processing and the position and orientation of the second imaging performed so far. That is, the first 3D data is regarded as the 3D object to be modeled in the second 3D modeling processing, and the score is calculated for each local portion of the first 3D data. For example, in a case where the first 3D data includes a mesh representing the three-dimensional shape of the 3D object through vertexes and connections and a texture applied to the surface of the mesh, a scoring result is generated for each polygon of the mesh. That is, a portion of the first 3D data from which more accurate second 3D data is obtained is evaluated higher (set to a higher score).

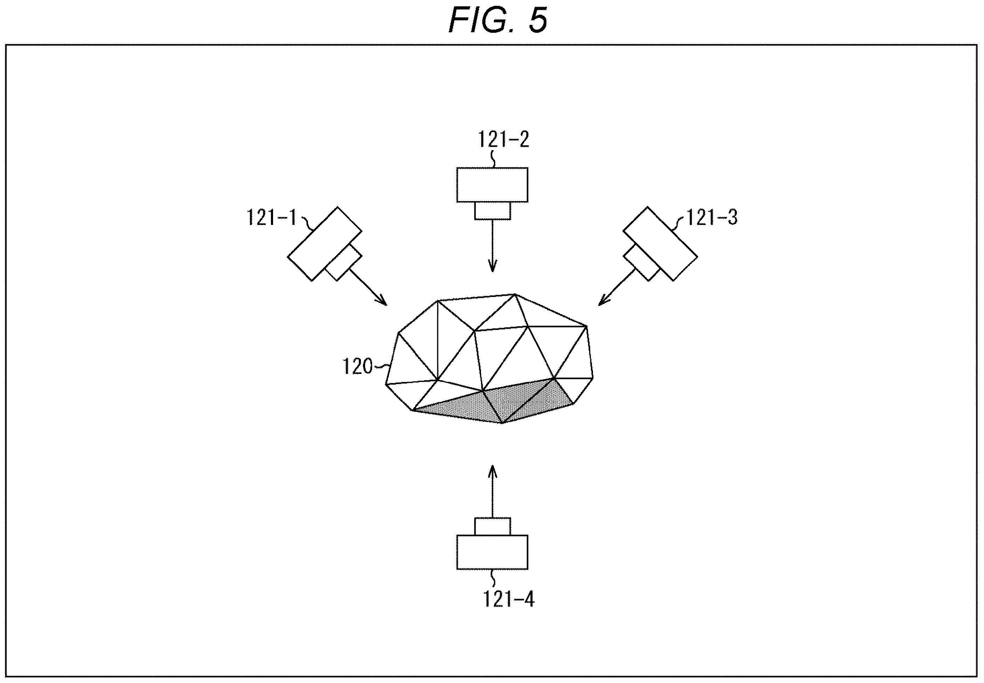

For example, it is assumed that first 3D data 120 illustrated in Fig. 5 is generated by the first 3D data generation processing 101 in Fig. 4. Then, it is assumed that the second imaging has been performed on the 3D object corresponding to the first 3D data 120 in the positions and orientations of the camera 121-1 to the camera 121-3. In that case, in the scoring processing 102, the upper side of the first 3D data 120 in the drawing is evaluated with a relatively high score, and the lower side (gray portion) of the first 3D data 120 in the drawing is evaluated with a relatively low score. An example of the scoring method will be described later.

Note that, in Fig. 5, for convenience of description, only two score types: the high score and the low score, are illustrated as scoring results, but the number of score types (the number of clusters) may be any number. For example, the score may be classified into three levels (for example, low score, medium score, high score), may be classified into 10 levels (for example, 0 to 9 points), may be classified into 100 levels (for example, 0 to 99 points), or may be classified into other levels.

The scoring result generated by the scoring processing 102 is supplied to the imaging control processing for second 3D modeling 103.

<Imaging control processing for second 3D modeling>

In the imaging control processing for second 3D modeling 103, the second imaging is controlled on the basis of the position and orientation of the second imaging unit and the scoring result obtained by the scoring processing 102. For example, the control is performed so that the second imaging is performed in a position and orientation that leads to a better scoring result.

For example, it is assumed that the scoring result as illustrated in Fig. 5 is obtained by the scoring processing 102. This scoring result clearly shows that imaging of the lower side (for example, the gray portion) of the 3D object in the drawing corresponding to the first 3D data 120 is insufficient.

Therefore, in the imaging control processing for second 3D modeling 103, the second imaging is controlled to image the gray portion where the imaging is insufficient from the lower side of the 3D object in the drawing. For example, the position and orientation of the camera 121-4 are determined to be more appropriate as the position and orientation in which the second imaging is performed, and the second imaging is controlled so that the imaging is performed in the position and orientation of the camera 121-4.

By doing so, it is possible to generate the second captured image captured in the more appropriate position and orientation. In other words, it is possible to perform the second 3D modeling processing using the second captured image captured in the more appropriate position and orientation. It is therefore possible to generate more accurate 3D data while suppressing an increase in load (workload and processing volume) of the 3D modeling. That is, it is possible to perform the 3D modeling more easily.

The method for obtaining the position and orientation in which the second imaging is to be performed may be any method. For example, in the imaging control processing for second 3D modeling 103, (the range of) the position and orientation that allow an increase in the score of the portion (gray portion) where the second imaging is insufficient may be determined on the basis of the scoring result. Furthermore, the current orientation information regarding (the position and orientation of) the second imaging unit may be provided to the scoring processing 102 as imaging viewpoint information, a scoring result in a case where the second captured image obtained in the current position and orientation is added temporarily may be acquired, and in a case where the score is higher than a score before the addition of the second captured image by more than a predetermined threshold, the current position and orientation may be determined to be the position and orientation in which the second imaging is to be performed.

Note that, if the position and orientation relationship between the first imaging unit and the second imaging unit is known, the orientation information regarding the first imaging unit may be provided to the scoring processing 102 as the imaging viewpoint information instead of the orientation information regarding the second imaging unit. In that case, in the scoring processing 102, the orientation information regarding the second imaging unit may be derived using the orientation information regarding the first imaging unit, and the scoring result may be generated using the orientation information regarding the second imaging unit. Furthermore, the scoring result may be generated using a neural network that takes the orientation information regarding the first imaging unit as an input parameter.

Furthermore, in the imaging control processing for second 3D modeling 103, whether or not the position and orientation are the position and orientation in which the second imaging is to be performed may be determined on the basis of an overlap rate with the imaging range of the second imaging performed so far. The overlap rate indicates a degree (proportion) of a region (overlap region) where imaging ranges overlap. That is, whether or not the position and orientation of the second imaging are a more appropriate position and orientation may be determined on the basis of how much the imaging range of the second imaging to be performed overlaps the region captured in the second captured images obtained so far.

For example, in a case where a method, like photogrammetry, in which 3D modeling is performed on the basis of the corresponding point between a plurality of second captured images is applied as the second 3D modeling processing, the imaging ranges of the plurality of second captured images need to at least partially overlap (overlap region exists) in order to obtain the corresponding point. Therefore, with respect to the second captured images obtained so far, the position and orientation in which the second captured image with an overlap rate that makes the second 3D modeling processing easier (allows more accurate 3D modeling processing to be performed) can be obtained may be determined to be a more appropriate position and orientation (position and orientation in which the second imaging is to be performed).

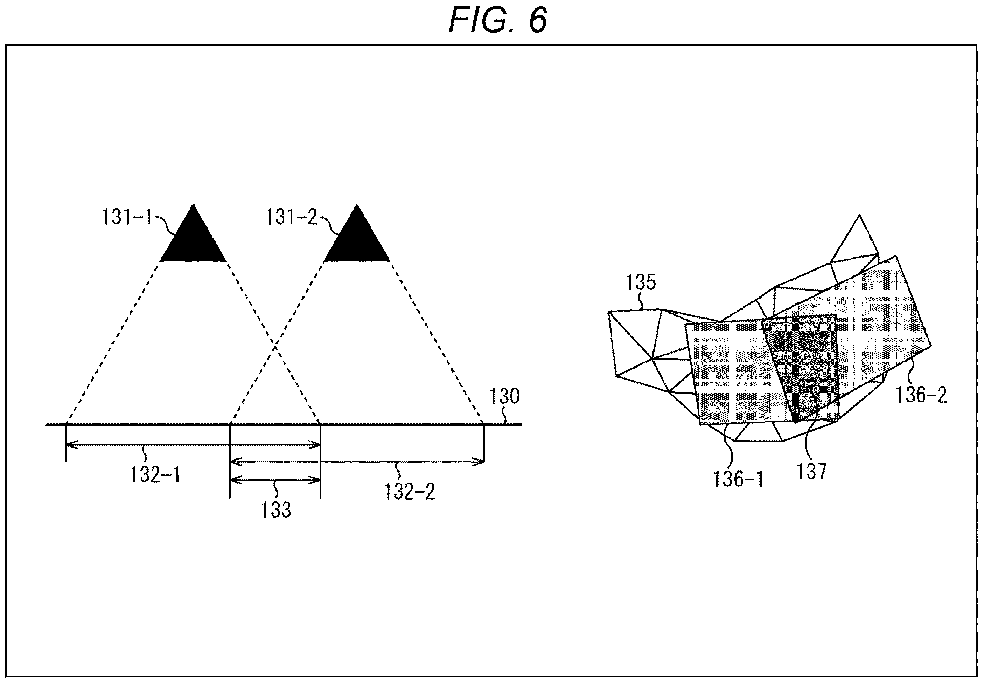

Note that what the overlap rate that makes the second 3D modeling processing easier (allows more accurate 3D modeling processing) is also depends on the three-dimensional shape of the 3D object, or the like. For example, in a case of imaging using a so-called drone, the subject can be regarded as a plane 130 as illustrated on the left side of Fig. 6. For example, an imaging range in a case where the plane 130 is imaged from a camera 131-1 is indicated by a double-headed arrow 132-1. For example, an imaging range in a case where the plane 130 is imaged from a camera 131-2 is indicated by a double-headed arrow 132-2. Therefore, an overlap region between these captured images is a range indicated by a double-headed arrow 133. In such a case, the captured images overlap in a simple manner, so that more accurate 3D modeling processing can be performed as long as an overlap rate greater than or equal to a predetermined rate can be obtained.

However, in a case of the second imaging, the subject is a 3D object (first 3D data 135) and the subject is fully imaged, so that the images overlap in a stereoscopic manner as in a second captured image 136-1 and a second captured image 136-2 of the right example in Fig. 6. Therefore, what level of the overlap rate is required for sufficiently accurate 3D modeling processing depends on the three-dimensional shape of the 3D object, or the like. Therefore, in a case where the overlap rate with respect to the second captured images obtained so far is taken into consideration when the position and orientation in which the second imaging is to be performed are obtained, it is desirable that the three-dimensional shape (first 3D data) of the 3D object or the like be also taken into consideration (the position and orientation in which the second imaging is to be performed can be obtained more accurately).

Furthermore, when obtaining the position and orientation in which the second imaging is to be performed, the distance from the imaging position to the subject (3D object) may be controlled. That is, not only which portion of the 3D object is imaged from which angle, but also the distance from which the portion is imaged may be controlled.

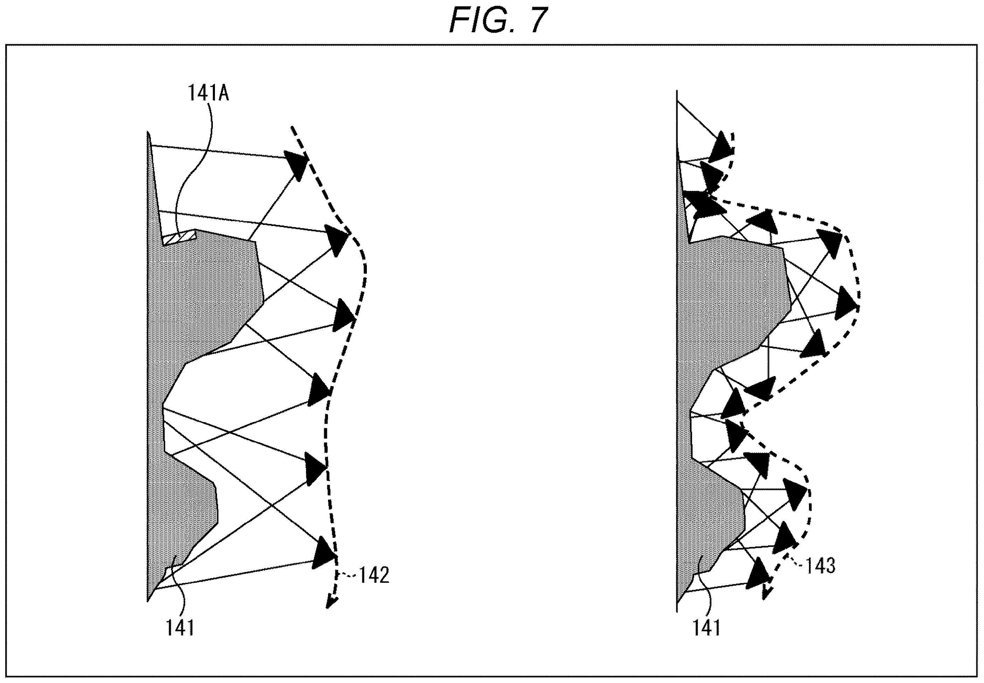

As in the example illustrated on the left side of Fig. 7, when imaging is performed in a position far away from a 3D object 141 (position indicated by black triangles in the drawing) as indicated by a dotted line 142, the 3D object 141 can be fully imaged with a low imaging frequency. However, there may be a case where a portion (for example, a hatched portion 141A and the like) having a complicated three-dimensional shape of the 3D object 141 cannot be imaged. Therefore, there is a possibility that the accuracy of the second 3D modeling processing (accuracy of the second 3D data) decreases.

On the other hand, as in the example illustrated on the right side of Fig. 7, when imaging is performed in a position close to the 3D object 141 (position indicated by black triangles in the drawing) as indicated by a dotted line 143, the imaging frequency required to image the entire 3D object 141 increases as compared with the example on the left side of Fig. 7. However, the portion of the 3D object 141 having a complicated three-dimensional shape (for example, the hatched portion 141A and the like) can be imaged as compared with the left example of Fig. 7. That is, it is possible to image the entire 3D object 141 more reliably than the left example of Fig. 7. It is therefore possible to suppress a decrease in the accuracy of the second 3D modeling processing (accuracy of the second 3D data).

That is, the appropriate distance from the 3D object as the position of the second imaging depends on the three-dimensional shape of the 3D object. Therefore, in the imaging control processing for second 3D modeling 103, the distance from the position of the second imaging to the 3D object (subject) may be controlled in accordance with (the complexity of) the three-dimensional shape of the 3D object. By doing so, as described above, it is possible to suppress an unnecessary increase in the frequency of the second imaging while suppressing a decrease in the accuracy of the second 3D modeling processing (accuracy of the second 3D data). That is, it is possible to perform control so that the second imaging is performed in a more appropriate position and orientation.

Note that the method for deriving the complexity of the three-dimensional shape of the 3D object may be any method. For example, this complexity may be derived on the basis of the first 3D data. However, in that case, for example, the first 3D data may be processed as a two-dimensional image, and the complexity of the three-dimensional shape of the 3D object may be derived from the pattern or the like. By doing so, it is possible to suppress an increase in processing load related to the derivation of the complexity of the three-dimensional shape of the 3D object.

Furthermore, a detection frame may be provided, and the complexity of the three-dimensional shape of the 3D object within the detection frame may be derived. The detection frame may have any shape or any size. For example, how many polygons of the first 3D data face the imaging surface of the second imaging within the detection frame is obtained, the degree of variation in the direction of the normal line to each polygon within the detection frame is quantified, and the complexity of the three-dimensional shape of the 3D object within the detection frame may be derived on the basis of the degree of variation. In general, the larger the variation, the more complicated the shape, and in a case of facing the same direction, the shape can be regarded as being close to a planar shape. Furthermore, the average of the direction of the normal line to each polygon within the detection frame may be used as a representative value of the degree of alignment with the imaging surface, and the complexity of the three-dimensional shape of the 3D object may be derived on the basis of the representative value.

Furthermore, in the Marching Cubes method, in a case where there are many vertex arrangements that easily form a plane within the detection frame, it may be determined that the complexity of the three-dimensional shape of the 3D object is low.

That is, the complexity of the three-dimensional shape of the 3D object may be (a value based on) any parameter as long as it is a quantitative value serving as a criterion for estimating the necessary direction, frequency, and distance of imaging from the outline of the subject in a certain region. Furthermore, the method for controlling the distance of the second imaging from the 3D object based on the complexity of the three-dimensional shape of the 3D object may be any method. For example, as the three-dimensional shape of the 3D object is more complicated, the control may be performed so that the second imaging is performed in a position close to the 3D object. For example, as the three-dimensional shape of the 3D object is simpler, the control may be performed so that the second imaging is performed in a position far from the 3D object.

In the imaging control processing for second 3D modeling 103, as described above, the position and orientation (more appropriate position and orientation) in which the second imaging is to be performed are obtained, and control information (imaging control information) on the basis of which the control is performed so that the second imaging is performed in the position and orientation is generated. Then, the imaging control information is supplied to the second 3D data generation processing 104. For example, when the user or the like moves the second imaging unit and the position and orientation of the second imaging unit match the obtained "position and orientation in which the second imaging is to be performed", the imaging control information instructing the second imaging may be generated and supplied to the second 3D data generation processing 104 (that is, the second imaging is performed in the "position and orientation in which the second imaging is to be performed").

<Second imaging>

In the second 3D data generation processing 104, the second imaging unit performs the second imaging in accordance with the control of the imaging control processing for second 3D modeling 103 to generate the second captured image. For example, the second imaging unit may perform the second imaging on the basis of the imaging control information generated in the imaging control processing for second 3D modeling 103. For example, the second imaging unit may perform the second imaging in a case where imaging is instructed by the imaging control information (at the timing when imaging is instructed). Furthermore, the control unit that controls the position and orientation of the second imaging unit may move the second imaging unit to the position designated by the imaging control information and set the second imaging unit to the orientation designated by the imaging control information, and the second imaging unit may perform the second imaging in the position and orientation.

The number of second imaging units may be any number, whether singular or plural. Furthermore, the first imaging unit and the second imaging unit may be a common imaging unit (the same imaging unit), or may be different imaging units installed in different positions.

The specification (for example, the number of pixels) of the second imaging unit may be the same as or different from the specification of the first imaging unit. For example, the second captured image may have a higher image quality than the first captured image. Furthermore, the second captured image may have a higher resolution than the first captured image. Furthermore, the second captured image may have a higher dynamic range than the first captured image.

<Second 3D modeling processing>

Furthermore, the method of the second 3D modeling processing performed in the second 3D data generation processing 104 may be any method. For example, the method of the second 3D modeling processing may be the same as or different from that of the first 3D modeling processing.

For example, the above-described photogrammetry may be applied as the second 3D modeling processing. That is, in the second 3D modeling processing, SfM and MVS may be applied, and a point cloud may be generated from a plurality of second captured images. Moreover, meshing and texturing may be performed on the point cloud as post-processing to generate the second 3D data. That is, the second 3D data may be any data as long as the second 3D data represents the three-dimensional shape of the 3D object; specifically, the first 3D data may be a point cloud, or may include a mesh representing the three-dimensional shape of the 3D object through vertexes and connections and a texture applied to the surface of the mesh. Furthermore, the above-described Neural Rendering may be applied as the second 3D modeling processing.

For example, in addition to the second captured image, the second 3D data may be generated using the orientation information (orientation information corresponding to the angle of view of the second captured images obtained so far) regarding the second imaging unit that performs the second imaging. This orientation information is information indicating the position and orientation of the second imaging unit in the three-dimensional space.

Furthermore, if the position and orientation relationship between the first imaging unit that perform the first imaging and the second imaging unit is known, the second 3D data may be generated using the orientation information regarding (position and orientation in the three-dimensional space of) the first imaging unit. That is, the second 3D data may be generated using the orientation information derived in the first 3D modeling processing. For example, the orientation information regarding the second imaging unit may be derived using the orientation information regarding the first imaging unit, and the second 3D data may be generated using the orientation information regarding the second imaging unit. Furthermore, the second 3D data may be generated using a neural network that takes the orientation information regarding the first imaging unit and the second captured image as inputs.

Moreover, the second 3D data may be encoded. This encoding method may be any method.

<Manual imaging>

Furthermore, as illustrated in Fig. 4, in the second 3D data generation processing 104, the second imaging may be performed without relying on the imaging control information (for example, manually). Herein, such an imaging method is also referred to as manual imaging. In a case where the manual imaging is performed, imaging timing information indicating the imaging timing is generated in (the second imaging of) the second 3D data generation processing 104 and supplied to the imaging control processing for second 3D modeling 103. Then, in the imaging control processing for second 3D modeling 103, the orientation information regarding the second imaging unit at the imaging timing is obtained on the basis of the imaging timing information, and the orientation information regarding the second imaging unit at the imaging timing is supplied to the scoring processing 102 as the imaging viewpoint information. Then, in the scoring processing 102, a score is calculated on the basis of the imaging viewpoint information. As described above, (the orientation information regarding the second imaging unit corresponding to the angle of view of) the second captured image obtained by the manual imaging may be reflected in (the scoring result derived by) the scoring processing 102.

<Camera information>

Furthermore, as illustrated in Fig. 4, in (the second imaging of) the second 3D data generation processing 104, camera information regarding the second imaging unit may be generated and supplied to the scoring processing 102. Then, in the scoring processing 102, scoring may be performed on the basis of the camera information, and the scoring result may be generated. The camera information may include any information. For example, the camera information may include the internal parameter of the imaging unit. The camera information may further include external parameters of the imaging unit. The camera information may further include a captured image. The camera information may further include angle-of-view information (focal length information) regarding the second captured image. The camera information may further include distortion correction information. The camera information may further include shading correction information. The camera information may further include breathing correction information. The camera information may further include focus position information. The camera information may further include image plane phase difference information. That is, these pieces of information may be used in scoring (evaluation of the accuracy of the second three-dimensional shape information that can be generated).

<Real-time processing>

Note that the first 3D data generation processing 101 (first imaging and first 3D modeling processing), the scoring processing 102, and the imaging control processing for second 3D modeling 103 in Fig. 4 may be performed in parallel.

For example, in the first 3D data generation processing 101, first 3D data of a portion of the 3D object subjected to the first imaging, the 3D object being the subject, may be sequentially generated. For example, it is possible to generate, by applying real-time 3D modeling as the first 3D modeling processing, the 3D data instantaneously (in real time) on the basis of the captured image, the depth information, and the like. That is, in this case, while performing the first imaging (while obtaining the first captured image), the first 3D modeling can be performed to generate the first 3D data. For example, as described with reference to Fig. 2, each portion of the 3D object as the subject is imaged while the camera is moved around the 3D object, but before the captured image of the entire 3D object is obtained, the 3D modeling can be performed on the basis of the obtained captured image and depth. That is, the 3D data of the imaged portion can be sequentially generated.

Furthermore, in the scoring processing 102, scoring (evaluation of the accuracy of the second three-dimensional shape information that can be generated using the second captured image generated by the second imaging performed so far) for the first 3D data corresponding to the portion of the 3D object may be performed. That is, whenever the first 3D data corresponding to the portion of the 3D object is generated by the first 3D modeling processing (before the first 3D data of the entire 3D object is generated), scoring (evaluation of the accuracy of the second 3D data that can be generated) may be sequentially performed on the portion of the 3D object from which the first 3D data has been generated. By doing so, it is possible to start the scoring processing 102 before the end of the first 3D data generation processing 101 (before the first 3D data of the entire 3D object is generated). That is, the first 3D data generation processing 101 and the scoring processing 102 can be performed in parallel.

Furthermore, in the imaging control processing for second 3D modeling 103, each time the scoring result is obtained by the scoring processing 102 (before the scoring result of the entire 3D object is obtained), the second imaging may be controlled on the basis of the obtained scoring result (scoring result for the first 3D data corresponding to the portion of the 3D object). By doing so, it is possible to start the imaging control processing for second 3D modeling 103 before the end of the scoring processing 102 (before the scoring result of the entire 3D object is obtained). That is, the scoring processing 102 and the imaging control processing for second 3D modeling 103 can be performed in parallel.

It is possible to perform, by combining the methods described above, the first 3D data generation processing 101, the scoring processing 102, and the imaging control processing for second 3D modeling 103 in parallel.

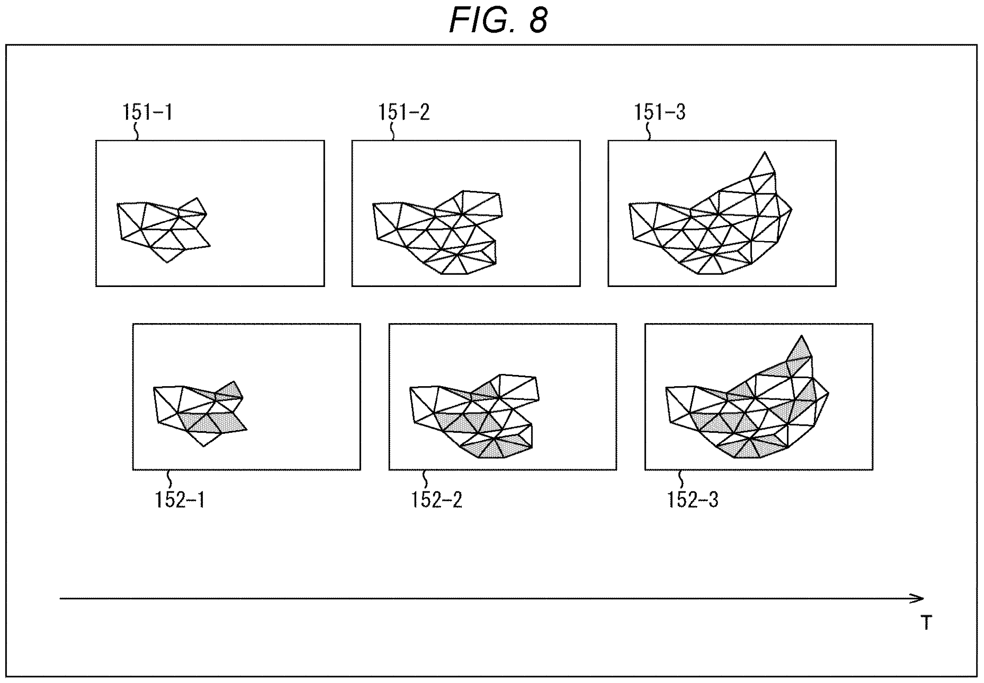

For example, in Fig. 8, it is assumed that the time axis extends from left to right in the drawing as indicated by the arrow. It is possible to generate, by performing the first imaging and the first 3D modeling processing in parallel in the first 3D data generation processing 101, the first 3D data of the portion subjected to the first imaging sequentially, such as first 3D data 151-1, first 3D data 151-2, and first 3D data 151-3.

Furthermore, it is possible to derive, by performing the first 3D data generation processing (first 3D modeling processing) and the scoring processing 102 in parallel, the scoring result for the portion from which the first 3D data has been generated sequentially, such as a scoring result 152-1, a scoring result 152-2, and a scoring result 152-3. Moreover, it is possible to control, by performing the scoring processing 102 and the imaging control processing for second 3D modeling 103 in parallel, the second imaging on the basis of the scoring results obtained so far (the scoring result 152-1, the scoring result 152-2, the scoring result 152-3) at each timing.

That is, it is possible to control, by performing the first 3D data generation processing 101, the scoring processing 102, and the imaging control processing for second 3D modeling 103 in parallel, the second imaging while performing the first imaging. That is, the first imaging and the second imaging can be performed in parallel (instantaneously).

<Scoring>

This scoring method will be described. Examples of the condition under which photogrammetry works successfully include ensuring that SfM works successfully, ensuring that MVS works successfully, and ensuring that texturing (texture mapping) works successfully. Examples of the condition under which SfM works successfully include ensuring that a baseline can be secured, ensuring that feature points can be matched, and the like. Furthermore, examples of the condition under which MVS works successfully include ensuring that the baseline can be secured. Examples of the condition under which texturing works successfully include ensuring that a high-definition texture can be obtained from a captured image, and ensuring that a surface to which the texture is applied is imaged as directly as possible from the front. The baseline indicates a distance between imaging viewpoint positions (camera positions during imaging).

<Scoring of polygon>

Examples of the condition under which a certain polygon surface can be restored by SfM or MVS include a minimum visible condition (whether or not a polygon is visible from the imaging position), a favorable condition for accuracy (a condition under which accuracy improves), and a favorable condition for matching (corresponding point detection) (a condition under which matching becomes easier).

Examples of the minimum visible condition include ensuring that the centroid of a target polygon falls within the field of view (within the angle of view of imaging) as viewed from the viewpoint (imaging position), ensuring that the dot product of the normal line to the target polygon and the line-of-sight (vector from the line of sight toward the centroid of the object polygon) is at least positive, there is no other polygons blocking the line-of-sight, and there are two or more (visible) lines of sight where the object polygon is visible.

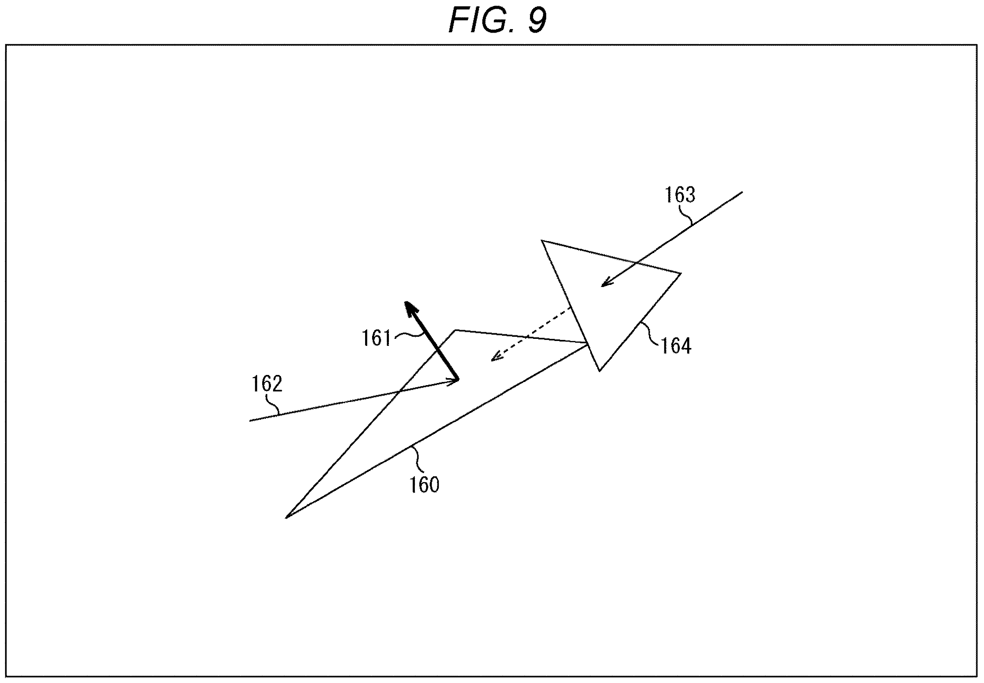

For example, in a case of Fig. 9, there is a line-of-sight 162 from a certain viewpoint toward the centroid of a target polygon 160, so that the target polygon 160 is within the field of view. Furthermore, the dot product of the normal line 161 to the target polygon 160 and the line-of-sight 162 is positive. Furthermore, the line-of-sight 162 reaches the target polygon 160 without being blocked by other polygons, and is the "line-of-sight where the target polygon 160 is visible". Therefore, the line-of-sight 162 satisfies the minimum visible condition.

On the other hand, a line-of-sight 163 is not the "line-of-sight where the target polygon 160 is visible" because the line-of-sight 163 is blocked by a polygon 164.

Furthermore, examples of the favorable condition for accuracy include ensuring that the baseline is sufficiently long, ensuring that a ratio of the length of the baseline to the distance to the subject (the length of the baseline/the distance to the subject) is sufficiently large, and ensuring that there are a sufficient number of visible viewpoints and the variance of angles formed between them is large.

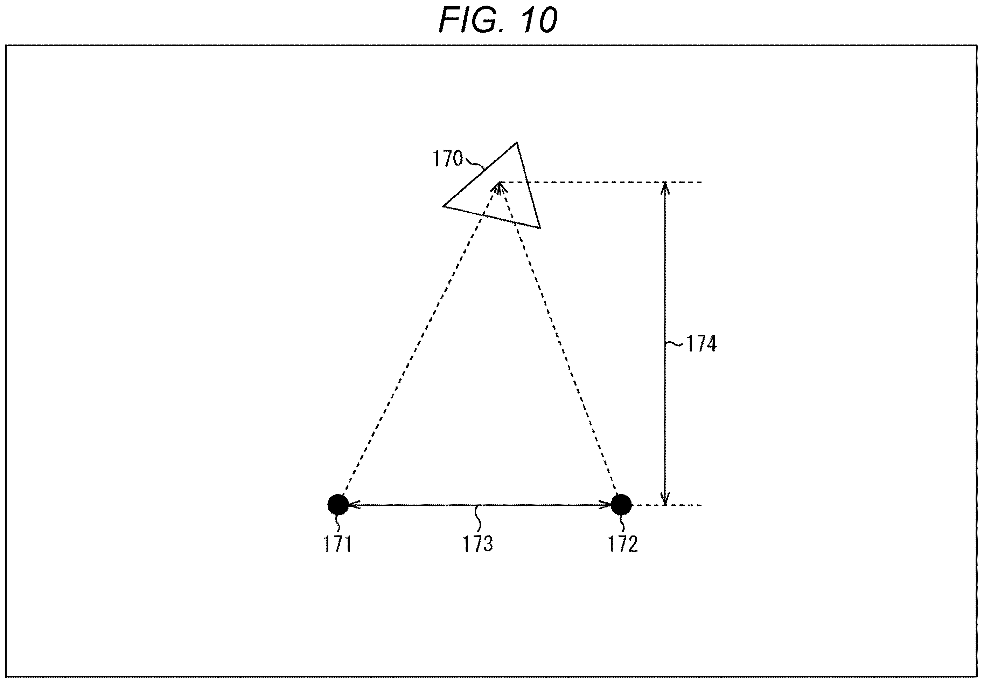

For example, in a case of Fig. 10, examples of the condition under which the accuracy improves include ensuring that a baseline 173 between a viewpoint 171 and a viewpoint 172 from which the target polygon 170 is visible is sufficiently long (that the viewpoint 171 and the viewpoint 172 are sufficiently separated), ensuring that a ratio of the length of the baseline 173 to a distance 174 to the subject is sufficiently large (that the value of "baseline length/distance to object" is sufficiently large), and the like.

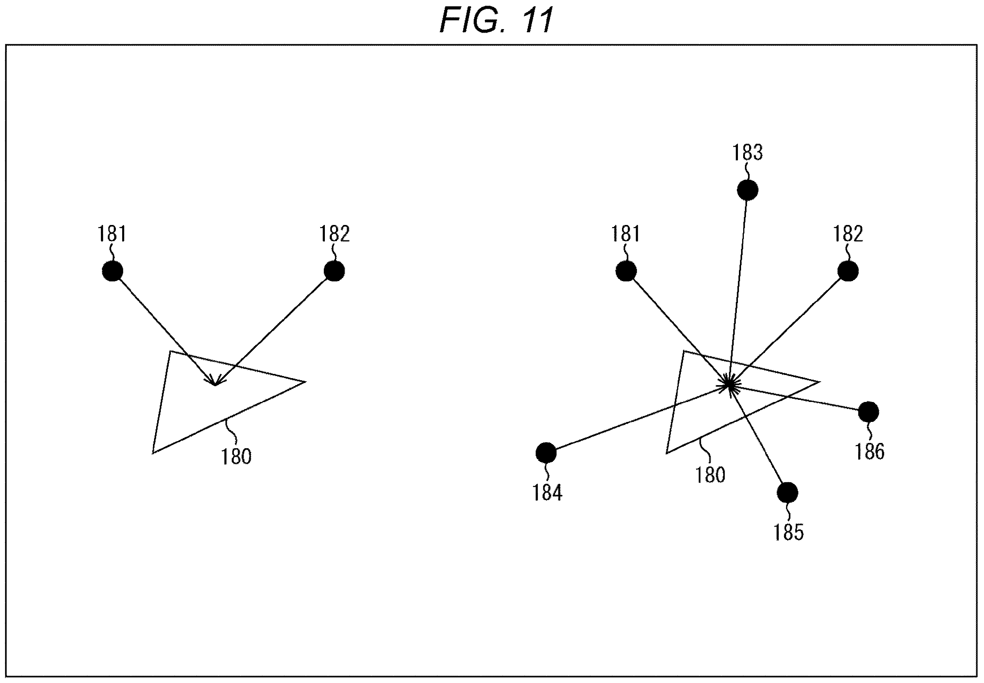

Furthermore, in a case of the left example in Fig. 11, a viewpoint from which a target polygon 180 is visible includes two points, a viewpoint 181 and a viewpoint 182. On the other hand, in a case of the right example in Fig. 11, the viewpoint from which the target polygon 180 is visible includes six points, viewpoints 181 to 186. That is, the right example has more visible viewpoints than the left example, so that the variance of the angles formed between the viewpoints is larger in the right example. A large number of visible points makes triangulation more robust than using a plurality of different pieces of information, leading to improved accuracy. Therefore, the right example satisfies the condition under which the accuracy improves better than the left example.

Examples of the favorable condition for matching include ensuring that the angle formed between the normal line to the target polygon and the line-of-sight extending from the viewpoint toward the centroid of the target polygon is sufficiently small, ensuring that the ratio of the distance to the subject from the pair of viewpoints is sufficiently small, and ensuring that there is a texture that can be matched.

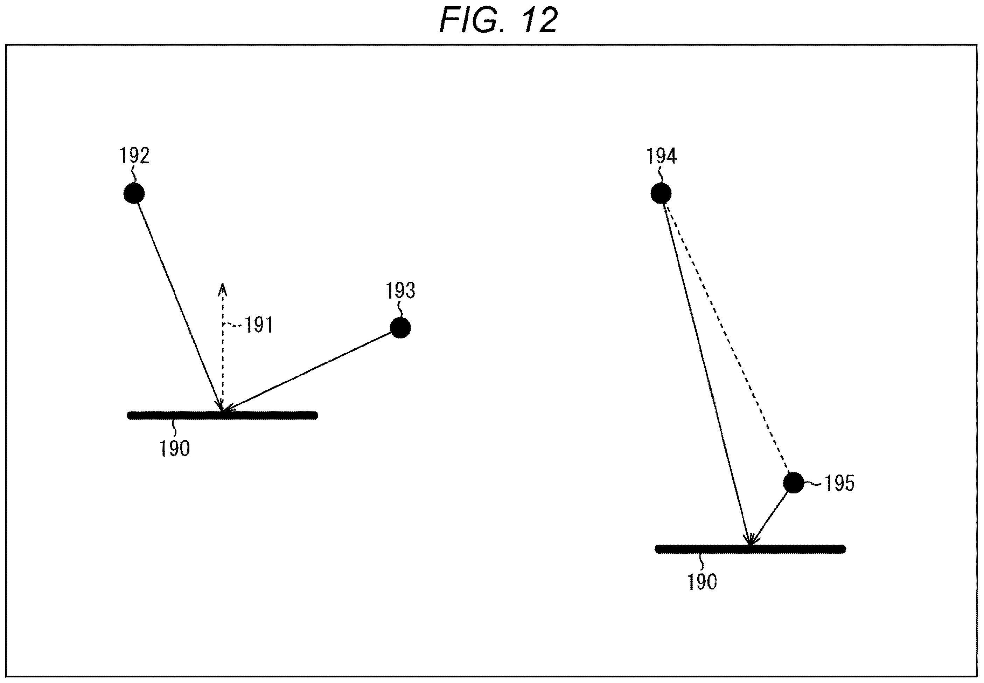

In a case of the left example in Fig. 12, the angle formed between a normal line 191 to a target polygon 190 and a viewpoint 192 is smaller than the angle formed between the normal line 191 and a viewpoint 193. Therefore, the viewpoint 192 allows for more accurate detection of the feature point of the surface of the target polygon 190 than the viewpoint 193. Furthermore, in a case of the right example in Fig. 12, the distance from a viewpoint 194 to the subject (target polygon 190) is significantly longer than the distance from a viewpoint 195 to the subject (target polygon 190). That is, the ratio of the distance to the subject from the viewpoint 194 and the viewpoint 195 is large. In such a case, even if the baseline is long, the appearance of the feature point of the surface of the target polygon 190 significantly varies between the viewpoints, so that there is a possibility that difficulty of matching increases. In other words, the smaller the ratio of the distance to the subject from viewpoints, such as the viewpoint 192 and the viewpoint 193 in the left example in Fig. 12, the easier the matching.

<Scoring of texture>

Examples of the condition for determining whether or not a certain polygon surface has a sufficient number of viewpoints for texturing include a minimum condition (whether or not the polygon surface is visible) and a favorable condition for texturing (condition under which clearer texturing is achieved).

Examples of the minimum condition include ensuring that there is a viewpoint satisfying the above-described minimum visible condition.

Furthermore, examples of the favorable condition for texturing include ensuring that the angle formed between the normal line to the target polygon and the line-of-sight extending from the viewpoint toward the centroid of the target polygon is small, and ensuring that a sufficient resolution can be obtained when the distance from the viewpoint to the subject is less than or equal to a certain limit.

Note that each condition described above is an example. Any condition may be applied to the scoring. Furthermore, the content may be of any kind. For example, the above-described conditions may be omitted, or a condition other than the above-described conditions may be added.

<Scoring of second captured image>

Scoring of the second captured image obtained by the second imaging may be performed. For example, the scoring of the second captured image may be performed on the basis of the camera information. For example, whether or not a desired position is in focus may be evaluated for the second captured image. Furthermore, whether or not there is camera shake may be evaluated. Furthermore, whether or not the exposure is appropriate may be evaluated. Furthermore, whether or not the feature point is easily obtained may be evaluated.

<Example of scoring calculation>

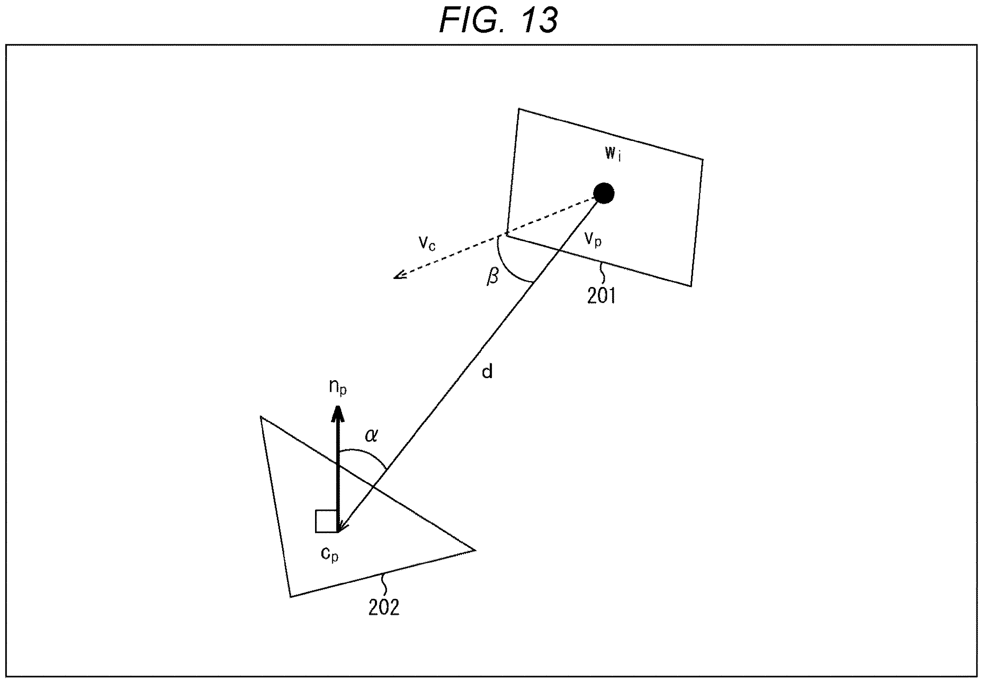

For example, as illustrated in Fig. 13, a distance between a target captured image 201 and a target polygon 202 is denoted as d. Furthermore, an ideal distance to the subject is denoted as $d_{opt}$. Furthermore, $c_d$ denotes a predetermined coefficient. A score $s_d$ in that case may be derived as in the following equation (1).
[Math. 1]

$$s_d = \frac{1}{1 + c_d \left( d - d_{opt} \right)^2}$$

$$\cdots (1)$$

Furthermore, the center of the target polygon 202 is denoted as $c_p$. The line-of-sight from the target captured image 201 to the center $c_p$ is denoted as $v_p$. Furthermore, the normal line to the target polygon 202 is denoted as $n_p$. Then, an angle formed between the line-of-sight $v_p$ and the normal line $n_p$ is denoted as $\alpha$. The angle $\alpha$ formed in that case can be derived as in the following equation (2). Then, a score $s_\alpha$ based on the angle $\alpha$ may be derived as in the following equation (3). Note that $c_\alpha$ denotes a predetermined coefficient.
[Math. 2]

$$\alpha = \cos^{-1} \frac{v_p \cdot n_p}{\left| v_p \right| \cdot \left| n_p \right|}$$

$$\cdots (2)$$

[Math. 3]

$$s_\alpha = \frac{2}{1 + \exp c_\alpha \alpha^2}$$

$$\cdots (3)$$

An optical axis of the camera (a normal vector of the captured target image starting from the center of the captured target image 201) is denoted as $v_c$. Furthermore, an angle formed between the optical axis $v_c$ and the line-of-sight $v_p$ is denoted as $\beta$. The angle $\beta$ formed in that case can be derived as in the following equation (4). Then, a score $s_\beta$ based on the angle $\beta$ may be derived as in the following equation (5). Note that $c_\beta$ denotes a predetermined coefficient.
[Math. 4]

$$\beta = \cos^{-1} \frac{v_c \cdot v_p}{|v_c| \cdot |v_p|}$$

$$\cdots (4)$$

[Math. 5]

$$s_\beta = \frac{2}{1 + \exp c_\beta \beta^2}$$

$$\cdots (5)$$

A total score $s_{total}$ may be derived as in the following equation (6) using the scores $s_d$, $s_\alpha$, and $s_\beta$ derived as described above.

[Math. 6]

$$S_{total} = S_d \cdot S_\alpha \cdot S_\beta$$

$$\cdots (6)$$

Then, a weighted sum of the total score of the top two viewpoints among all the viewpoints derived as described above may be used as the final score.

Note that this calculation method is an example. The calculation method applied to the scoring processing 102 may be any method and is not limited to this example.

<Example of configuration for performing processing>

Each processing in Fig. 4 described above may be performed by any device. For example, in an information processing device, the first 3D modeling processing of the first 3D data generation processing 101, the scoring processing 102, and the imaging control processing for second 3D modeling 103 described above may be performed.

That is, an information processing device may include: a first 3D modeling processing unit that generates, on the basis of the first captured image generated by the first imaging of imaging the 3D object, the first three-dimensional shape information representing the three-dimensional shape of the 3D object; a scoring processing unit that uses the first three-dimensional shape information to evaluate the accuracy of the second three-dimensional shape information that can be generated using the second captured image generated by the second imaging performed so far, and generates a scoring result; and an imaging control unit that controls the second imaging of imaging the 3D object on the basis of the scoring result. In this section, this information processing device is also referred to as a first information processing device.

Furthermore, an information processing method performed by the first information processing device may include: generating, on the basis of the first captured image generated by the first imaging of imaging the 3D object, the first three-dimensional shape information representing the three-dimensional shape of the 3D object; evaluating, using the first three-dimensional shape information, the accuracy of the second three-dimensional shape information that can be generated using the second captured image generated by the second imaging performed so far, and generates a scoring result; and controlling the second imaging of imaging the 3D object on the basis of the scoring result.

By doing so, it is possible to image the 3D object (perform the second imaging) in a more appropriate position and orientation and perform the second 3D modeling processing using the obtained second captured image. It is therefore possible to generate more accurate 3D data while suppressing an increase in the load (workload or processing volume) of the 3D modeling. That is, it is possible to perform the 3D modeling more easily.

Furthermore, the first 3D modeling processing unit may include: an orientation information generation unit that generates orientation information indicating the position and orientation of the first imaging unit on the basis of the first captured image and the acceleration and angular velocity of the first imaging unit; and a three-dimensional shape generation unit that generates the first three-dimensional shape information regarding the 3D object on the basis of the orientation information and the depth of the 3D object.

Furthermore, in the first information processing device, the first imaging of the first 3D data generation processing 101 described above may be further performed. For example, the first information processing device may further include the first imaging unit. Furthermore, the first information processing device including the first imaging unit may include a depth detection unit that detects a depth, may include an inertial measurement unit that detects the acceleration and angular velocity of the first imaging unit, or may include both.

Furthermore, in the first information processing device, the second imaging of the second 3D data generation processing 104 described above may be further performed. For example, the first information processing device may further include the second imaging unit.

Note that the second captured image generated by the second imaging may be encoded. For example, the first information processing device including the second imaging unit may include an encoding unit that encodes the second captured image generated by the second imaging unit. The encoded second captured image may be supplied to another information processing device through communication, or may be stored in a storage medium.

Furthermore, in the first information processing device, the second 3D modeling processing of the second 3D data generation processing 104 described above may be further performed. For example, the first information processing device including the second imaging unit may further include a second 3D modeling processing unit that generates the second three-dimensional shape information on the basis of the second captured image generated by the second imaging unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertexes and connections and a texture applied to the surface of the mesh.

Note that the second 3D data generated by the second 3D modeling processing may be encoded. For example, the first information processing device including the second imaging unit and the second 3D modeling processing unit may further include an encoding unit that encodes the second three-dimensional shape information generated by the second 3D modeling processing unit. The encoded second three-dimensional shape information (second 3D data) may be supplied to another information processing device through communication, or may be stored in a storage medium.

Note that the second imaging of the second 3D data generation processing 104 described above may be performed in a second information processing device different from the first information processing device. For example, the first information processing device may include a communication unit that communicates with the second information processing device (imaging device) including the second imaging unit, the imaging control unit may generate imaging control information on the basis of which the second imaging is controlled, and the communication unit may supply the imaging control information to the second information processing device.

Furthermore, in that case, the first information processing device may acquire the second captured image generated by the second information processing device. For example, the first information processing device including the communication unit may acquire the second captured image supplied from the second information processing device. This second captured image may be encoded. For example, the first information processing device including the communication unit may include an encoding unit that encodes the second captured image acquired by the communication unit. The encoded second captured image may be supplied to another information processing device through communication, or may be stored in a storage medium.

Furthermore, the second captured image supplied from the second information processing device may be encoded. That is, the communication unit may acquire encoded data of the second captured image. Then, the encoded data may be supplied to another information processing device through communication, or may be stored in a storage medium. Furthermore, the first information processing device may decode the encoded data acquired by the communication unit to generate (restore) the second captured image. For example, the first information processing device including the communication unit may include a decoding unit that decodes the encoded data of the second captured image acquired by the communication unit.

Even in a case where the second imaging is performed in the second information processing device as described above, the second 3D modeling processing of the second 3D data generation processing 104 described above may be further performed in the first information processing device. For example, the first information processing device including the communication unit may further include a second 3D modeling processing unit that generates the second three-dimensional shape information on the basis of the second captured image acquired by the communication unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertexes and connections and a texture applied to the surface of the mesh.

Note that the second 3D data generated by the second 3D modeling processing may be supplied to another information processing device through communication, or may be stored in a storage medium. Furthermore, the second 3D data may be encoded. For example, the first information processing device including the communication unit and the second 3D modeling processing unit may further include an encoding unit that encodes the second three-dimensional shape information generated by the second 3D modeling processing unit. Then, the encoded data of the generated second three-dimensional shape information (second 3D data) may be supplied to another information processing device through communication, or may be stored in a storage medium.

Incidentally, as described above, the second imaging can be performed by manual imaging. In this case, the second captured image obtained by the manual imaging may be used in the second 3D modeling processing. In the scoring processing 102, as described above, the accuracy of the second three-dimensional shape information that can be generated using the second captured images obtained so far is evaluated. At that time, the second captured images may include the second captured image obtained by the manual imaging. That is, orientation information regarding the manual imaging may be reflected in the scoring processing 102. For example, the scoring processing unit of the first information processing device may generate the scoring result on the basis of the position and orientation of the second information processing device corresponding to the second imaging timing indicated by the imaging timing information indicating the second imaging timing without relying on the imaging control information. For example, the imaging control unit may obtain the orientation information regarding the second imaging unit at the imaging timing on the basis of the imaging timing information, and the scoring processing unit may calculate the score on the basis of the orientation information. By doing so, the orientation information regarding the manual imaging is reflected in the scoring result.

Note that, in this case, the second imaging (manual imaging) may be performed in the first information processing device or may be performed in the second information processing device. In a case where the first information processing device includes the second imaging unit, for example, when performing the manual imaging, the second imaging unit may generate the imaging timing information indicating the timing and supply the imaging timing information to the imaging control unit. Furthermore, in a case where the first information processing device includes the communication unit, for example, the communication unit may acquire the imaging timing information supplied from the second information processing device and supply the imaging timing information to the imaging control unit.

By doing so, it is possible to perform control so that the second imaging is performed in a more appropriate position and orientation on the basis of the imaging timing information.

Incidentally, in the first information processing device, as described above, the camera information regarding the second imaging unit may be reflected in the scoring processing 102. For example, the scoring processing unit of the first information processing device may generate the scoring result on the basis of the camera information. Note that, in this case, the second imaging may be performed in the first information processing device or may be performed in the second information processing device. In a case where the first information processing device includes the second imaging unit, for example, the second imaging unit may generate the camera information and supply the camera information to the scoring processing unit. Furthermore, in a case where the first information processing device includes the communication unit, for example, the communication unit may acquire the camera information supplied from the second information processing device and supply the camera information to the scoring processing unit.

By doing so, it is possible to perform control so that the second imaging is performed in a more appropriate position and orientation on the basis of the camera information.

Incidentally, the second information processing device may perform the second imaging of the second 3D data generation processing 104 described above. For example, the second information processing device may include a second imaging unit and a communication unit that communicates with the first information processing device, the communication unit may acquire imaging control information supplied from the first information processing device, and the second imaging unit may image the 3D object on the basis of the imaging control information to generate the second captured image. The imaging control information is information on the basis of which the second imaging is controlled, the information being generated on the basis of the scoring result derived on the basis of the first 3D data.

Furthermore, in the information processing method performed by the second information processing device, the imaging control information supplied from the first information processing device may be acquired, the second imaging may be performed on the basis of the imaging control information, and the second captured image used to generate the second 3D data may be generated.

By doing so, it is possible to image the 3D object (perform the second imaging) in a more appropriate position and orientation and perform the second 3D modeling processing using the obtained second captured image. It is therefore possible to generate more accurate 3D data while suppressing an increase in the load (workload or processing volume) of the 3D modeling. That is, it is possible to perform the 3D modeling more easily.

The generated second captured image may be supplied to the first information processing device. For example, the communication unit may supply the second captured image generated by the second imaging unit to the first information processing device. The second captured image is a captured image used to generate three-dimensional shape information representing the three-dimensional shape of the 3D object. Furthermore, the second captured image may be encoded. For example, the second information processing device may include an encoding unit that encodes the second captured image generated by the second imaging unit. Then, the communication unit may supply the encoded data of the second captured image generated by the encoding unit to the first information processing device. Note that the second captured image (or the encoded data of the second captured image) may be supplied to an information processing device other than the first information processing device. For example, the communication unit may supply the second captured image (or the encoded data of the second captured image) to another information processing device. Furthermore, the second captured image (or the encoded data of the second captured image) may be stored in a storage medium. For example, the second information processing device may include a storage unit that stores the encoded data of the second captured image generated by the encoding unit.

Furthermore, the second information processing device may perform the second 3D modeling processing described above. That is, in the second information processing device, the second 3D modeling processing may be performed using the second captured image generated by the second imaging to generate the second 3D data. For example, the second information processing device may further include a second 3D modeling processing unit that generates the second three-dimensional shape information (second 3D data) representing the three-dimensional shape of the 3D object on the basis of the second captured image generated by the second imaging unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertexes and connections and a texture applied to the surface of the mesh.

Note that the second 3D data generated by the second 3D modeling processing may be supplied to another information processing device through communication, or may be stored in a storage medium. Furthermore, the second 3D data may be encoded. For example, the second information processing device including the second 3D modeling processing unit may further include an encoding unit that encodes the second three-dimensional shape information generated by the second 3D modeling processing unit. Then, the encoded data of the generated second three-dimensional shape information (second 3D data) may be supplied to another information processing device through communication, or may be stored in a storage medium.

Incidentally, as described above, the second imaging can be performed by manual imaging. In this case, the second captured image obtained by the manual imaging may be used in the second 3D modeling processing. In the scoring processing 102, as described above, the accuracy of the second three-dimensional shape information that can be generated using the second captured images obtained so far is evaluated. At that time, the second captured images may include the second captured image obtained by the manual imaging. That is, orientation information regarding the manual imaging may be reflected in the scoring processing 102.

In that case, imaging timing information indicating the timing of the manual imaging may be generated in the second information processing device and supplied to the first information processing device. For example, the second imaging unit of the second information processing device may generate the imaging timing information indicating the timing when the manual imaging is performed, and the communication unit may supply the imaging timing information to the first information processing device.

By doing so, it is possible to image the 3D object (perform the second imaging) in a more appropriate position and orientation on the basis of the imaging timing information.

Incidentally, as described above, the camera information regarding the second imaging unit may be reflected in the scoring processing 102. For example, the second imaging unit of the second information processing device may generate the camera information, and the communication unit may supply the camera information to the first information processing device. Furthermore, in this case, the communication unit may acquire imaging control information generated on the basis of the camera information, and the second imaging unit may perform the second imaging on the basis of the imaging control information. Furthermore, in the information processing method performed by the second information processing device, the camera information regarding the second imaging unit may be generated, and the camera information may be supplied to the first information processing device. Furthermore, the imaging control information generated on the basis of the camera information may be acquired, and the second imaging may be performed on the basis of the imaging control information.

By doing so, it is possible to image the 3D object (perform the second imaging) in a more appropriate position and orientation on the basis of the camera information.

<3. Imaging guidance output>

<Imaging guidance output processing for second 3D modeling>

Furthermore, instead of controlling the imaging for the second 3D modeling, guidance information used to assist in the imaging for the second 3D modeling may be output. For example, in Fig. 4, after the first 3D data generation processing 101 and the scoring processing 102 are performed, imaging guidance output processing for second 3D modeling 105 may be further performed. In this case as well, the first 3D data generation processing 101 and the scoring processing 102 are performed similarly to the case described above in <2. Imaging control>. However, the scoring processing 102 supplies the scoring result to the imaging guidance output processing for second 3D modeling 105.

In the imaging guidance output processing for second 3D modeling 105, guidance information for the second imaging is generated on the basis of the scoring result obtained by the scoring processing 102, and the output of the guidance information is controlled and output by an output device.

The user or the like manually performs the second imaging on the basis of such guidance information. That is, in this case, the second imaging is manual imaging (imaging without relying on the imaging control information). It is possible to generate, by performing the second imaging in this manner, the second captured image captured in a more appropriate position and orientation. Then, the second 3D data generation processing 104 (second imaging and second 3D modeling processing) is performed using the second captured image to generate desired second 3D data. In other words, the second 3D modeling processing can be performed using the second captured image captured in a more appropriate position and orientation. It is therefore possible to generate more accurate 3D data while suppressing an increase in the load (workload or processing volume) of the 3D modeling. That is, it is possible to perform the 3D modeling more easily.

<Generation of guidance information>

In order to generate this guidance information, in the imaging guidance output processing for second 3D modeling 105, the position and orientation in which the second imaging is to be performed (more appropriate position and orientation as the position and orientation in which the second imaging is to be performed) are obtained on the basis of the scoring result. The method for obtaining such a position and orientation in which the second imaging is to be performed may be any method. For example, the method may be similar to the method applied to the imaging control processing for second 3D modeling 103 described above. For example, (the range of) the position and orientation that allow an increase in the score of the portion (gray portion) where the second imaging is insufficient may be determined on the basis of the scoring result.

Furthermore, in the imaging guidance output processing for second 3D modeling 105, whether or not the current position and orientation are the position and orientation in which the second imaging is to be performed may be determined on the basis of the variation of the scoring result based on the current orientation information regarding (position and orientation of) the second imaging unit. For example, as a result of reflecting (the orientation information regarding) the second captured image obtained in a case where the second imaging unit performs the second imaging in the current position and orientation in the scoring, in a case where the score is higher than the score before the addition of the second captured image by a predetermined threshold or more, the current position and orientation may be determined to be the position and orientation in which the second imaging is to be performed. That is, in this case, in the scoring processing 102, the scoring results are derived and compared between a case where the second imaging performed by the second imaging unit in the current position and orientation is included in "the second imaging performed so far" and a case where the second imaging is not included in "the second imaging performed so far". Therefore, in this case, in the scoring processing 102, scoring is performed on the basis of the current orientation information (imaging viewpoint information) regarding the second imaging unit.

This imaging viewpoint information may be supplied by the imaging guidance output processing for second 3D modeling 105. As described above, in this case, the imaging guidance output processing for second 3D modeling 105 is performed, and the second imaging is performed manually. Therefore, similarly to the case described above in <2. Imaging control>, imaging timing information indicating the imaging timing may be generated in (the second imaging of) the second 3D data generation processing 104 and supplied to the imaging guidance output processing for second 3D modeling 105. Then, in the imaging guidance output processing for second 3D modeling 105, on the basis of the imaging timing information, the orientation information regarding the second imaging unit at the imaging timing may be obtained, and the orientation information regarding the second imaging unit at the imaging timing may be supplied to the scoring processing 102 as the imaging viewpoint information.

Note that, if the position and orientation relationship between the first imaging unit and the second imaging unit is known, the orientation information regarding the first imaging unit may be supplied to the scoring processing 102 as the imaging viewpoint information instead of the orientation information regarding the second imaging unit.

Furthermore, in the imaging guidance output processing for second 3D modeling 105, whether or not the position and orientation are the position and orientation in which the second imaging is to be performed may be determined on the basis of the overlap rate with the imaging range of the second imaging performed so far.

Note that what the overlap rate that makes the second 3D modeling processing easier (allows more accurate 3D modeling processing) is also depends on the three-dimensional shape of the 3D object, or the like. Therefore, in a case where the overlap rate with respect to the second captured images obtained so far is taken into consideration when the position and orientation in which the second imaging is to be performed are obtained, it is desirable that the three-dimensional shape (first 3D data) of the 3D object be also taken into consideration (the position and orientation in which the second imaging is to be performed can be obtained more accurately).

Furthermore, as described above with reference to Fig. 7, when obtaining the position and orientation in which the second imaging is to be performed, the distance from the subject (3D object) to the imaging position may be controlled. At that time, the distance may be controlled in accordance with (the complexity of) the three-dimensional shape of the 3D object. By doing so, it is possible to suppress an unnecessary increase in the frequency of the second imaging while suppressing a decrease in the accuracy of the second 3D modeling processing (accuracy of the second 3D data). That is, it is possible to perform control so that the second imaging is performed in a more appropriate position and orientation.

Then, in the imaging guidance output processing for second 3D modeling 105, the guidance information is generated on the basis of the position and orientation in which the second imaging is to be performed obtained as described above. The guidance information may be any type of information, and may include, for example, image information or audio information.

Furthermore, the output of the guidance information is performed so that the content of the guidance information is presented to the user or the like who performs the second imaging, for example. The output device may be any device, and may include, for example, a monitor that displays the image information, or a speaker that outputs the audio information.

<Guidance information>

Next, the content of the guidance information will be described. The content of the guidance information may be of any kind. For example, information indicating a more appropriate position and orientation for the second imaging to the user may be included in the guidance information.

For example, it is assumed that the first 3D data 120 illustrated in Fig. 5 is generated by the first 3D data generation processing 101 in Fig. 4. Then, it is assumed that the second imaging has been performed on the 3D object corresponding to the first 3D data 120 in the positions and orientations of the camera 121-1 to the camera 121-3. In that case, in the scoring processing 102, the upper side of the first 3D data 120 in the drawing is evaluated with a relatively high score, and the lower side (gray portion) of the first 3D data 120 in the drawing is evaluated with a relatively low score. This scoring result clearly shows that imaging of the lower side (for example, the gray portion) of the 3D object in the drawing corresponding to the first 3D data 120 is insufficient.

Therefore, in the imaging guidance output processing for second 3D modeling 105, guidance information used to guide the second imaging is generated and output so that the captured image of the gray portion where imaging is insufficient can be obtained. That is, in this guidance information, the second imaging is guided so that the 3D object is imaged from the lower side in the drawing. For example, the position and orientation of the camera 121-4 are determined to be more appropriate as the position and orientation in which the second imaging is performed, and the user or the like is notified of the determination.

By doing so, it is possible for the user to image the 3D object in a more appropriate position and orientation by performing the second imaging in accordance with the guidance information. That is, it is possible to perform the 3D modeling (second 3D data generation processing 104) using the captured image. It is therefore possible to generate more accurate 3D data while suppressing an increase in the load (workload or processing volume) of the 3D modeling. That is, it is possible to perform the 3D modeling more easily.

<Display of scoring result>

Note that the guidance information may include information indicating the scoring result. That is, in the imaging guidance output processing for second 3D modeling 105, guidance information including information indicating the scoring result may be generated, and an image indicating the scoring result may be displayed on the monitor as the guidance information. Furthermore, information indicating the scoring result within the current angle of view of the second imaging unit may be included in the guidance information. That is, in the imaging guidance output processing for second 3D modeling 105, guidance information including information indicating the scoring result within the angle of view of the second imaging unit may be generated on the basis of the current position and orientation of the second imaging unit, and an image indicating the scoring result may be displayed on the monitor as the guidance information.

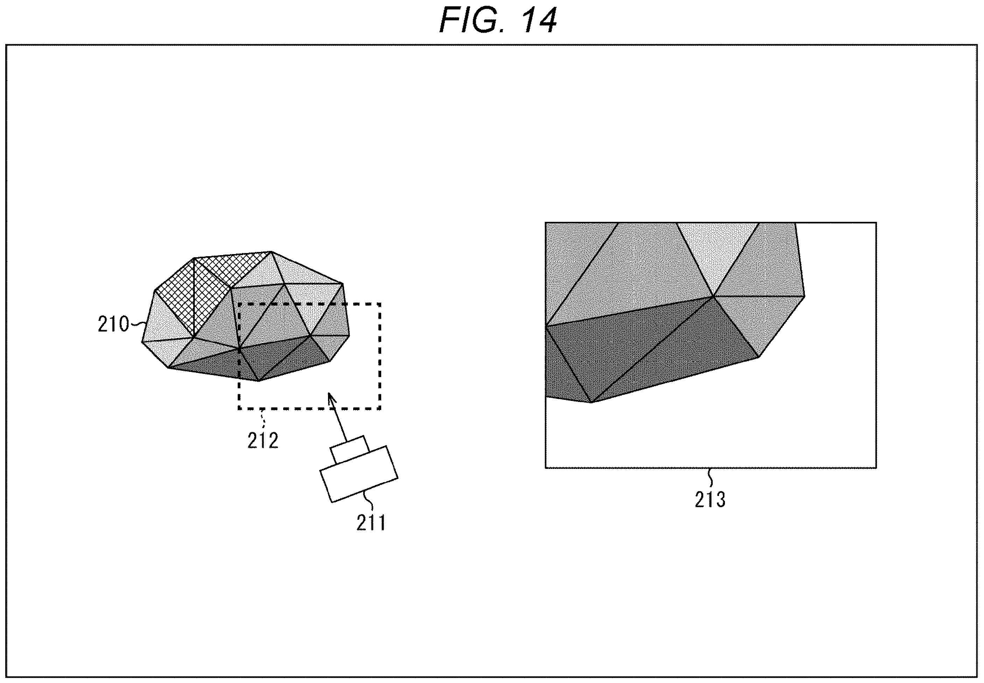

For example, as illustrated in Fig. 14, it is assumed that the second imaging unit is located at the position of a camera 211 and is oriented to image a portion of the scored first 3D data 210 enclosed by a dotted frame 212. In this case, in the imaging guidance output processing for second 3D modeling 105, like an image 213, an image indicating the scoring result within the current angle of view (imaging range) of the second imaging unit, in other words, an image indicating the portion of the first 3D data 210 enclosed by the dotted frame 212 may be displayed on the monitor as the guidance information. By doing so, it is possible to display the scoring result in a state based on the current position and orientation of the second imaging unit. It is therefore possible for the user to identify the position and orientation appropriate for the second imaging more easily.

Furthermore, the guidance information (image indicating the scoring result within the current angle of view of the second imaging unit) may be superimposed on the captured image generated by the second imaging unit for display. For example, the image 213 (image indicating the scoring result within the current angle of view of the second imaging unit) illustrated in Fig. 14 may be superimposed on the captured image generated by the second imaging unit with the current angle of view for display. By doing so, it is possible to superimpose the captured image and the guidance information (image indicating the scoring result) having the same angle of view for display on the monitor. The user can cause, on the basis of such a display, the 3D object in the real space to correspond to the scoring result more easily. It is therefore possible for the user to identify the position and orientation appropriate for the second imaging more easily. Moreover, a bird's-eye view image indicating the scoring result of the entire 3D object may be displayed. It is possible for the user to identify which portion of the entire 3D object corresponds to the portion included in the currently displayed captured image of the 3D object more easily by displaying such a bird's-eye view image.

<Display of overlap region>

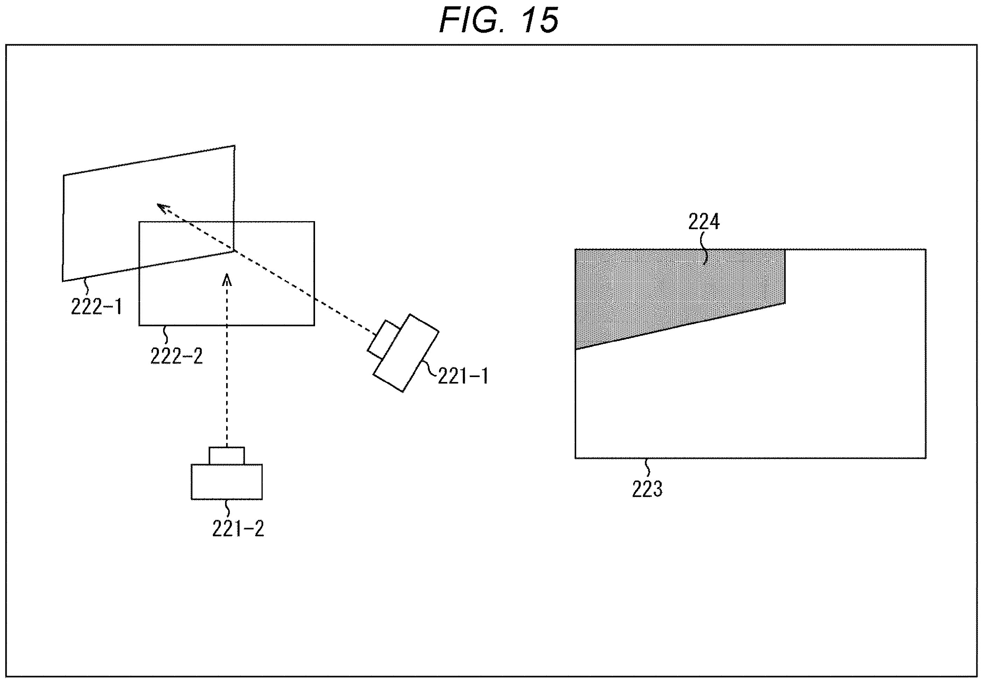

Furthermore, the guidance information may include information indicating an overlap region where the respective imaging ranges of a plurality of second captured images overlap. For example, in the imaging guidance output processing for second 3D modeling 105, guidance information including information indicating an overlap region where the respective imaging ranges of the plurality of second imaging overlap may be generated, and an image indicating the overlap region may be displayed as the guidance information. For example, in a case where the second imaging unit is in the position and orientation of a camera 221-1 on the left side of Fig. 15, it is assumed that its imaging range is an imaging range 222-1. Furthermore, in a case where the second imaging unit is in the position and orientation of a camera 221-2, it is assumed that its imaging range is an imaging range 222-2. In this case, the imaging range 222-1 and the imaging range 222-2 overlap each other. When there is such a region where the respective imaging ranges of the plurality of second captured images overlap, it is possible to detect the corresponding point between the two images. That is, when there is an appropriate overlap region between the plurality of second captured images, it is possible to generate accurate second 3D data in the second 3D modeling processing (suppress a decrease in the accuracy of the second 3D data).

It is therefore desirable to generate the second captured image (perform the second imaging) so that an appropriate overlap region is formed between the plurality of second captured images. As described above, since the image indicating such an overlap region is displayed on the monitor as the guidance information, the user or the like who operates the second imaging unit can determine the position and orientation of the second imaging while taking the overlap region into consideration on the basis of the guidance information. That is, the user or the like can more easily perform the second imaging in a position and orientation where an appropriate overlap region is formed between the plurality of second captured images. That is, the user or the like can more easily perform the second imaging in an appropriate position and orientation.

Note that the image indicating the overlap region may indicate the overlap region in any manner. For example, the overlap region may be indicated by a color, density, pattern, design, letter, symbol, figure, or the like. For example, the overlap region may be highlighted compared to other regions (made subjectively more noticeable than other regions).

Furthermore, the overlap region may be an overlap region between the current angle of view of the second imaging unit and the imaging range of the second captured images obtained so far. That is, an image indicating an overlap region between the second captured images obtained so far and the second captured image to be generated may be displayed as the guidance information. For example, in the imaging guidance output processing for second 3D modeling 105, guidance information including information indicating the overlap region between the angle of view of the second imaging unit and the imaging range of the second captured images obtained so far may be generated on the basis of the current position and orientation of the second imaging unit, and an image indicating the overlap region may be displayed on the monitor as the guidance information. For example, in Fig. 15, it is assumed that the second imaging unit is at the position of the camera 221-2 and is oriented to image the imaging range 222-2. In this case, an image 223 indicating an overlap region 224 within the imaging range 222-2 may be generated and displayed as the guidance information.

By doing so, it is possible to display the overlap region in a state based on the current position and orientation of the second imaging unit. It is therefore possible for the user or the like who operates the second imaging unit to identify how the imaging range of the second captured images obtained so far overlaps the imaging range of the second captured image obtained by performing the second imaging in the current position and orientation more easily on the basis of the guidance information. That is, the user or the like can more easily perform the second imaging to appropriately overlap the imaging range of the second captured images obtained so far. That is, the user or the like can more easily perform the second imaging in an appropriate position and orientation.

Furthermore, the guidance information (image indicating an overlap region where the respective imaging ranges of the second captured images overlap, or an overlap region where the current angle of view of the second imaging unit and the imaging range of the second captured images obtained so far overlap) may be superimposed on the captured image generated by the second imaging unit for display. For example, the image 223 (image indicating the overlap region where the current angle of view of the second imaging unit and the imaging range of the second captured images obtained so far overlap) illustrated in Fig. 15 may be superimposed on the captured image generated by the second imaging unit with the current angle of view for display.

By doing so, it is possible to superimpose the captured image and the guidance information having the same angle of view (image indicating the overlap region where the current angle of view of the second imaging unit and the imaging range of the second captured images obtained so far overlap) for display on the monitor. The user can cause, on the basis of such a display, the 3D object in the real space to correspond to the overlap region more easily. It is therefore possible for the user to identify the position and orientation appropriate for the second imaging more easily.

Note that an image indicating an overlap rate indicating the proportion of the overlap region within the angle of view may be further displayed. The overlap rate may be represented by, for example, a numerical value, or may be represented by, for example, a color, density, pattern, or the like. Such a display allows the user to identify how much overlap occurs more intuitively.

<Display of imaging assist image>

Furthermore, an imaging assist image used to assist in the second imaging may be included in the guidance information. For example, in the imaging guidance output processing for second 3D modeling 105, guidance information including the imaging assist image used to assist in the second imaging may be generated, and the imaging assist image may be displayed as the guidance information. The content of the imaging assist image may be of any kind.

For example, recommended imaging position and orientation guidance indicating a recommended imaging position and orientation that are a recommended position and orientation of the second imaging may be included in the imaging assist image. For example, in the imaging guidance output processing for second 3D modeling 105, the recommended imaging position and orientation that is the recommended position and orientation of the second imaging may be derived on the basis of the scoring result, and the recommended imaging position and orientation guidance indicating the recommended imaging position and orientation may be displayed as the guidance information (imaging assist image).

For example, in a case where the current position and orientation of the second imaging unit are the same as the recommended imaging position and orientation, an image indicating the state may be displayed as the recommended imaging position and orientation guidance. That is, for example, in a case where the user or the like moves the second imaging unit so that the current position and orientation match the recommended imaging position and orientation, the user or the like may be notified of the state. This notification method may be any method. For example, when the current position and orientation of the second imaging unit match the recommended imaging position and orientation, a completely different image such as a white image may be displayed.

Furthermore, instead of such an image, the current position and orientation of the second imaging unit may be indicated as the recommended imaging position and orientation by a letter, pattern, symbol, or the like. The user or the like who operates the second imaging unit can easily identify that the current position and orientation of the second imaging unit match the recommended imaging position and orientation on the basis of such a display (recommended imaging position and orientation guidance). It is therefore possible for the user or the like to perform the second imaging in an appropriate position and orientation more easily.

Furthermore, an image indicating a relative position and orientation of the recommended imaging position and orientation relative to the second imaging unit may be displayed as the recommended imaging position and orientation guidance. That is, the direction and distance of the recommended imaging position and orientation relative to the current position and orientation of the second imaging unit, and the like may be indicated by, for example, a letter, pattern, symbol, or the like. On the basis of such a display, the user or the like who operates the second imaging unit can move the second imaging unit toward the recommended imaging position and orientation more easily even if the current position and orientation of the second imaging unit does not match the recommended imaging position and orientation. It is therefore possible for the user or the like to perform the second imaging in an appropriate position and orientation more easily.

Note that the recommended imaging position and orientation guidance may be superimposed on the captured image generated by the second imaging unit for display. Such a display allows the user to cause the 3D object in the real space to correspond to the recommended imaging position and orientation guidance more easily. It is therefore possible for the user to identify the position and orientation appropriate for the second imaging more easily.

<Imaging guidance based on complexity of subject>

That is, the appropriate distance from the 3D object as the position of the second imaging depends on the three-dimensional shape of the 3D object. Therefore, the distance from the 3D object (subject) may be included in the recommended imaging position and orientation of the second imaging derived in the imaging guidance output processing for second 3D modeling 105. Then, when the recommended imaging position and orientation of the second imaging is derived in the imaging guidance output processing for second 3D modeling 105, the distance from the 3D object may be derived on the basis of the complexity of the three-dimensional shape of the 3D object.

The method for deriving the complexity of the three-dimensional shape of the 3D object may be any method, and may be, for example, the method described above in <2. Imaging control>. Furthermore, the method for deriving the distance from the 3D object (recommended imaging position and orientation) based on the complexity of the three-dimensional shape of the 3D object may be any method. For example, as the three-dimensional shape of the 3D object is more complicated, a position closer to the 3D object may be set as the recommended imaging position and orientation. Furthermore, as the three-dimensional shape of the 3D object is simpler, a position farther from the 3D object may be set as the recommended imaging position and orientation.

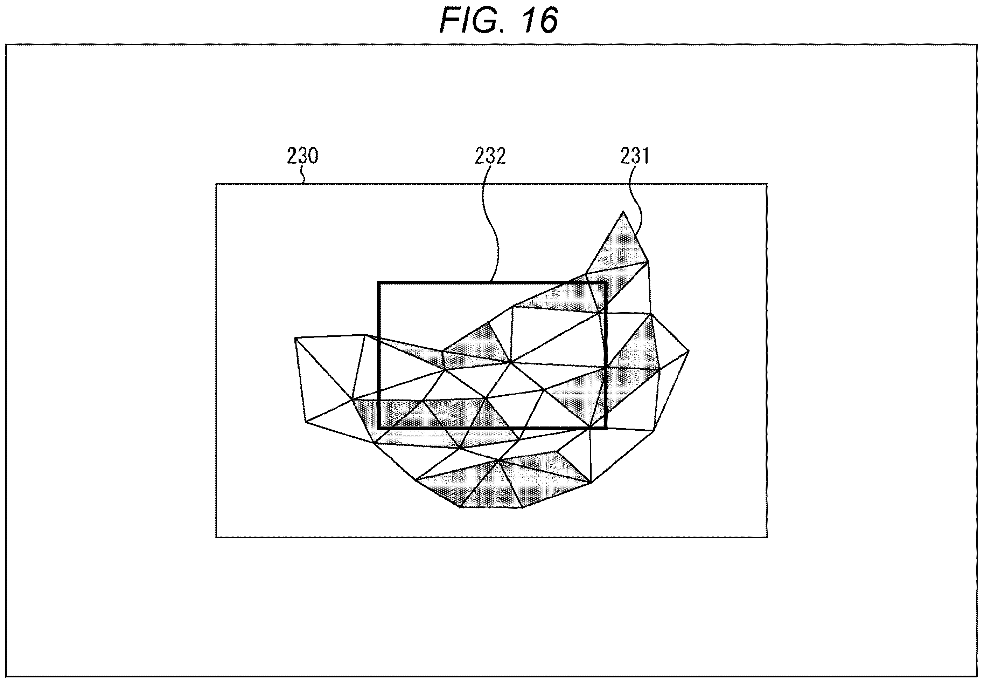

Furthermore, in the guidance information displayed on the monitor, a detection frame may also be displayed as illustrated in Fig. 16. In Fig. 16, a display image 230 is guidance information displayed on the monitor by the imaging guidance output processing for second 3D modeling 105. In the display image 230, scored first 3D data 231 and a detection frame 232 are displayed. Displaying the detection frame 232 as described above allows the user to perform an operation to bring the second imaging unit closer to the portion of interest of the 3D object (subject) or separate the second imaging unit from the portion of interest easily on the basis of the complexity of the three-dimensional shape of the 3D object. It goes without saying that the detection frame need not necessarily be displayed.

For example, the captured image generated by the second imaging unit may be displayed on the monitor, the detection frame and the first 3D data corresponding to the 3D object (subject) may be superimposed on the captured image for display as the guidance information, and the portion of the first 3D data (3D object) to be imaged may be indicated. Then, to ensure that the second imaging unit is in a position and orientation appropriate for performing the second imaging, the user may move the second imaging unit to align the portion of the first 3D data to be imaged with the detection frame in the display.

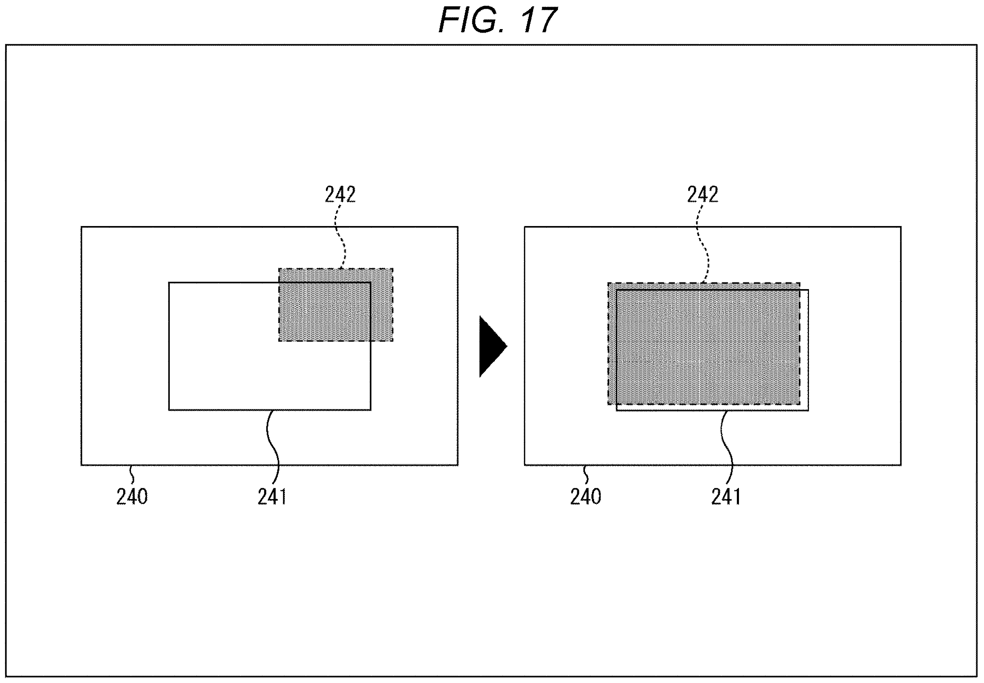

For example, as illustrated in Figs. 17 to 19, with a display image 240 displayed on the monitor, a detection frame 241 and a portion 242 of the 3D object to be imaged derived on the basis of the first 3D data may be displayed in the display image 240. Then, to ensure that the second imaging unit is in a position and orientation more appropriate for performing the second imaging, the user may move the second imaging unit to bring the portion 242 to be imaged closer to (ideally align the portion 242 with) the detection frame 241 in the display image 240.

For example, in the left case in Fig. 17, the portion 242 to be imaged is displayed smaller than the detection frame 241. In that case, to align the display of the portion 242 to be imaged with (or approximate the portion 242 to) the detection frame 241 as illustrated on the right side of Fig. 17, the user brings the second imaging unit closer to the 3D object to make the portion 242 appear larger. When the second imaging unit is moved as described above, the second imaging unit is in a position and orientation more appropriate for performing the second imaging.

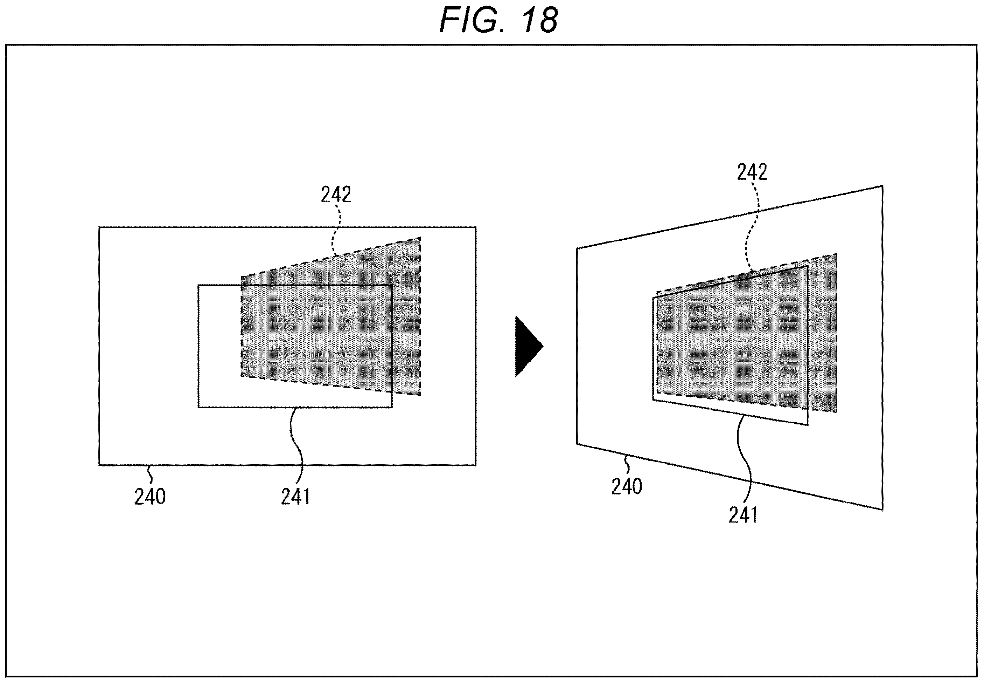

Furthermore, in a case of the left example in Fig. 18, the imaging direction and the direction of the normal line to the portion 242 to be imaged are misaligned (the portion 242 to be imaged and the detection frame 241 (imaging surface) are not facing each other directly). In that case, the user adjusts the direction of the second imaging unit (that is, the imaging direction) or the like to cause the portion 242 to be imaged to directly face (more directly face) the detection frame 241 as illustrated on the right side of Fig. 18. When the second imaging unit is moved as described above, the second imaging unit is in a position and orientation more appropriate for performing the second imaging.

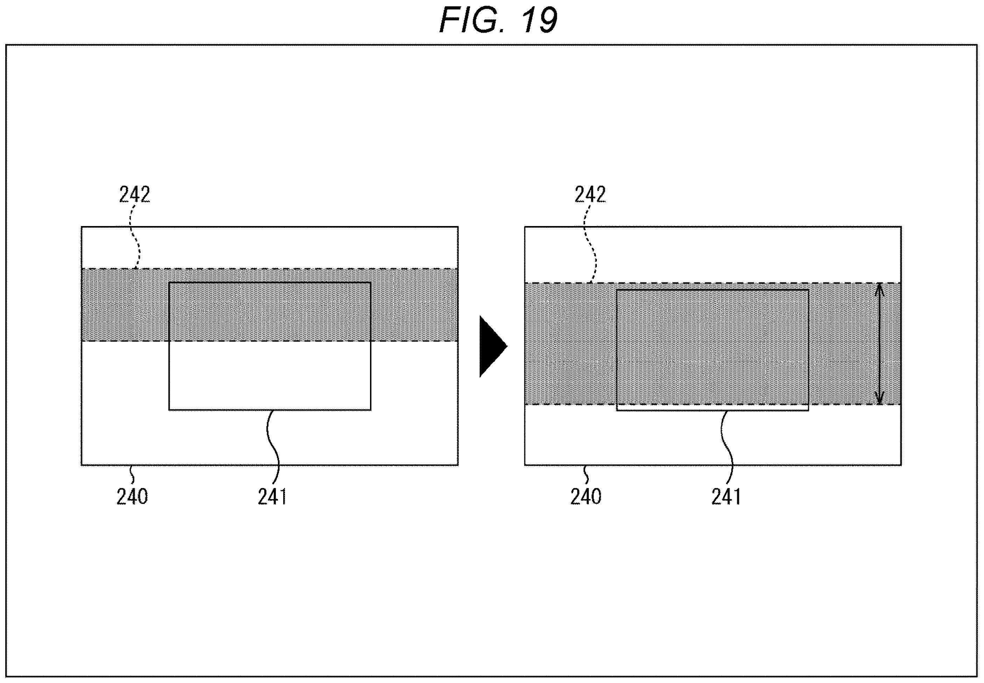

Furthermore, in a case of the left example in Fig. 19, the portion 242 to be imaged is different in height from the detection frame 241. In that case, the user adjusts the distance between the second imaging unit and the 3D object or the like to match (or approximate) the height of the portion 242 to be imaged to the height of the detection frame 241 as illustrated on the right side of Fig. 19. When the second imaging unit is moved as described above, the second imaging unit is in a position and orientation more appropriate for performing the second imaging.

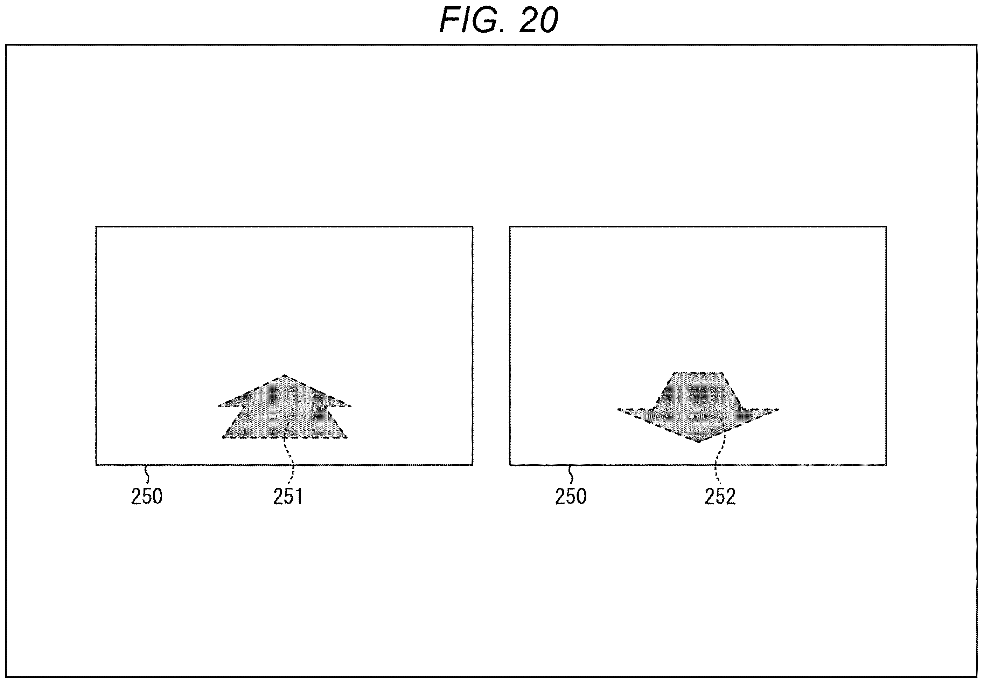

Furthermore, as in the example in Fig. 20, an arrow indicating a recommended movement direction of the second imaging unit (movement direction toward the recommended imaging position and orientation) may be displayed as the guidance display. For example, in the left case in Fig. 20, a display image 250 for displaying the guidance display on the monitor is displayed, and an arrow 251 is displayed as the guidance display in the display image 250. The arrow 251 is an arrow pointing toward the far side (pointing forward) in the drawing, and guides the second imaging unit to move forward (move toward the 3D object (subject)). Furthermore, in a case of the right example in Fig. 20, an arrow 252 is displayed as the guidance display in the display image 250 displayed on the monitor. The arrow 252 is an arrow pointing toward the near side (pointing backward) in the drawing, and guides the second imaging unit to move backward (move away from the 3D object (subject)). When the user moves the second imaging unit in accordance with these arrows, the second imaging unit can be brought closer to the recommended imaging position and orientation.

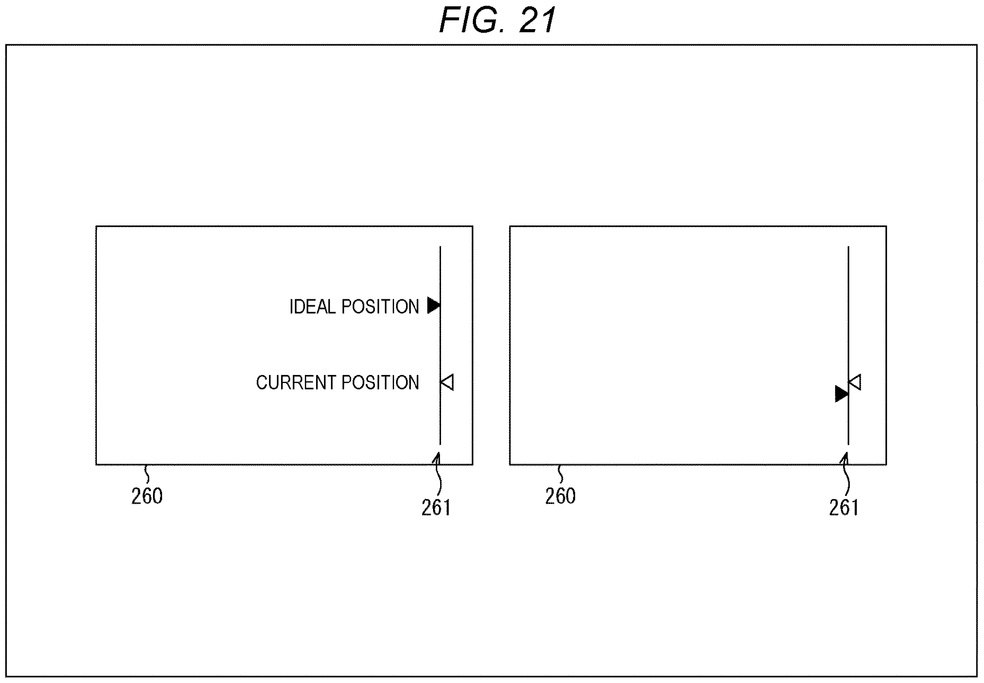

Furthermore, as in the example in Fig. 21, an indicator indicating the positional relationship in the depth direction between the current position of the second imaging unit and the recommended imaging position and orientation may be displayed. For example, in the left case in Fig. 21, a display image 260 for displaying the guidance display on the monitor is displayed, and an indicator 261 is displayed as the guidance display in the display image 260. The indicator 261 indicates the positional relationship in the depth direction between the current position of the second imaging unit and the recommended imaging position and orientation. In a case of the left example in Fig. 21, the indicator 261 indicates that the position of the recommended imaging position and orientation is misaligned with (in front of) the current position of the second imaging unit, and guides the second imaging unit to move forward (move toward the 3D object (subject)). Furthermore, in a case of the right example in Fig. 21, the indicator 261 indicates that the current position of the second imaging unit and the position of the recommended imaging position and orientation are approximately aligned (approximate). That is, in this case, the indicator 261 guides that there is little need to move the second imaging unit. When the user moves the second imaging unit in accordance with the indicator 261, the second imaging unit can be brought closer to the recommended imaging position and orientation.

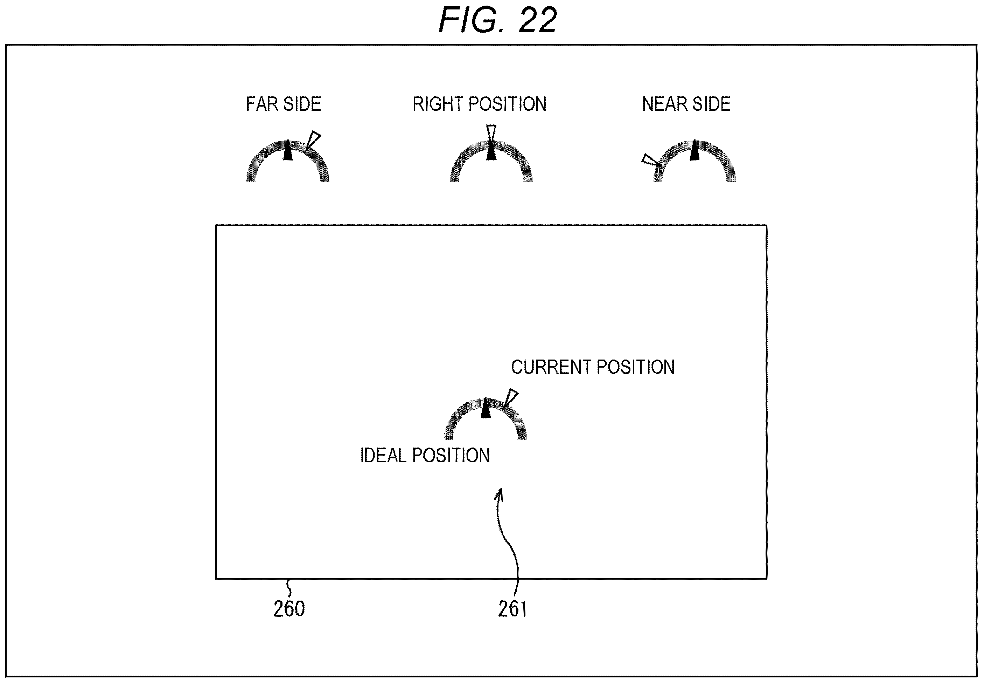

Note that the indicator 261 may have any design, and is not limited to the example in Fig. 21. For example, such a design as illustrated in Fig. 22 may be used. In a case of this example, the display changes as illustrated on the upper side in the drawing in a manner that depends on the positional relationship in the depth direction between the current position of the second imaging unit and the recommended imaging position and orientation.

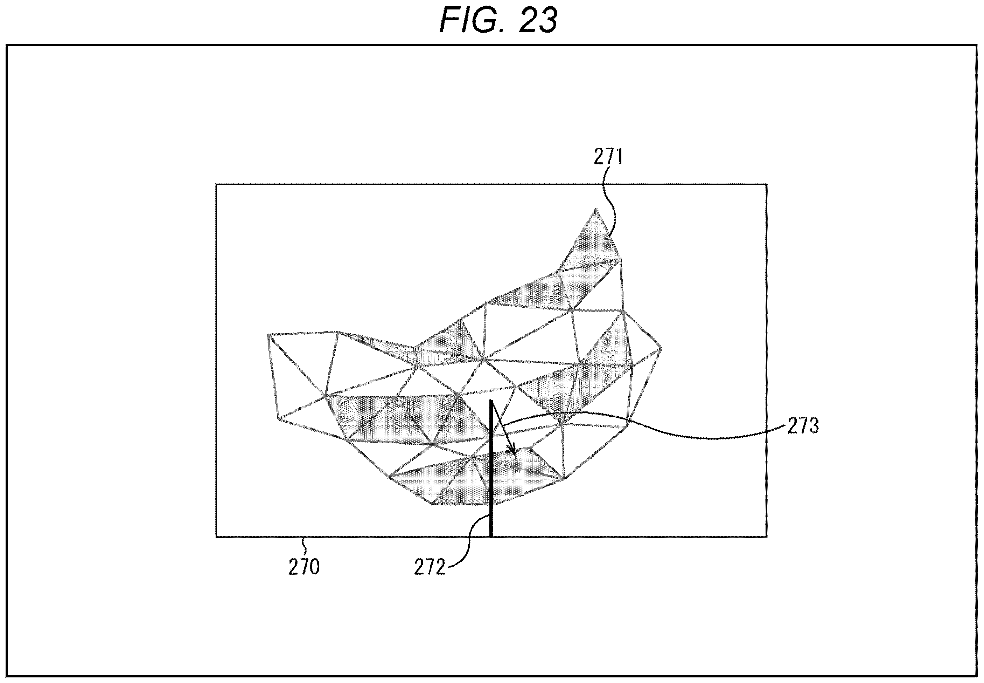

Furthermore, as in the example in Fig. 23, the distance between the portion of the first 3D data (3D object) to be imaged and the second imaging unit and the degree of alignment (orientation relationship) may be displayed as the guidance information. For example, in a case of Fig. 23, a display image 270 for displaying the guidance display on the monitor is displayed, and scored first 3D data 271 is displayed in the display image 270. Furthermore, in the display image 270, a line (or a line in accordance therewith) 272 connecting the optical axis of the second imaging unit (the center of the pixel region of the second imaging unit) and the center of the portion of the first 3D data (3D object) 271 to be imaged is displayed as the guidance display. Moreover, in the display image 270, an arrow 273 indicating the orientation of the subject surface in the center region of the portion of the first 3D data (3D object) 271 to be imaged is displayed as the guidance display.

In the display image 270, the line 272 and the arrow 273 indicate the positional relationship between the current position of the second imaging unit and the recommended imaging position and orientation, and the distance between the portion of the first 3D data (3D object) to be imaged and the second imaging unit and the degree of alignment (orientation relationship).

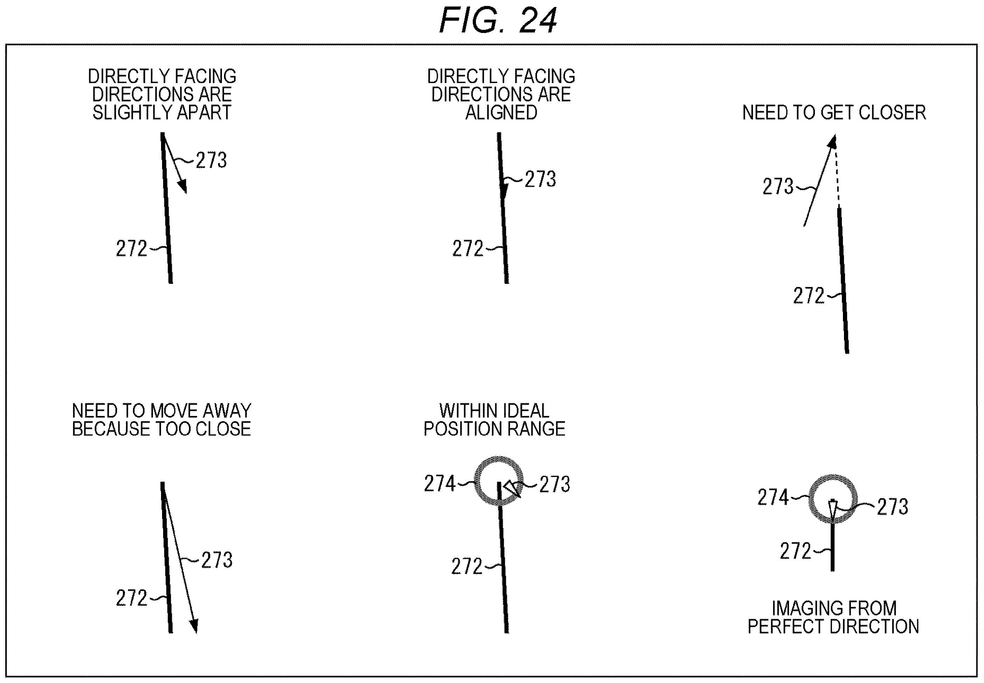

For example, as illustrated on the left side of the upper section of Fig. 24, in a case where the directions of the line 272 and the arrow 273 are different from each other, it indicates that (the direction of the normal line to) the surface of the portion of the first 3D data (3D object) to be imaged is misaligned with (not directly facing) the imaging surface (the orientation of the second imaging unit) by the difference (angle).

On the other hand, as illustrated in the center of the upper section of Fig. 24, in a case where the directions of the line 272 and the arrow 273 align with each other, it indicates that (the direction of the normal line to) the surface of the portion of the first 3D data (3D object) to be imaged directly faces the imaging surface (the orientation of the second imaging unit).

Furthermore, as illustrated on the right side of the upper section of Fig. 24, in a case where the line 272 and the arrow 273 are separated, it indicates that the distance between the portion of the first 3D data (3D object) to be imaged and the second imaging unit is longer than the distance appropriate for the second imaging. That is, in this case, guidance to move the second imaging unit toward the first 3D data (3D object) is provided.

Furthermore, as illustrated on left side of the lower section of Fig. 24, in a case where the line 272 is shorter than the arrow 273, it indicates that the distance between the portion of the first 3D data (3D object) to be imaged and the second imaging unit is shorter than the distance appropriate for the second imaging. That is, in this case, guidance to move the second imaging unit away from the first 3D data (3D object) is provided.

Furthermore, as illustrated in the center of the lower section of Fig. 24, in a case where a circle 274 is displayed at the connection portion between the line 272 and the arrow 273, it indicates that the distance between the portion of the first 3D data (3D object) to be imaged and the second imaging unit approximates the distance appropriate for the second imaging. That is, in this case, guidance not to move the second imaging unit in the depth direction is provided.

Furthermore, as illustrated on the right side of the lower section of Fig. 24, in a case where the circle 274 is displayed at the connection portion between the line 272 and the arrow 273, and the directions of the line 272 and the arrow 273 align with each other, it indicates that the distance between the portion of the first 3D data (3D object) to be imaged and the second imaging unit approximates the distance appropriate for the second imaging, and (the direction of the normal line to) the surface of the portion of the first 3D data (3D object) to be imaged directly faces the imaging surface (orientation of the second imaging unit). That is, in this case, guidance indicating that the current position and orientation of the second imaging unit align with or approximate the recommended imaging position and orientation is provided.

It is possible for the user to bring, by moving the second imaging unit in accordance with such guidance information, the second imaging unit closer to the recommended imaging position and orientation more easily.

Note that, since the orientation information regarding the second imaging unit (first imaging unit) is derived by SLAM or the like, the distance between the second imaging unit and the subject can be easily derived. It is therefore possible to update the display example described above in real time (instantaneously).

<Real-time processing>

Note that the first 3D data generation processing 101 (first imaging and first 3D modeling processing), the scoring processing 102, and the imaging guidance output processing for second 3D modeling 105 in Fig. 4 may be performed in parallel. As described above in <2. Imaging control>, the 3D data of the portion of the 3D object subjected to the first imaging can be sequentially generated by the first 3D modeling processing. Furthermore, the first 3D data generation processing 101 and the scoring processing 102 can be performed in parallel.

Furthermore, in the imaging guidance output processing for second 3D modeling 105, each time the scoring result is obtained by the scoring processing 102 (before the scoring result of the entire 3D object is obtained), the guidance information for the second imaging may be generated and output on the basis of the obtained scoring result (the scoring result for the first 3D data corresponding to the portion of the 3D object). By doing so, it is possible to start the imaging guidance output processing for second 3D modeling 105 before the end of the scoring processing 102 (before the scoring result of the entire 3D object is obtained). That is, the scoring processing 102 and the imaging guidance output processing for second 3D modeling 105 can be performed in parallel.

It is possible to perform, by combining the methods described above, the first 3D data generation processing 101, the scoring processing 102, and the imaging guidance output processing for second 3D modeling 105 in parallel.

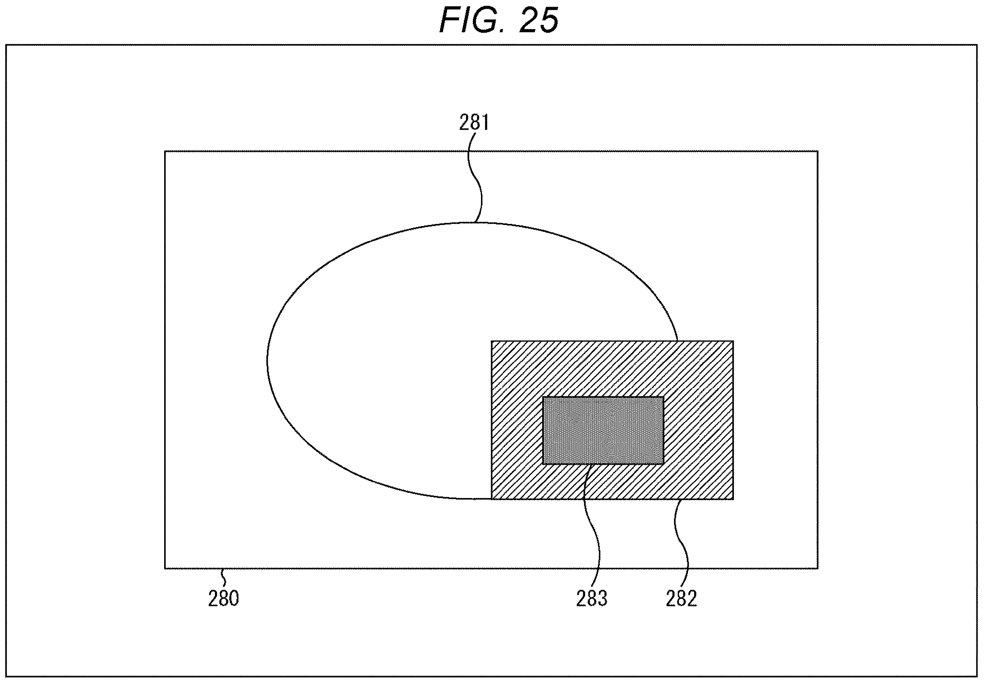

For example, as illustrated in Fig. 25, it is assumed that a display image 280 is displayed on the monitor and the captured image captured by the second imaging unit is displayed in the display image 280. In the captured image, a 3D object 281 appears as the subject. As described above, the first 3D data generation processing 101, the scoring processing 102, and the imaging guidance output processing for second 3D modeling 105 are performed in parallel so that the guidance information can be displayed in the display image 280 before the end of the first 3D data and scoring of the entire 3D object 281. In the display image 280 in Fig. 25, a hatched display 282 indicates a portion of the 3D object 281 of which the first 3D data has been generated. Furthermore, a gray display 283 indicates a portion where the second captured image is insufficient as a result of the scoring. It is possible to display, by performing the first 3D data generation processing 101, the scoring processing 102, and the imaging guidance output processing for second 3D modeling 105 in parallel, imaging guidance while performing the first imaging. It is therefore possible for the user to perform the second imaging in parallel (instantaneously) with the first imaging.

<Camera information>

Note that, also in a case where the imaging guidance output processing for second 3D modeling 105 is performed, similarly to the case described above in <2. Imaging control>, camera information regarding the second imaging unit may be generated in (the second imaging of) the second 3D data generation processing 104 and supplied to the scoring processing 102. Then, in the scoring processing 102, the scoring result may be generated by performing scoring on the basis of the camera information. Similarly to the case described above in <2. Imaging control>, the camera information may include any information.

<Example of configuration for performing processing>

Each processing in Fig. 4 described above may be performed by any device. For example, in the information processing device, the first 3D modeling processing of the first 3D data generation processing 101, the scoring processing 102, and the imaging guidance output processing for second 3D modeling 105 described above may be performed.

That is, an information processing device may include: a first 3D modeling processing unit that generates, on the basis of the first captured image generated by the first imaging of imaging the 3D object, the first three-dimensional shape information representing the three-dimensional shape of the 3D object; a scoring processing unit that uses the first three-dimensional shape information to evaluate the accuracy of the second three-dimensional shape information that can be generated using the second captured image generated by the second imaging performed so far, and generates a scoring result; and a guidance information output control unit that generates guidance information for the second imaging of imaging the 3D object on the basis of the scoring result and controls output of the guidance information. In this section, this information processing device is also referred to as a first information processing device.

Furthermore, an information processing method performed by the first information processing device may include: generating, on the basis of the first captured image generated by the first imaging of imaging the 3D object, the first three-dimensional shape information representing the three-dimensional shape of the 3D object; evaluating, using the first three-dimensional shape information, the accuracy of the second three-dimensional shape information that can be generated using the second captured image generated by the second imaging performed so far, and generating a scoring result; and generating guidance information for the second imaging of imaging the 3D object on the basis of the scoring result and controlling output of the guidance information.

By doing so, it is possible for the user to image the 3D object in a more appropriate position and orientation by performing the second imaging in accordance with the guidance information. That is, it is possible to perform the 3D modeling (second 3D modeling processing) using the captured image. It is therefore possible to generate more accurate 3D data while suppressing an increase in the load of the 3D modeling. That is, it is possible to perform the 3D modeling more easily.

Note that the guidance information output control unit may generate an image indicating the scoring result as the guidance information and display the image. Furthermore, the guidance information output control unit may generate an image indicating a scoring result within the angle of view of the second imaging unit on the basis of the position and orientation of the second imaging unit, and display the image. Furthermore, the guidance information output control unit may superimpose the captured image generated by the second imaging unit on the image indicating the scoring result within the angle of view of the second imaging unit for display. Furthermore, the guidance information output control unit may further display a bird's-eye view image indicating the scoring result of the entire 3D object.

Furthermore, the guidance information output control unit may generate an image indicating an overlap region where the imaging ranges of the plurality of second captured images overlap as the guidance information and display the image. Furthermore, the guidance information output control unit may generate an image indicating an overlap region where the current angle of view of the second imaging unit and the imaging range of the second captured images obtained so far overlap on the basis of the position and orientation of the second imaging unit, and display the image. Furthermore, the guidance information output control unit may superimpose the captured image generated by the second imaging unit on the image for display. Furthermore, the guidance information output control unit may further display an image indicating an overlap rate indicating a proportion of the overlap region within the current angle of view of the second imaging unit.

Furthermore, the guidance information output control unit may generate an imaging assist image used to assist in the second imaging as the guidance information and display the imaging assist image. Furthermore, the guidance information output control unit may derive a recommended imaging position and orientation that is a recommended position and orientation of the second imaging on the basis of the scoring result, and display recommended imaging position and orientation guidance indicating the recommended imaging position and orientation as the guidance information. Furthermore, in a case where the position and orientation of the second imaging unit are the same as the recommended imaging position and orientation, the guidance information output control unit may display an image indicating that the current position and orientation of the second imaging unit are the recommended imaging position and orientation as the recommended imaging position and orientation guidance. Furthermore, the guidance information output control unit may display an image indicating a relative position and orientation of the recommended imaging position and orientation relative to the second imaging unit as the recommended imaging position and orientation guidance. Furthermore, the guidance information output control unit may superimpose the captured image generated by the imaging unit that performs the second imaging on the recommended imaging position and orientation guidance for display.

Incidentally, in the first information processing device described above, the first three-dimensional shape information may have less information volume and be of less accuracy than the second three-dimensional shape information. Furthermore, the first 3D modeling processing unit of the first information processing device may include: an orientation information generation unit that generates orientation information indicating the position and orientation of the first imaging unit on the basis of the first captured image and the acceleration and angular velocity of the first imaging unit; and a three-dimensional shape generation unit that generates the first three-dimensional shape information on the basis of the orientation information and the depth of the 3D object. Note that, in this case, the first three-dimensional shape information may include a mesh representing the three-dimensional shape of the 3D object through vertexes and connections and a texture applied to the surface of the mesh.

Furthermore, in the first information processing device described above, the scoring processing unit may generate the scoring result for each local portion of the first three-dimensional shape information on the basis of the first three-dimensional shape information and the position and orientation of the second imaging performed so far. Furthermore, the first three-dimensional shape information may include a mesh indicating the three-dimensional shape of the 3D object through vertexes and connections and a texture applied to the surface of the mesh, and the scoring processing unit may generate the scoring result for each polygon of the mesh.

Furthermore, in the first information processing device, the second imaging of the second 3D data generation processing 104 described above may be further performed. The configuration of the first information processing device in that case is similar to the case described above in <2. Imaging control>. Furthermore, in the first information processing device, the second 3D modeling processing of the second 3D data generation processing 104 described above may be further performed. The configuration of the first information processing device in that case is also similar to the case described above in <2. Imaging control>.

Note that, as described above, the second imaging is performed by manual imaging. Therefore, the scoring processing unit of the first information processing device may generate the scoring result on the basis of the position and orientation of the second information processing device corresponding to the second imaging timing indicated by the imaging timing information indicating the second imaging timing. For example, the guidance information output control unit may obtain the orientation information regarding the second imaging unit at the imaging timing on the basis of the imaging timing information, and the scoring processing unit may calculate the score on the basis of the orientation information. By doing so, the orientation information regarding the manual imaging is reflected in the scoring result. The configuration of the first information processing device in this case is also similar to the case described above in <2. Imaging control>. However, the imaging timing information generated by the second imaging unit or the imaging timing information acquired by the communication unit is supplied to the guidance information output control unit. By doing so, it is possible to perform control so that the second imaging is performed in a more appropriate position and orientation on the basis of the imaging timing information.

Furthermore, in the first information processing device, as described above, the camera information regarding the second imaging unit may be reflected in the scoring processing 102. For example, the scoring processing unit of the first information processing device may generate the scoring result on the basis of the camera information. The configuration of the first information processing device in this case is also similar to the case described above in <2. Imaging control>. By doing so, it is possible to perform control so that the second imaging is performed in a more appropriate position and orientation on the basis of the camera information.

Incidentally, also in a case where the first information processing device performs the imaging guidance output processing for second 3D modeling 105, the second information processing device may perform the second imaging of the second 3D data generation processing 104 described above. The configuration of the second information processing device in that case is also similar to the case described above in <2. Imaging control>. Then, the second information processing device may further perform the second 3D modeling processing described above. The configuration of the second information processing device in that case is also similar to the case described above in <2. Imaging control>.

Furthermore, imaging timing information indicating the timing of the manual imaging may be generated in the second information processing device and supplied to the first information processing device. The configuration of the second information processing device in that case is also similar to the case described above in <2. Imaging control>.

Furthermore, the camera information regarding the second imaging unit may be reflected in the scoring processing 102. The configuration of the second information processing device in that case is also similar to the case described above in <2. Imaging control>.

<4. Combination>

<Combination of imaging control and guidance information output>

Note that, in Fig. 4, both the imaging control processing for second 3D modeling 103 and the imaging guidance output processing for second 3D modeling 105 may be performed. It is possible for the user to perform, by performing both the imaging control and the guidance information output, the second imaging in an appropriate position and orientation more easily.

For example, the first information processing device described above in <2. Imaging control> may further include a guidance information output control unit that generates guidance information for the second imaging of imaging the 3D object on the basis of the scoring result. In this case, the guidance information output control unit performs similar processing to the case described above in <3. Imaging guidance output>.

Furthermore, the first information processing device described above in <3. Imaging guidance output> may further include an imaging control unit that controls the second imaging of imaging the 3D object on the basis of the scoring result. In this case, the imaging control unit performs similar processing to the case described above in <2. Imaging control>.

<5. Calibration processing>

<Decrease in accuracy of navigation due to decrease in accuracy of orientation information>

In a case where imaging for obtaining a captured image to be used in 3D modeling such as real-time 3D modeling or photogrammetry is navigated (imaging control, imaging guidance, or both), there is a possibility that the lower the accuracy of the position and orientation of an imaging unit that performs the imaging, the lower the accuracy of the navigation.

For example, as described above in <2. Imaging control>, <3. Imaging guidance output>, and the like, in a case where 3D modeling is performed twice and imaging (second imaging) for the second 3D modeling using the first 3D modeling result is navigated (imaging control, imaging guidance, or both), there is a possibility that it is difficult to perform navigation with sufficiently high accuracy unless the position and orientation of the imaging unit that performs the imaging for each 3D modeling are obtained with sufficient accuracy. A decrease in the accuracy of the navigation of the second imaging makes it difficult to obtain the captured image (second captured image) in an appropriate position and orientation in the second imaging, and there is a possibility that the accuracy of 3D data obtained by the second 3D modeling decreases. In other words, when the second imaging is performed in accordance with the low-accuracy navigation, there is a possibility that the number of second captured images (also referred to as appropriate second captured images) captured in an appropriate position and orientation becomes insufficient. Therefore, to obtain a sufficient number of appropriate second captured images, it is necessary to increase the frequency of the second imaging. Therefore, not only does the user's workload increases, but the number of captured images also increases unnecessarily, and there is a possibility that the load (processing volume, processing time, or the like) of the 3D modeling processing unnecessarily increases.

For example, in a case where the first orientation information indicating the position and orientation of the first imaging unit is derived in the first 3D modeling as in the real-time 3D modeling described above in <2. Imaging control>, <3. Imaging guidance output>, and the like, the above-described first orientation information can be used for the navigation of the second imaging. That is, it is possible to navigate the second imaging by applying the first orientation information as information indicating the position and orientation of the second imaging unit that performs the second imaging. However, for example, in a case where the first imaging unit that performs the first imaging for the first 3D modeling and the second imaging unit that performs the second imaging are not sufficiently close to each other (in a case where the first imaging unit and the second imaging unit are separated by at least a certain distance), when the first orientation information is applied as the position and orientation of the second imaging unit, there is a possibility that the accuracy of the position and orientation of the second imaging unit decreases and the accuracy of the navigation of the second imaging decreases.

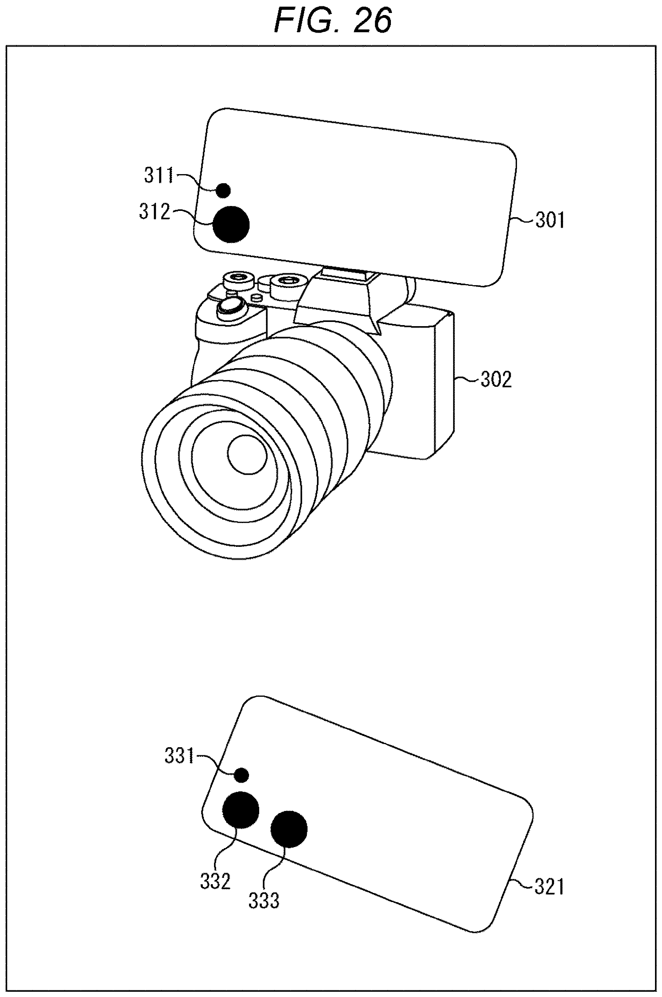

For example, it is assumed that such 3D modeling and navigation are performed using a smartphone 301 and an interchangeable lens camera (ILC) 302 illustrated in Fig. 26. The smartphone 301 is an imaging communication device having an imaging function, a communication function, and an information processing function, and includes a depth sensor 311, an imaging unit 312, and an inertial measurement unit (IMU) (not illustrated). Furthermore, the ILC 302 is an imaging device with an interchangeable optical system such as a lens. The smartphone 301 and the ILC 302 are communicatively connected to each other, and can exchange information through the communication. Furthermore, the smartphone 301 may be installed in a predetermined position on the ILC 302. In other words, the smartphone 301 is detachable from the ILC 302. Furthermore, it is assumed that, with the smartphone 301 installed on the ILC, the position and orientation of the smartphone 301 relative to the ILC 302 are variable. That is, it is assumed that the position and orientation of the smartphone 301 relative to the ILC 302 can be adjusted. Furthermore, the ILC 302 (or the smartphone 301) is equipped with a component to stabilize the position and orientation of the smartphone 301 relative to the ILC 302, thereby preventing the position and orientation of the smartphone 301 relative to the ILC 302 from changing.

Furthermore, it is assumed that the smartphone 301 performs processing such as the first imaging with the smartphone 301 installed on the ILC 302. Furthermore, the ILC 302 performs the second imaging or the like in accordance with the navigation of the second imaging. Note that the navigation of the second imaging using the first 3D modeling or the 3D model obtained by the first 3D modeling may be performed by any device. For example, these processes may be performed in the smartphone 301, may be performed in the ILC 302, or may be performed in another device.

In such a case, there is a possibility that the first imaging unit (imaging unit 312) and the second imaging unit (imaging unit of the ILC 302) are separated (not sufficiently close). Furthermore, there is a possibility that the first imaging unit and the second imaging unit are different in orientation from each other. Therefore, when the first orientation information indicating the position and the orientation of the first imaging unit derived in the first 3D modeling is applied as it is as the position and orientation of the second imaging unit, there is a possibility that a misalignment occurs in the position and orientation of the second imaging unit. Therefore, when the second imaging is navigated using the position and orientation of the second imaging unit (that is, the first orientation information), there is a possibility that a misalignment occurs in the position and orientation for the navigation, and the accuracy of the navigation decreases.

<Application of calibration processing>

Therefore, for example, as illustrated in Fig. 4, calibration processing 106 is performed to calibrate the second orientation information indicating the position and orientation of the second imaging unit or the like. In the calibration processing 106, the second orientation information is calibrated on the basis of the first captured image, the first orientation information, and the second captured image. In <5. Calibration processing>, the first captured image indicates a captured image generated by the first imaging unit that performs the first imaging. Furthermore, the second captured image indicates a captured image generated by the second imaging unit that performs the second imaging. The first imaging is imaging for generating captured images used in the first 3D modeling, and the second imaging is imaging for generating captured images used in the second 3D modeling. The first orientation information indicates the position and orientation of the first imaging unit. The first orientation information may be generated, for example, in the first 3D modeling.

The calibration processing 106 generates calibration information as a calibration result and supplies the configuration information to the imaging control processing for second 3D modeling 103 and the imaging guidance output processing for second 3D modeling 105. In the imaging control processing for second 3D modeling 103 and the imaging guidance output processing for second 3D modeling 105, imaging control and imaging guidance are performed using the calibration information.

By doing so, it is possible to suppress a decrease in the accuracy of the position and orientation of the second imaging unit. It is therefore possible to suppress a decrease in the accuracy of the navigation of the second imaging (that is, the navigation of the imaging for 3D modeling).

For example, if the position and orientation relationship between the first imaging unit and the second imaging unit is known, the second orientation information may be calibrated on the basis of the relationship or the like. For example, in a case of Fig. 26, the second orientation information (the position and orientation of the imaging unit of the ILC 302) may be calibrated on the basis of the position and orientation relationship between the depth sensor 311 and the imaging unit 312 (first imaging unit) and the position and orientation relationship between the imaging unit 312 and the imaging unit (second imaging unit) of the ILC 302. Then, the second imaging may be navigated using the calibrated second orientation information.

Note that there may be a case where the position and orientation relationship between the first imaging unit and the second imaging unit is unknown. For example, in the case of Fig. 26, when the smartphone 301 is installed on the ILC 302, there may be a case where the position and orientation of (the imaging unit 312 of) the smartphone 301 relative to (the imaging unit of) the ILC 302 are freely determined (the position and orientation cannot be determined). Furthermore, there may be a case where after the smartphone 301 is installed on the ILC 302, the position and orientation of (the imaging unit 312 of) the smartphone 301 relative to (the imaging unit of) the ILC 302 changes. It goes without saying that there may be a case where the position and orientation relationship between the first imaging unit and the second imaging unit cannot be determined (that is, the relationship is unknown) due to any other reason.

Furthermore, it is also possible to perform the above-described 3D modeling and navigation in the smartphone 321 illustrated in Fig. 26. The smartphone 321 includes a depth sensor 331, an imaging unit 332, an imaging unit 333, and an inertial measurement unit (IMU) (not illustrated). The imaging unit 332 is the first imaging unit that performs the first imaging. The imaging unit 333 is the second imaging unit that performs the second imaging. As described above, it is also possible to perform the above-described 3D modeling and navigation in a single information processing device (imaging communication device). Even with such a configuration, there may be a case where the position and orientation relationship between the first imaging unit and the second imaging unit is unknown. For example, there may be a case where the relationship changes due to the installation of a movable part or the like. Furthermore, there may be a case where the relationship changes due to aging or the like.

As in these examples, in a case where the position and orientation relationship between the first imaging unit and the second imaging unit is unknown, it is difficult to guarantee the accuracy of the position and orientation of the second imaging unit when the first orientation information is applied as the position and orientation of the second imaging unit. That is, there is a possibility that the accuracy of the position and orientation of the second imaging unit decreases. Therefore, there is a possibility that the accuracy of the navigation of the second imaging decreases. Furthermore, in a case where the position and orientation relationship between the first imaging unit and the second imaging unit is unknown, it is difficult to calibrate the second orientation information on the basis of the relationship as in a case where the relationship is known.

Therefore, for example, the second orientation information may be calibrated by performing the calibration processing 106 as follows.

<Example of calibration processing>

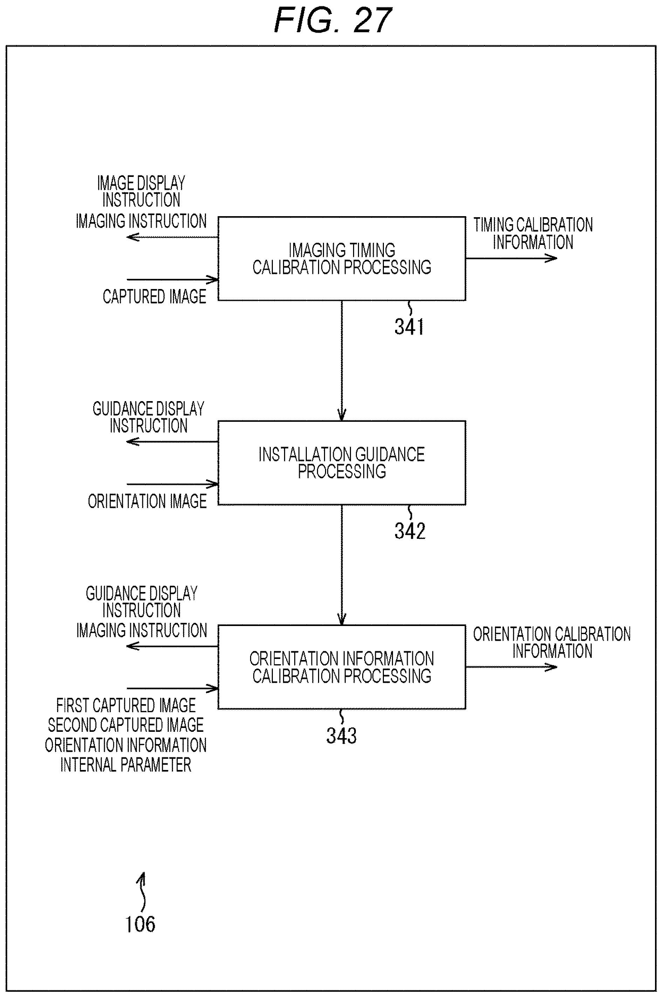

In the calibration processing 106, for example, as illustrated in Fig. 27, imaging timing calibration processing 341, installation guidance processing 342, and orientation information calibration processing 343 may be performed. For example, the imaging timing calibration processing 341, the installation guidance processing 342, and the orientation information calibration processing 343 may be performed in this order. Even in a case where the position and orientation relationship between the first imaging unit and the second imaging unit is unknown, it is possible to calibrate the second orientation information by performing each processing as described above. Note that the installation guidance processing 342 may be omitted. Furthermore, the imaging timing calibration processing 341 or the orientation information calibration processing 343 may be omitted.

<Imaging timing calibration processing>

The imaging timing calibration processing 341 is processing of calibrating the imaging timing of the second imaging unit. In general, the timing (imaging timing) at which the imaging unit actually images the subject has a predetermined delay (time lag) with respect to the timing (instruction timing) at which the imaging is instructed. For example, it is assumed that the second imaging is instructed in the smartphone 301 illustrated in Fig. 26 and the second imaging based on the instruction is performed in the ILC 302. Particularly in such a case, latency (delay time) of communication between the smartphone 301 and the ILC 302 is added, and there is a possibility that a time lag from the instruction timing to the imaging timing increases.

When such a time lag from the instruction timing to the imaging timing increases, even if the imaging instruction is issued at the timing when the second imaging unit is in the appropriate position, there is a possibility that the second imaging unit moves from the appropriate position before the second imaging is performed. Therefore, there is a possibility that the accuracy of the navigation of the second imaging decreases.

Therefore, in the imaging timing calibration processing 341, the imaging timing of the second imaging unit is calibrated, and the calibration result (imaging timing calibration information) is supplied to the imaging control processing for second 3D modeling 103. In the imaging control processing for second 3D modeling 103, when the second imaging is controlled, the calibration result is reflected in the imaging timing, and the second imaging is instructed at the instruction timing that makes the imaging timing reflecting the calibration result appropriate.

By doing so, it is possible to control (instruct) the second imaging so that the second imaging is performed at the appropriate timing (in a desired position). It is therefore possible to suppress a decrease in the accuracy of the navigation of the second imaging.

The method for calibrating the imaging timing in the imaging timing calibration processing 341 may be any method. For example, a measurement image that changes over time (for example, frame by frame) may be displayed on the display unit, the measurement image displayed on the display unit may be captured by the second imaging unit, and the imaging timing may be calibrated on the basis of the obtained second captured image.

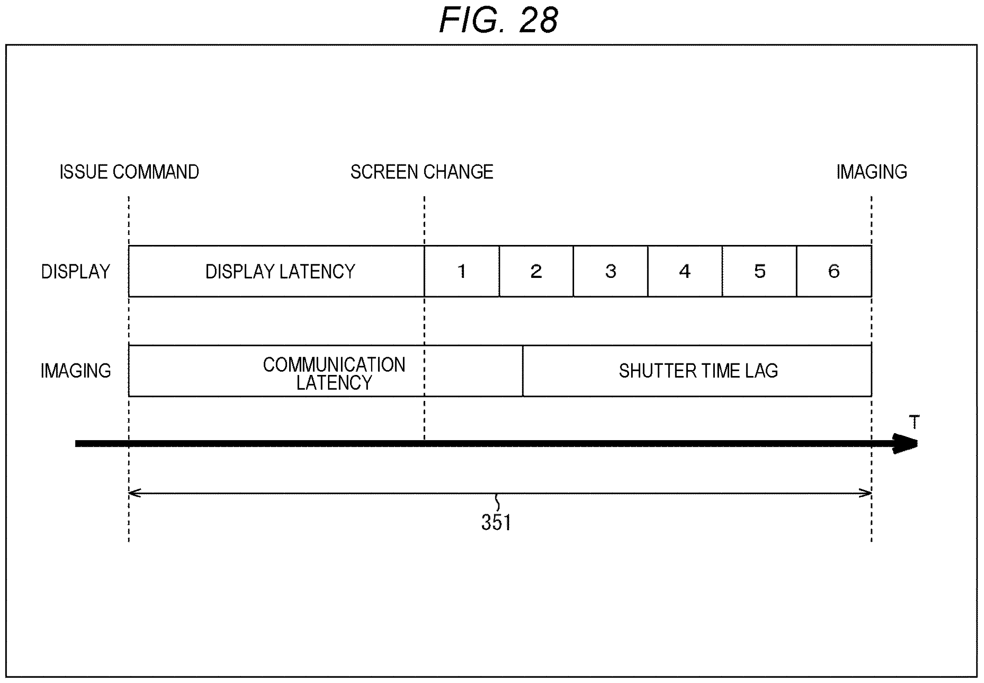

For example, when an instruction command to display the measurement image on the display unit is issued, as illustrated in the section "display" of the timing chart illustrated in Fig. 28, after a predetermined time (display latency) has elapsed since the command issuance timing, the display of the measurement image is started. The display latency (delay time) is assumed to be known. Then, the image changes over time (for example, frame by frame).

An imaging instruction is issued simultaneously with the display instruction (at the same instruction timing). The second imaging unit captures the measurement image displayed on the display unit on the basis of the instruction to generate the second captured image. As described above, the imaging timing is delayed by a predetermined time from the command issuance timing due to communication latency, a shutter time lag, or the like, as illustrated in the section "Imaging" of the timing chart in Fig. 28. In the example in Fig. 28, a period indicated by a double-headed arrow 351 is a time lag from the instruction timing to the imaging timing. The time lag can be obtained on the basis of what kind of image the measurement image included in the obtained second captured image is.

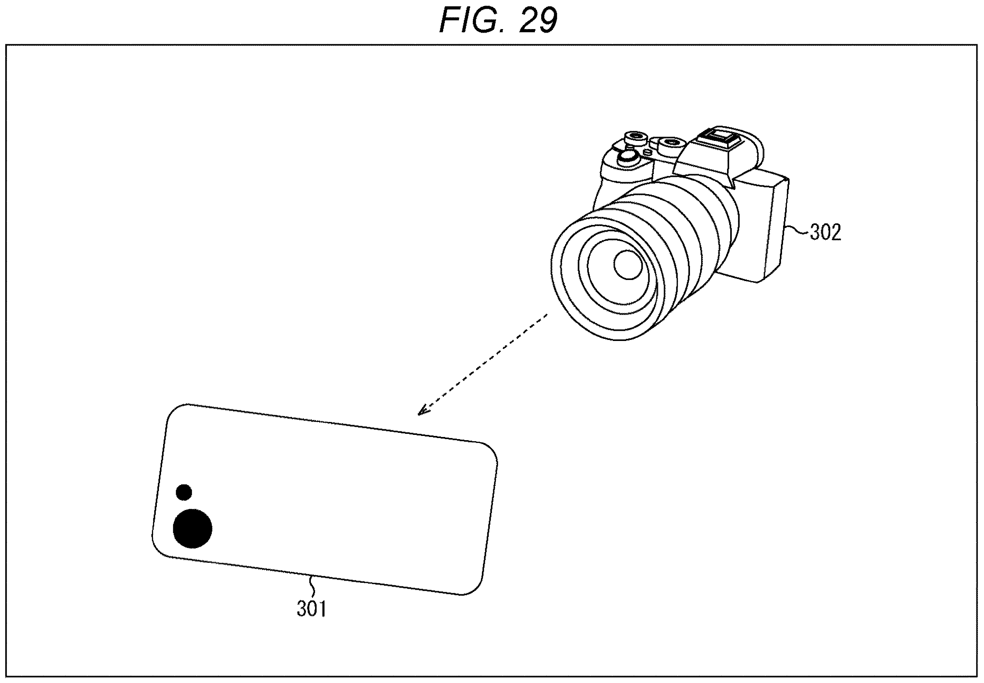

In a case of the example using the smartphone 301 and the ILC 302 in Fig. 26, as illustrated in Fig. 29, the imaging unit (second imaging unit) of the ILC 302 is positioned to face the display unit of the smartphone 301 to allow the imaging unit of the ILC 302 to capture the measurement image displayed on the display unit of the smartphone 301.

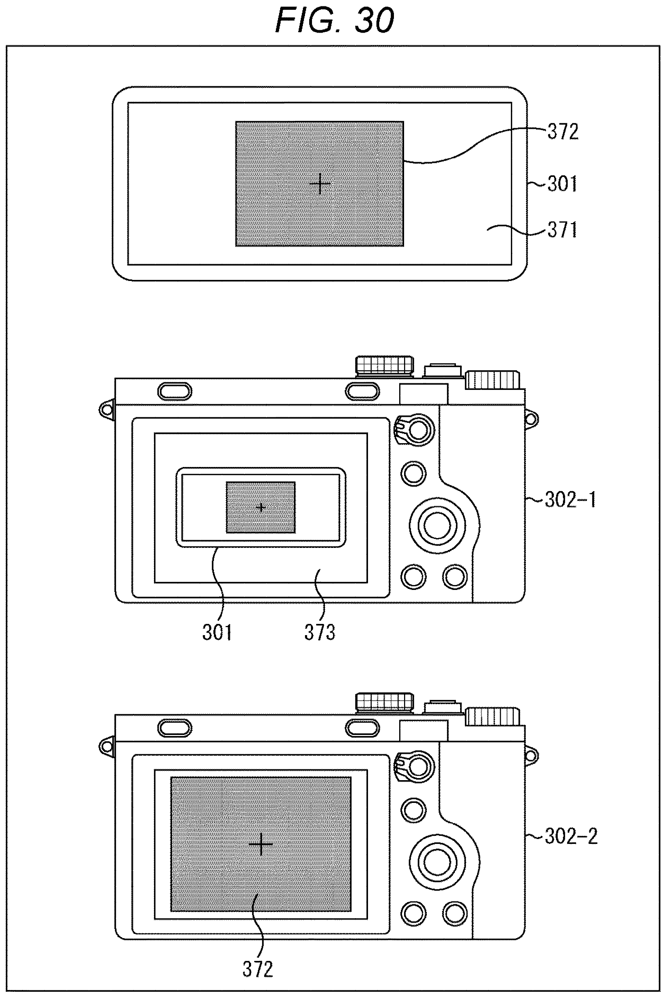

At that time, guidance to prompt the imaging of the measurement image in the correct position may be output. For example, an image that provides such a prompt may be displayed on the display unit. For example, as illustrated in Fig. 30, a guidance image 372 indicating a region where the measurement image is displayed is displayed on the display unit 371 of the smartphone 301. As in the example in Fig. 29, it is possible to capture the measurement image displayed on the display unit of the smartphone 301 by directing the imaging unit of the ILC 302 toward the display unit. Therefore, as in the example of an ILC 302-1, the smartphone 301 is displayed on the display unit 373 of the ILC 302. As in the example of an ILC 302-2, the user adjusts the positions of the smartphone 301 and the ILC 302 so that the guidance image 372 is displayed across the entire display unit 373. As described above, the ILC 302 can capture the entire measurement image in a larger size. It is therefore possible to identify what kind of image the measurement image included in the captured image is more easily. That is, it is possible to obtain the time lag from the instruction timing to the imaging timing more easily and more accurately.

That is, as illustrated in Fig. 27, in the imaging timing calibration processing 341, an instruction to display the measurement image and an instruction to perform the second imaging are simultaneously issued. Furthermore, the second captured image obtained by the second imaging (obtained by capturing the measurement image) based on the instruction is supplied. Then, the time lag is obtained on the basis of the second captured image, and the imaging timing of the second imaging is calibrated. Then, timing calibration information is generated as the calibration result and supplied to the imaging control processing for second 3D modeling 103. In the imaging control processing for second 3D modeling 103, the issuance timing of the imaging instruction command for the second imaging is controlled so that the second imaging can be performed at desired timing (in the appropriate position) on the basis of the timing calibration information generated as described above.

<Example of installation guidance processing>

The installation guidance processing 342 is processing of providing guidance when, for example, the smartphone 301 is attached to (installed on) the ILC 302. For example, guidance to prompt installation of (the device (ILC 302) equipped with) the second imaging unit in the correct relative position and orientation on (the device (smartphone 301) equipped with) the first imaging unit is output. The guidance may be provided either through images or through audio. For example, in the installation guidance processing 342, the display of the guidance (image) may be instructed. Furthermore, the first orientation information (orientation information regarding the first imaging unit) may be supplied, and an orientation image indicating the orientation of the first imaging unit may be superimposed on the guidance on the basis of the orientation information.

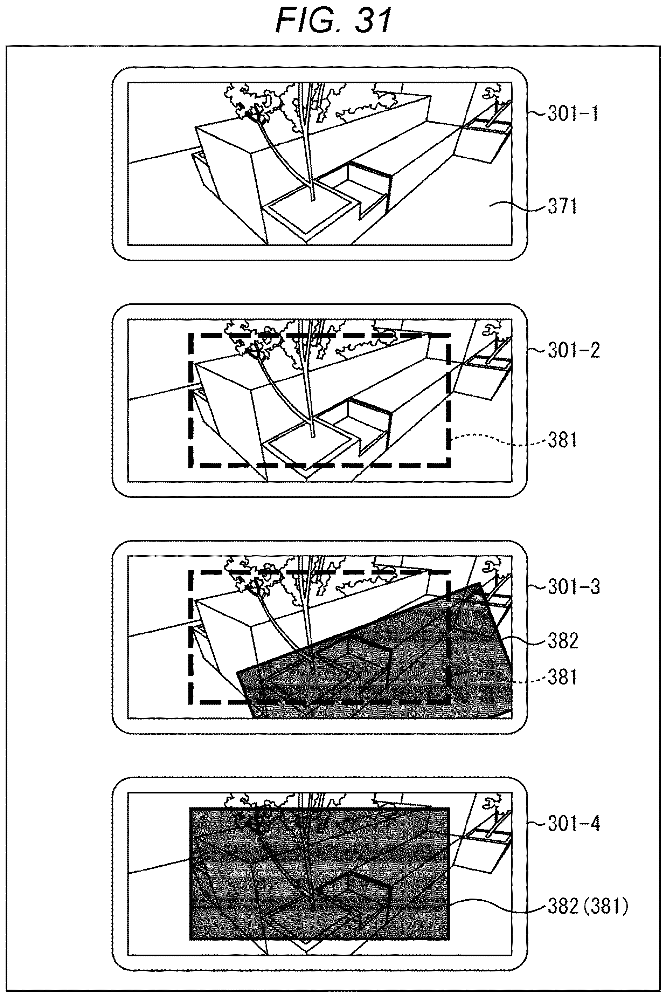

Fig. 31 illustrates an example of the above case. Note that, in Fig. 31, each of smartphones 301-1 to 301-4 indicates the smartphone 301, and indicates that the images displayed on the display unit 371 are different from each other.

First, as in the smartphone 301-1, the first captured image obtained by the first imaging unit is displayed on the display unit 371. Next, as in the smartphone 301-2, a target orientation 381 indicating the target position and orientation of the angle of view of the second imaging unit (the imaging unit of the ILC 302) is superimposed on the first captured image for display on the display unit 371. Next, as in the smartphone 301-3, a current orientation 382 indicating the current position and orientation of the angle of view of the second imaging unit (the imaging unit of the ILC 302) is further superimposed for display on the display unit 371 on the basis of the second orientation information. Note that the second orientation information is basically not calibrated at this point. For example, the first orientation information may be applied as the second orientation information. It goes without saying that the second orientation information calibrated by any method may be applied.

As in the smartphone 301-4, the user adjusts the relative position and orientation of the ILC 302 with respect to the smartphone 301 so that the current orientation 382 aligns with the target orientation 381.

It is possible to install, by performing such installation guidance processing 342, the second imaging unit (ILC 302) in, for example, the correct relative position and orientation on the first imaging unit (smartphone 301). It is therefore possible to calibrate the position and orientation relationship between the first imaging unit and the second imaging unit with a certain degree of accuracy.

That is, as illustrated in Fig. 27, in the installation guidance processing 342, an instruction to display guidance to prompt the installation of (the device equipped with) the second imaging unit in the correct relative position and orientation on (the device equipped with) the first imaging unit is issued. In response to this instruction, the second captured image is supplied. That is, an image (orientation image) indicating the position and orientation of the second imaging unit is supplied. In the installation guidance processing 342, a guidance display instruction is issued so that information obtained from the orientation image is reflected in the guidance.

Note that this guidance may be guidance to prompt the installation of (the device (smartphone 301) equipped with) the first imaging unit in the correct relative position and orientation on (the device (ILC 302) equipped with) the second imaging unit. For example, in Fig. 31, the second captured image, the target orientation 381, and the current orientation 382 may be displayed on the display unit 371 of the smartphone 301. In that case, the target orientation 381 indicates the target position and orientation of the angle of view of the first imaging unit. Furthermore, the current orientation 382 indicates the current position and orientation of the angle of view of the first imaging unit.

<Example of orientation information calibration processing>

However, it cannot be said that the accuracy of the calibration of the position and orientation relationship between the first imaging unit and the second imaging unit based on the guidance in the installation guidance processing 342 is necessarily sufficient. Therefore, even if the installation is performed in accordance with this guidance, it cannot be said that the second orientation information is always calibrated with sufficient accuracy. Therefore, the orientation information calibration processing 343 is performed to calibrate the second orientation information.

By calibrating the second orientation information in the orientation information calibration processing 343, it is possible to suppress a decrease in the accuracy of the position and orientation of the second imaging unit, and it is possible to suppress a decrease in the accuracy of the navigation of the second imaging. It is therefore possible to obtain the captured image in a more appropriate position and orientation and suppress a decrease in the accuracy of the 3D data obtained by the second 3D modeling. Furthermore, since the second imaging can be performed in the more appropriate position and orientation, it is possible to suppress an increase in the number of captured images used in the second 3D modeling. It is therefore possible to suppress an increase in the user's workload. Furthermore, it is possible to suppress an increase in the load (processing volume, processing time, and the like) of the 3D modeling processing.

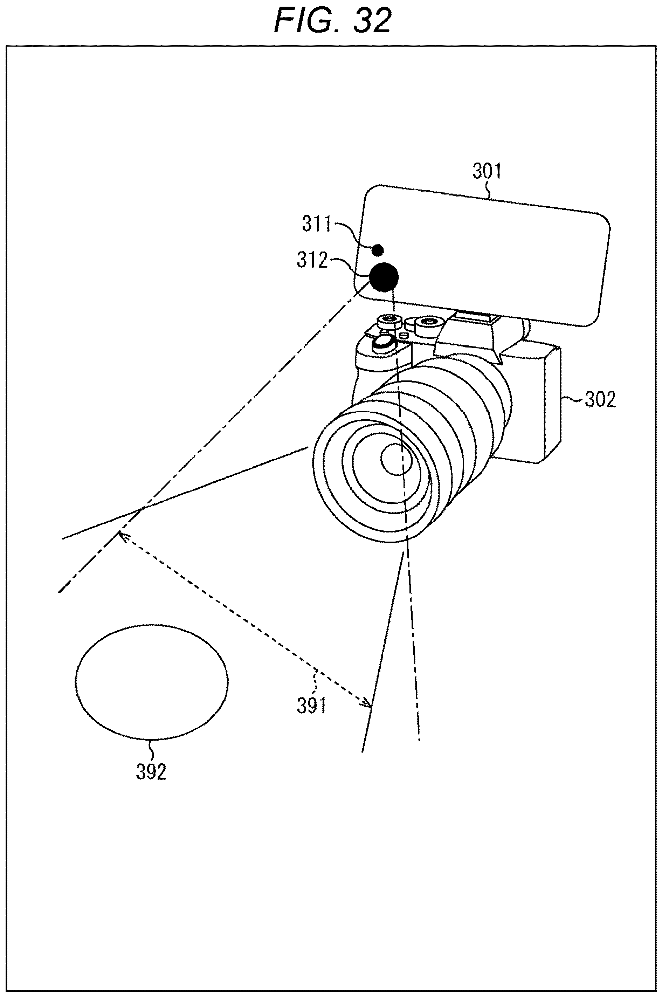

For example, as illustrated in Fig. 32, the orientation information calibration processing 343 may be performed by imaging a 3D object 392 positioned within a common field of view (for example, a range indicated by a dotted double-headed arrow 391) in which the angle of view of the first imaging unit (the imaging unit 312 of the smartphone 301) and the angle of view of the second imaging unit (the imaging unit of the ILC 302) align with each other by the first imaging unit and the second imaging unit. For example, the second orientation information may be calibrated on the basis of the first captured image and the second captured image captured at the same timing, and the first orientation information obtained at the timing.

At that time, in the orientation information calibration processing 343, the same subject may be imaged by the first imaging unit and the second imaging unit, and the first captured image and the second captured image may be generated. Furthermore, the feature points of the obtained first captured image and second captured image may be detected. Furthermore, the corresponding point may be obtained between the first captured image and the second captured image on the basis of the feature points. Then, the relative positional relationship between the first imaging unit and the second imaging unit may be obtained from the positional relationship between the images. However, in this case, the scale (size) of the 3D object that is the subject is unknown. Therefore, the distance to the subject (3D object) may be obtained on the basis of the first orientation information, and the scale of the 3D object may be determined on the basis of the distance. Then, on the basis of the obtained corresponding point and scale, the second orientation information may be calibrated so that a reprojection error becomes sufficiently small.

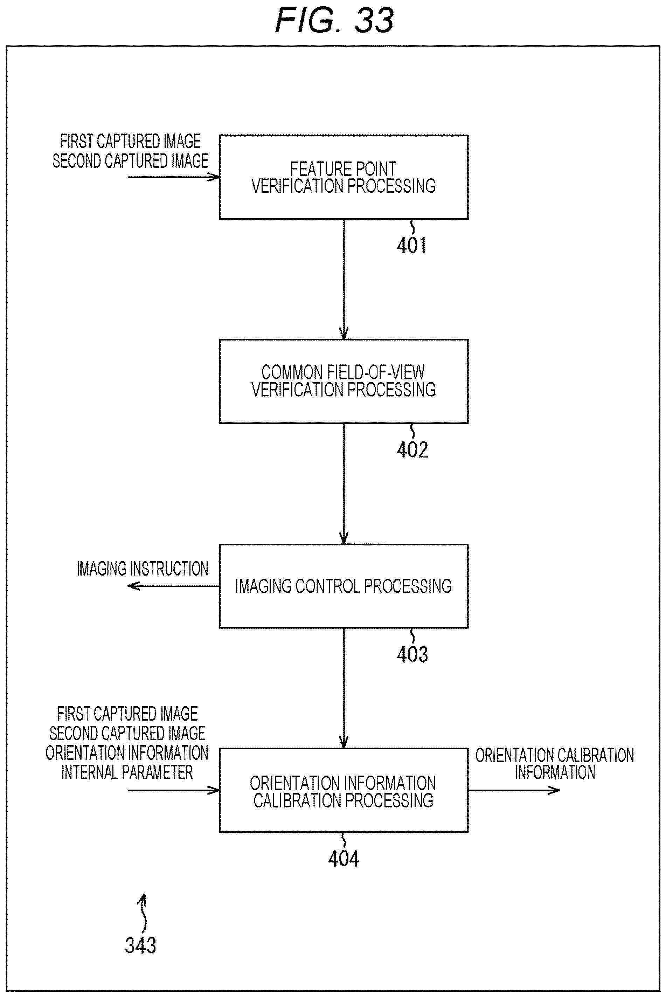

For example, as illustrated in Fig. 33, feature point verification processing 401, common field-of-view verification processing 402, imaging control processing 403, and orientation information calibration processing 404 may be executed. For example, the feature point verification processing 401, the common field-of-view verification processing 402, the imaging control processing 403, and the orientation information calibration processing 404 may be performed in this order.

In the feature point verification processing 401, the first imaging unit and the second imaging unit are instructed to perform imaging, and the first captured image and the second captured image may be supplied. Then, a predetermined feature point may be detected from these captured images. This feature point is a point having a predetermined feature. The predetermined feature may be any feature. Note that how many feature points can be extracted depends on the captured image. If the number of extracted feature points is not sufficient, there is a possibility that it is difficult to obtain the relative positional relationship between the first imaging unit and the second imaging unit. Therefore, whether or not a sufficient number of feature points are detected from the first captured image and the second captured image may be verified. In a case where a sufficient number of feature points cannot be detected, a prompt to perform the first imaging and the second imaging again with the position and orientation (that is, the subject) changed may be provided.

In the common field-of-view verification processing 402, the common field of view (range where angles of view overlap) between the first imaging unit and the second imaging unit may be verified. For example, the corresponding point may be detected between the first captured image and the second captured image using the feature point detected as described above. Note that, in a case where there is no common field of view between the first imaging unit and the second imaging unit, it is difficult to obtain the positional relationship between the first captured image and the second captured image.

Therefore, whether or not the first imaging unit and the second imaging unit have a common field of view may be verified. In a case where there is no common field of view, the position or orientation may be changed (i.e., the subject may be changed) to prompt the first imaging and the second imaging to be performed again.

In the imaging control processing 403, the first imaging unit and the second imaging unit may be instructed to perform imaging.

In the orientation information calibration processing 404, the first captured image and the second captured image may be generated and supplied on the basis of the instruction. Furthermore, the first orientation information may be supplied. Then, the distance to the subject (3D object) may be obtained on the basis of the first orientation information, and the scale of the 3D object may be determined on the basis of the distance. Then, on the basis of the obtained corresponding point and scale, the second orientation information may be calibrated so that a reprojection error becomes sufficiently small. At that time, the second orientation information may be calibrated using the internal parameter of the second imaging unit so that the reprojection error becomes sufficiently small. Note that this internal parameter may be a preset value preset for the second imaging unit or the optical system unit used in the second imaging unit. That is, this internal parameter may be known. Furthermore, this internal parameter may be supplied from the second imaging unit. As a result of such calibration of the second orientation information, orientation calibration information may be generated. This orientation calibration information may be supplied to the imaging control processing for second 3D modeling 103, for example. Furthermore, this orientation calibration information may be supplied to the imaging guidance output processing for second 3D modeling 105, for example.

Note that, in a case where the second orientation information is calibrated by imaging the 3D object as in the example in Fig. 32, the scale of the 3D object may be determined using the depth of the 3D object (information indicating the distance to the 3D object) instead of the first orientation information.

Furthermore, in a case where the second orientation information is calibrated by imaging the 3D object as in the example in Fig. 32, the calibration processing 106 may be performed before the above-described navigation. Furthermore, the calibration processing 106 may be performed in parallel with the above-described navigation (for example, in the background while the navigation is being performed). Furthermore, the navigation may be temporarily interrupted, and the calibration processing 106 may be performed. As described above, it is possible to perform, by imaging the 3D object and calibrating the second orientation information, the calibration processing 106 at more various timings.

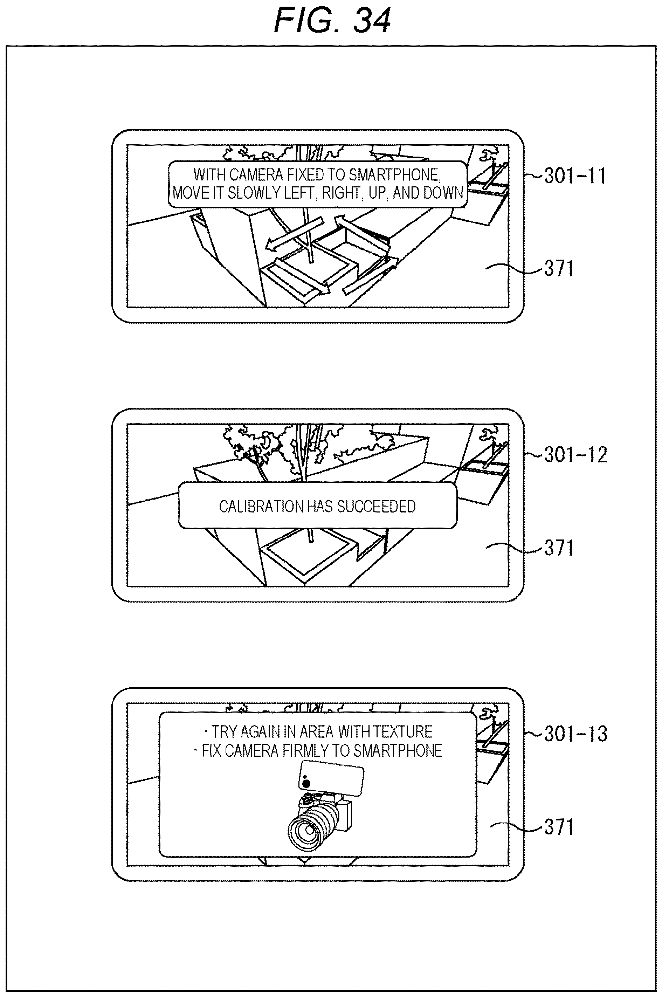

Note that the orientation information calibration processing 343 may be performed on the basis of a plurality of first captured images and second captured images obtained by the first imaging and the second imaging performed in a plurality of different positions. In this case, in the orientation information calibration processing 404, guidance to prompt movement of the first imaging unit and the second imaging unit may be output. For example, as illustrated on a smartphone 301-11 in Fig. 34, a message such as "With the camera fixed to the smartphone, move it slowly left. right, up, and down" may be displayed on the display unit 371.

Furthermore, in a case where the calibration of the second orientation information has succeeded or failed, a notification of the result may be made. For example, in a case where the calibration of the second orientation information has succeeded, a notification indicating that the successful calibration may be output (displayed). For example, as illustrated on a smartphone 301-12 in Fig. 34, a message such as "Calibration has succeeded" may be displayed on the display unit 371. Furthermore, in a case where the calibration of the second orientation information has failed, guidance to prompt re-imaging may be output (displayed). For example, as illustrated on a smartphone 301-13 in Fig. 34, a message prompting re-imaging such as "Try again in an area with a texture" or a message prompting confirmation of fixation such as "Fix the camera firmly to the smartphone" may be displayed on the display unit 371.

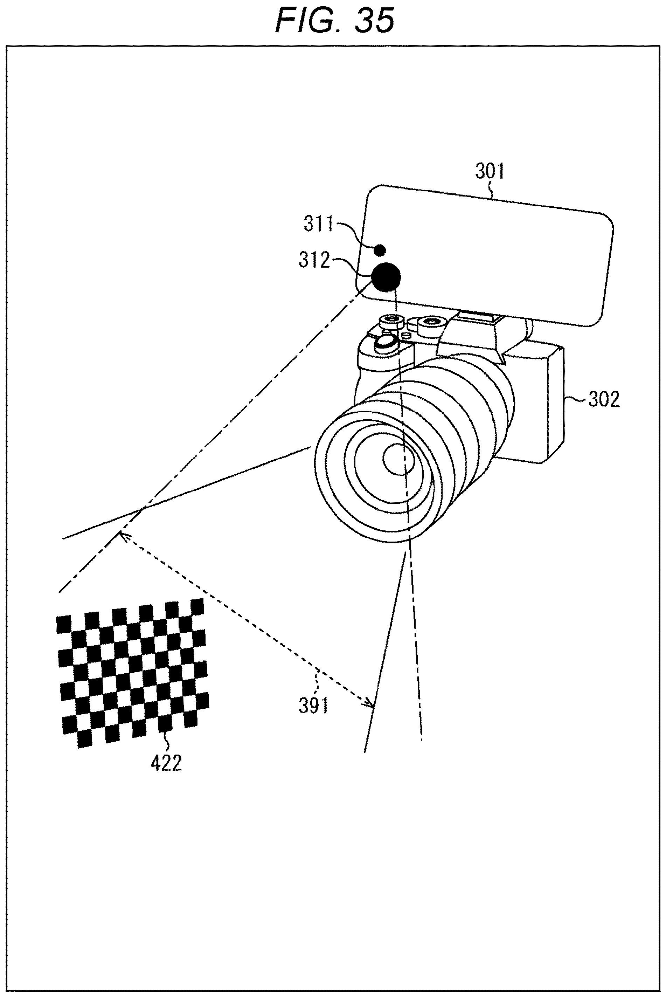

Note that, as illustrated in Fig. 35, for example, the orientation information calibration processing 343 may be performed by imaging, with the first imaging unit and the second imaging unit, a calibration pattern 422 having a predetermined design positioned within the common field of view (for example, the range indicated by a dotted double-headed arrow 391) where the angle of view of the first imaging unit (the imaging unit 312 of the smartphone 301) and the angle of view of the second imaging unit (the imaging unit of the ILC 302) overlap. This calibration pattern 422 is an image having a design for detecting a feature point (corresponding point). The calibration pattern 422 may be any pattern. For example, a checker pattern as illustrated in Fig. 35 may be used, or other patterns may be used. In a case of such a calibration pattern 422, the scale of the pattern is known. It is therefore possible to calibrate the second orientation information without using the first orientation information. However, since the calibration pattern 422 is used, it is difficult to perform the orientation information calibration processing 343 while the above-described navigation is being performed (in parallel without interruption). That is, in this case, the orientation information calibration processing 343 is performed as preprocessing before the above-described navigation or by interrupting the above-described navigation.

That is, as illustrated in Fig. 27, in the orientation information calibration processing 343, for example, an instruction to display guidance to prompt movement of the first imaging unit and the second imaging unit is issued. Furthermore, in the orientation information calibration processing 343, an instruction to perform the first imaging and an instruction to perform the second imaging are issued. In response to these instructions, the first captured image, the second captured image, the first orientation information, and information such as the internal parameter of the second imaging unit are supplied as needed. In the orientation information calibration processing 343, the second orientation information is calibrated on the basis of these pieces of information. Then, the orientation calibration information is generated as the calibration result and supplied to the imaging control processing for second 3D modeling 103.

<Example 2 of calibration processing>

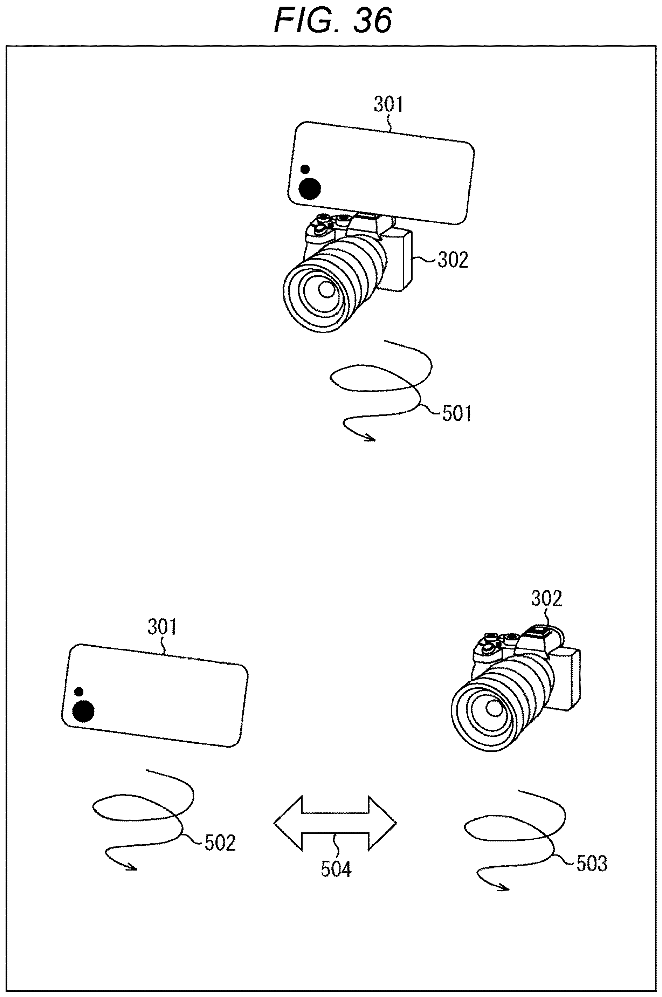

In the calibration processing 106, any processing may be performed and is not limited to the example in Fig. 27. For example, in the orientation information calibration processing, as indicated by an arrow 501 in Fig. 36, the user may slowly move the smartphone 301 and the ILC 302 with both firmly fixed to each other, and the second orientation information may be calibrated on the basis of the trajectory. In that case, for example, Visual SLAM is performed on the first imaging unit and the second imaging unit independently of each other, and a trajectory (arrow 502) of the first imaging unit and a trajectory (arrow 503) of the second imaging unit are derived. Then, the trajectories are overlaid using a technique such as iterative closest point (ICP). A value of orientation transformation required for overlaying the trajectories is applied as a difference between the positions of the first imaging unit and the second imaging unit, and the second orientation information is calibrated. Such a method may be applied as the orientation information calibration processing.

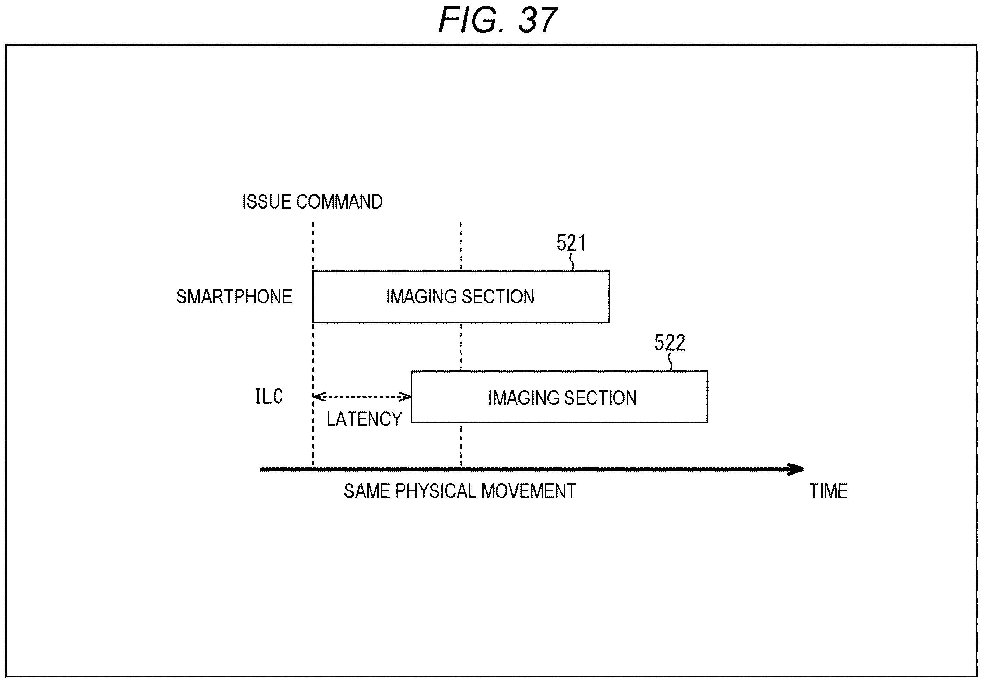

Furthermore, in the imaging timing calibration processing, for example, the imaging timing of the second imaging unit may be calibrated by applying, as latency, a time difference when the first imaging unit and the second imaging unit that perform the same physical movement are located at the same physical position on the basis of the result of overlaying the trajectories described above. For example, as illustrated in Fig. 37, a difference between the start time of an imaging section 521 in which (exposure or the like of) the first imaging is performed and the start time of an imaging section 522 in which (exposure or the like of) the second imaging is performed may be applied as the latency. Such a method may be applied as the imaging timing calibration processing.

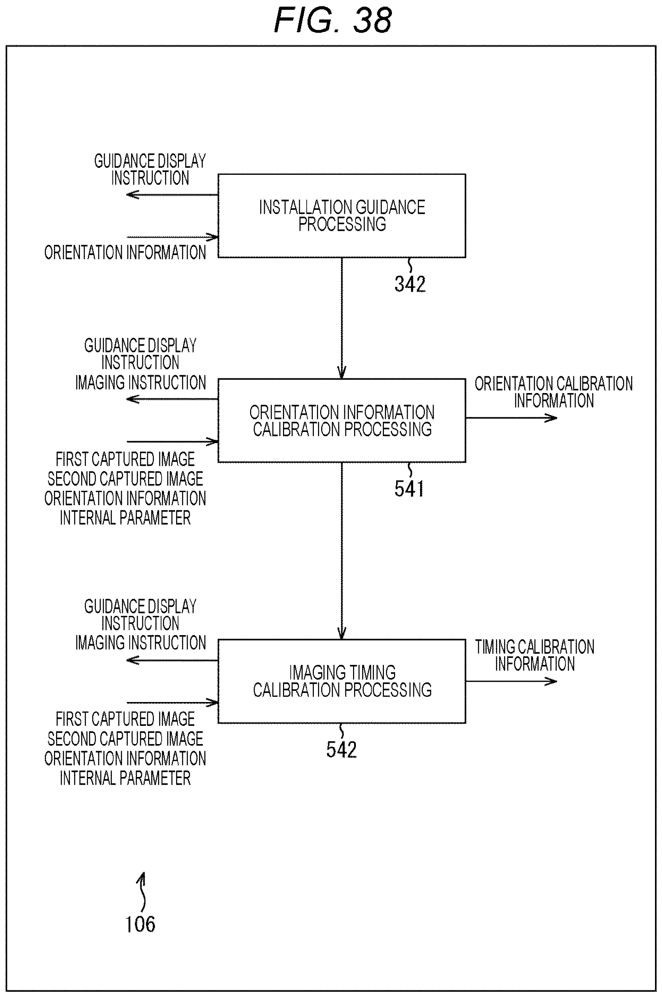

In this case, in the calibration processing 106, for example, as illustrated in Fig. 38, the installation guidance processing 342, orientation information calibration processing 541, and imaging timing calibration processing 542 may be performed. In the orientation information calibration processing 541, as described above with reference to Fig. 36, the second orientation information is calibrated on the basis of the trajectories of the first imaging unit and the second imaging unit. Then, the orientation calibration information is generated as the calibration result and supplied to the imaging control processing for second 3D modeling 103. In the imaging timing calibration processing 542, as described above with reference to Fig. 37, the time difference when the first imaging unit and the second imaging unit that perform the same physical movement are located at the same physical position is applied as the latency, and the imaging timing of the second imaging unit is calibrated. Then, the timing calibration information is generated as the calibration result and supplied to the imaging control processing for second 3D modeling 103. For example, as illustrated in Fig. 38, the installation guidance processing 342, the orientation information calibration processing 541, and the imaging timing calibration processing 542 may be performed in this order. Even in a case where the position and orientation relationship between the first imaging unit and the second imaging unit is unknown, it is possible to calibrate the second orientation information by performing each processing as described above. Note that the installation guidance processing 342 may be omitted. Furthermore, the orientation information calibration processing 541 or the imaging timing calibration processing 542 may be omitted.

<Application examples>

Note that by changing a reading mode of the depth sensor (depth detection unit), the depth sensor may be used as the first imaging unit to calibrate the second orientation information. For example, in the case illustrated on the upper side in Fig. 26, in a case where the depth sensor 311 can obtain a captured image, the second orientation information may be calibrated using the depth sensor 311 as the first imaging unit.

Furthermore, in Fig. 26, an example where the processing such as the first imaging and the second imaging above is performed by the smartphone 301 and the ILC 302 and an example where the processing is performed by the smartphone 321 have been described; however, a configuration of a device that performs these pieces of processing may be any configuration. For example, the processing such as the first imaging and the second imaging may be performed by the ILC to which an accessory unit including a combination of the depth sensor and the image sensor is attached. That is, instead of the smartphone 301 in Fig. 26, the accessory unit may be attached to the ILC 302. Even with such a configuration, the second orientation information may be calibrated. For example, the calibration processing may be performed similarly to the example described above.

<Example of configuration for performing processing>

Each processing in Fig. 4 (and Figs. 27, 33, and 38) described above may be performed by any device. For example, in the information processing device, the first 3D modeling processing of the first 3D data generation processing 101, the calibration processing 106, and the imaging control processing for second 3D modeling 103 described above may be executed.

That is, an information processing device may include: a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object; a calibration unit that calibrates second orientation information indicating a position and orientation of a second imaging unit that performs second imaging on the basis of the first captured image, the first orientation information, and a second captured image generated by the second imaging of imaging the 3D object; and an imaging control unit that reflects a calibration result in the second orientation information and controls the second imaging to generate second three-dimensional shape information representing the three-dimensional shape of the 3D object on the basis of the second orientation information reflecting the calibration result and the first three-dimensional shape information. In this section, this information processing device is also referred to as a first information processing device.

Furthermore, an information processing method performed by the first information processing device may include: generating first orientation information indicating a position and orientation of a first imaging unit that performs first imaging and first three-dimensional shape information representing a three-dimensional shape of a 3D object on the basis of a first captured image generated by the first imaging of imaging the 3D object; calibrating second orientation information indicating a position and orientation of a second imaging unit that performs second imaging on the basis of the first captured image, the first orientation information, and a second captured image generated by the second imaging of imaging the 3D object; and reflecting a calibration result in the second orientation information and controlling the second imaging to generate second three-dimensional shape information representing the three-dimensional shape of the 3D object on the basis of the second orientation information reflecting the calibration result and the first three-dimensional shape information.

With this configuration, it is possible to suppress a decrease in the accuracy of the position and orientation of the second imaging unit, and it is possible to suppress a decrease in the accuracy of the navigation. It is therefore possible to obtain the captured image in the more appropriate position and orientation and suppress a decrease in the accuracy of the 3D data obtained by the second 3D modeling. Furthermore, since the second imaging can be performed in the more appropriate position and orientation, it is possible to suppress an increase in the number of captured images used in the second 3D modeling. It is therefore possible to suppress an increase in the user's workload. Furthermore, it is possible to suppress an increase in the load (processing volume, processing time, and the like) of the 3D modeling processing.

Note that, in the first information processing device, the calibration unit may calibrate the second orientation information on the basis of the first captured image and the second captured image captured at the same timing and the first orientation information obtained at the timing.

Furthermore, the calibration unit may detect the feature points of the first captured image and the second captured image, obtain the corresponding point between the feature point of the first captured image and the feature point of the second captured image, determine the scale of the 3D object on the basis of the first orientation information, and calibrate the second orientation information on the basis of the corresponding point and the scale so that the reprojection error becomes sufficiently small.

Furthermore, the calibration unit may further use the internal parameter of the second imaging unit to calibrate the second orientation information so that the reprojection error becomes sufficiently small. Note that the internal parameter may be a preset value preset for the second imaging unit or the optical system unit used in the second imaging unit.

Furthermore, the calibration unit may output guidance to prompt movement of the first imaging unit and the second imaging unit, and calibrate the second orientation information on the basis of a plurality of first captured images and second captured images obtained by performing the first imaging and the second imaging in a plurality of different positions in accordance with the guidance.

Furthermore, in a case where the calibration of the second orientation information has succeeded, the calibration unit may output a notification indicating that the successful calibration, and in a case where the calibration of the second orientation information has failed, the calibration unit may output guidance to prompt re-imaging.

Furthermore, the calibration unit may output guidance to prompt installation of the second imaging unit in the correct relative position and orientation on the first imaging unit.

Furthermore, the calibration unit may further calibrate imaging timing of the second imaging, and when controlling the second imaging, the imaging control unit may instruct the second imaging at instruction timing that ensures the imaging timing reflecting the calibration result is appropriate.

Furthermore, the calibration unit may calibrate the imaging timing on the basis of the second captured image obtained by capturing the measurement image that changes over time.

Furthermore, the calibration unit may output guidance to prompt capturing of the measurement image in the correct position.

Furthermore, the first information processing device may further include a scoring processing unit that uses the first three-dimensional shape information to evaluate accuracy of the second three-dimensional shape information that can be generated using the second captured image generated by the second imaging performed so far and generate a scoring result. At that time, the imaging control unit may control the second imaging to generate the second three-dimensional shape information on the basis of the second orientation information reflecting the calibration result, the first three-dimensional shape information, and the scoring result.

Furthermore, the first 3D modeling processing unit may include an orientation information generation unit that generates the first orientation information on the basis of the acceleration and angular velocity of the first imaging unit, and a three-dimensional shape generation unit that generates the first three-dimensional shape information on the basis of the first orientation information and the depth of the 3D object. Note that the first three-dimensional shape information may include a mesh indicating the three-dimensional shape of the 3D object through vertexes and connections and a texture applied to the surface of the mesh.

Furthermore, the first information processing device may further include a depth detection unit that detects a depth, the first imaging unit, and an inertial measurement unit that detects the acceleration and angular velocity. Furthermore, the first information processing device may further include the second imaging unit. Furthermore, the first information processing device may further include an association unit that associates the second orientation information reflecting the calibration result with the second captured image.

Furthermore, for example, in the first information processing device, the first 3D modeling processing of the first 3D data generation processing 101, the calibration processing 106, and the imaging guidance output processing for second 3D modeling 105 described above may be executed.

That is, the first information processing device may include: a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object; a calibration unit that calibrates second orientation information indicating a position and orientation of a second imaging unit that performs second imaging on the basis of the first captured image, the first orientation information, and a second captured image generated by the second imaging of imaging the 3D object; and a guidance information output control unit that reflects a calibration result in the second orientation information, generates guidance information for the second imaging to generate second three-dimensional shape information representing the three-dimensional shape of the 3D object on the basis of the second orientation information reflecting the calibration result and the first three-dimensional shape information, and controls output of the guidance information.

Furthermore, the information processing method performed by the first information processing device may include: generating first orientation information indicating a position and orientation of a first imaging unit that performs first imaging and first three-dimensional shape information representing a three-dimensional shape of a 3D object on the basis of a first captured image generated by the first imaging of imaging the 3D object; calibrating second orientation information indicating a position and orientation of a second imaging unit that performs second imaging on the basis of the first captured image, the first orientation information, and a second captured image generated by the second imaging of imaging the 3D object; and reflecting a calibration result in the second orientation information, generating guidance information for the second imaging to generate second three-dimensional shape information representing the three-dimensional shape of the 3D object on the basis of the second orientation information reflecting the calibration result and the first three-dimensional shape information, and controlling output of the guidance information.

With this configuration, it is possible to suppress a decrease in the accuracy of the position and orientation of the second imaging unit, and it is possible to suppress a decrease in the accuracy of the navigation. It is therefore possible to obtain the captured image in the more appropriate position and orientation and suppress a decrease in the accuracy of the 3D data obtained by the second 3D modeling. Furthermore, since the second imaging can be performed in the more appropriate position and orientation, it is possible to suppress an increase in the number of captured images used in the second 3D modeling. It is therefore possible to suppress an increase in the user's workload. Furthermore, it is possible to suppress an increase in the load (processing volume, processing time, and the like) of the 3D modeling processing.

Note that, in the first information processing device, the calibration unit may calibrate the second orientation information on the basis of the first captured image and the second captured image captured at the same timing and the first orientation information obtained at the timing.

Furthermore, the calibration unit may detect the feature points of the first captured image and the second captured image, obtain the corresponding point between the feature point of the first captured image and the feature point of the second captured image, determine the scale of the 3D object on the basis of the first orientation information, and calibrate the second orientation information on the basis of the corresponding point and the scale so that the reprojection error becomes sufficiently small.

Furthermore, the calibration unit may further use the internal parameter of the second imaging unit to calibrate the second orientation information so that the reprojection error becomes sufficiently small. Note that the internal parameter may be a preset value preset for the second imaging unit or the optical system unit used in the second imaging unit.

Furthermore, the calibration unit may output guidance to prompt movement of the first imaging unit and the second imaging unit, and calibrate the second orientation information on the basis of a plurality of first captured images and second captured images obtained by performing the first imaging and the second imaging in a plurality of different positions in accordance with the guidance.

Furthermore, in a case where the calibration of the second orientation information has succeeded, the calibration unit may output a notification indicating that the successful calibration, and in a case where the calibration of the second orientation information has failed, the calibration unit may output guidance to prompt reimaging.

Furthermore, the calibration unit may output guidance to prompt installation of the second imaging unit in the correct relative position and orientation on the first imaging unit.

Furthermore, the first information processing device may further include a scoring processing unit that uses the first three-dimensional shape information to evaluate accuracy of the second three-dimensional shape information that can be generated using the second captured image generated by the second imaging performed so far and generate a scoring result. At that time, the guidance information output control unit may generate guidance information on the basis of the second orientation information reflecting the calibration result, the first three-dimensional shape information, and the scoring result, and control the output of the guidance information.

Furthermore, the first 3D modeling processing unit may include an orientation information generation unit that generates the first orientation information on the basis of the acceleration and angular velocity of the first imaging unit, and a three-dimensional shape generation unit that generates the first three-dimensional shape information on the basis of the first orientation information and the depth of the 3D object. Note that the first three-dimensional shape information may include a mesh indicating the three-dimensional shape of the 3D object through vertexes and connections and a texture applied to the surface of the mesh.

Furthermore, the first information processing device may further include a depth detection unit that detects a depth, the first imaging unit, and an inertial measurement unit that detects the acceleration and angular velocity. Furthermore, the first information processing device may further include the second imaging unit.

Furthermore, the first information processing device may further include an association unit that associates the second orientation information reflecting the calibration result with the second captured image.

<6. First embodiment>

<Imaging device>

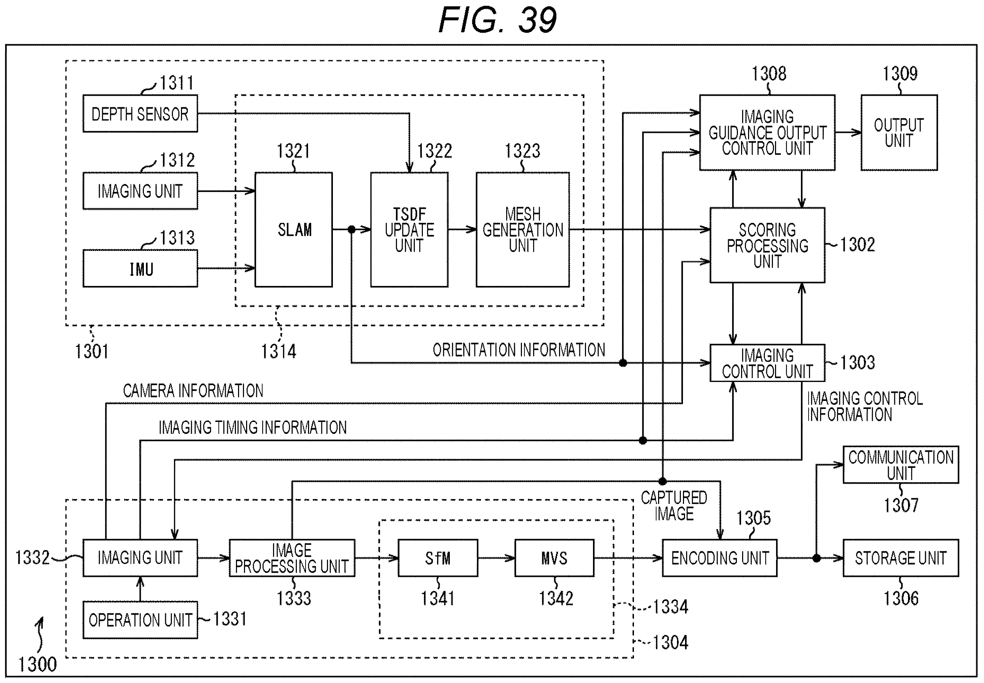

Fig. 39 is a block diagram illustrating an example of a configuration of an imaging device that is an aspect of an information processing device to which the present technology is applied. An imaging device 1300 illustrated in Fig. 39 is a device that images a 3D object and performs 3D modeling using the captured image. Note that Fig. 39 illustrates a main configuration including processing units, data flows, and the like, and the processing units and the data flows illustrated in Fig. 39 are not necessarily all. That is, the imaging device 1300 may include a device or a processing unit not illustrated as a block in Fig. 39. Furthermore, there may be a data flow or processing that is not illustrated as an arrow or the like in Fig. 39.

As illustrated in Fig. 39, the imaging device 1300 includes a first 3D data generation unit 1301, a scoring processing unit 1302, an imaging control unit 1303, a second 3D data generation unit 1304, an encoding unit 1305, a storage unit 1306, a communication unit 1307, an imaging guidance output control unit 1308, and an output unit 1309. Furthermore, the first 3D data generation unit 1301 includes a depth sensor 1311, an imaging unit 1312, an inertial measurement unit (IMU) 1313, and a real-time 3D modeling processing unit 1314. Furthermore, the real-time 3D modeling processing unit 1314 includes simultaneous localization and mapping (SLAM) 1321, a truncated signed distance function (TSDF) update unit 1322, and a mesh generation unit 1323. Furthermore, the second 3D data generation unit 1304 includes an operation unit 1331, an imaging unit 1332, an image processing unit 1333, and a photogrammetry processing unit 1334. Furthermore, the photogrammetry processing unit 1334 includes structure from motion (SfM) 1341 and multi view stereo (MVS) 1342.

The first 3D data generation unit 1301 performs processing related to the generation of the first 3D data. For example, the first 3D data generation unit 1301 performs the first 3D data generation processing 101 in Fig. 4. The depth sensor 1311 includes a Lidar sensor (dToF module) or the like, detects the depth to the subject, and supplies the depth to the TSDF update unit 1322. The imaging unit 1312 includes an image sensor and images a subject to generate a captured image. The imaging unit 1312 performs the first imaging (that is, imaging for the first 3D modeling (real-time 3D modeling)) of the first 3D data generation processing 101 in Fig. 4. The imaging unit 1312 supplies the generated captured image to the SLAM 1321. The IMU 1313 detects inertial information regarding (acceleration and angular velocity of) the imaging device and supplies the inertial information to the SLAM 1321.

The real-time 3D modeling processing unit 1314 performs processing related to the real-time 3D modeling. For example, the real-time 3D modeling processing unit 1314 performs the first 3D modeling processing (real-time 3D modeling) of the first 3D data generation processing 101 in Fig. 4. That is, the real-time 3D modeling processing unit 1314 generates the first three-dimensional shape information representing the three-dimensional shape of the 3D object on the basis of the first captured image generated by the first imaging of imaging the 3D object.

The SLAM 1321 performs self-localization on the basis of the supplied first captured image and inertial information, and generates orientation information indicating the position and orientation of the imaging device 1300. The SLAM 1321 supplies the generated orientation information to the TSDF update unit 1322, the imaging control unit 1303, and the imaging guidance output control unit 1308. The TSDF update unit 1322 updates the TSDF on the basis of the orientation information and the depth, and supplies the updated TSDF to the mesh generation unit 1323. The mesh generation unit 1323 generates a mesh (or texture) using the updated TSDF. The mesh generation unit 1323 supplies the mesh and the texture to the scoring processing unit 1302 as the first 3D data (first three-dimensional shape information).

The scoring processing unit 1302 performs processing related to scoring. For example, the scoring processing unit 1302 performs the scoring processing 102 in Fig. 4 on the basis of the supplied first 3D data and the imaging viewpoint information (information indicating the position and orientation in which the second imaging is performed) supplied from the imaging control unit 1303. That is, the scoring processing unit 1302 uses the first three-dimensional shape information to evaluate the accuracy of the second three-dimensional shape information that can be generated using the second captured image generated by the second imaging performed so far, and generates the scoring result. For example, the scoring processing unit 1302 may generate the scoring result for each local portion of the first three-dimensional shape information on the basis of the first three-dimensional shape information and the position and orientation of the second imaging performed so far. For example, the scoring processing unit 1302 may generate the scoring result for each polygon of the mesh. The scoring processing unit 1302 supplies the scoring result to the imaging control unit 1303 and the imaging guidance output control unit 1308.

Note that the scoring processing unit 1302 may acquire camera information regarding the imaging unit 1332 and generate the scoring result on the basis of the camera information. Furthermore, the scoring processing unit 1302 may generate the scoring result on the basis of the position and orientation of the imaging device 1300 corresponding to the timing of the second imaging without relying on the imaging control information by the imaging unit 1332.

The imaging control unit 1303 performs processing related to the control of the second imaging. For example, the imaging control unit 1303 performs the imaging control processing for second 3D modeling 103 in Fig. 4. That is, the imaging control unit 1303 generates imaging control information on the basis of which the second imaging is controlled on the basis of the supplied scoring result and orientation information, and supplies the imaging control information to the imaging unit 1332. The imaging control information is, for example, control information for causing the imaging unit 1332 to perform the second imaging (generate the second captured image). That is, the imaging control unit 1303 obtains an appropriate position and orientation as the second imaging on the basis of the scoring result, and causes the imaging unit 1332 to perform the second imaging in the position and orientation. Furthermore, the imaging control unit 1303 supplies imaging viewpoint information indicating the position and orientation of the performed second imaging to the scoring processing unit 1302.

Furthermore, the imaging control unit 1303 may acquire imaging timing information indicating the timing of the second imaging without relying on the imaging control information by the imaging unit 1332, and supply the orientation information regarding the imaging device 1300 corresponding to the imaging timing to the scoring processing unit 1302 as the imaging viewpoint information.

The second 3D data generation unit 1304 performs processing related to the generation of the second 3D data. For example, the second 3D data generation unit 1304 performs the second 3D data generation processing 104 in Fig. 4. The operation unit 1331 receives an instruction for the imaging unit 1332 from the user or the like and supplies the instruction to the imaging unit 1332.

The imaging unit 1332 includes an image sensor and images a subject to generate a captured image. The imaging unit 1332 performs the second imaging (that is, imaging for the second 3D modeling (photogrammetry)) of the second 3D data generation processing 104 in Fig. 4. The imaging unit 1332 supplies the generated captured image to the image processing unit 1333.

For example, the imaging unit 1332 may perform the second imaging in accordance with the control of the imaging control unit 1303 (on the basis of the imaging control information supplied from the imaging control unit 1303) and generate the second captured image. Furthermore, the imaging unit 1332 may perform the second imaging in accordance with the instruction supplied from the operation unit 1331 to generate the second captured image. Furthermore, the imaging unit 1332 may supply the camera information (internal parameter, external parameter, angle-of-view information, and the like of the imaging unit 1332) to the scoring processing unit 1302. Furthermore, the imaging unit 1332 may supply imaging timing information indicating the timing of the second imaging without relying on the imaging control information to the imaging control unit 1303 and the imaging guidance output control unit 1308.

The image processing unit 1333 performs predetermined image processing on the captured image (second captured image) generated by the imaging unit 1332. The content of this image processing is arbitrary. The image processing unit 1333 supplies the captured image to the SfM 1341. Furthermore, the image processing unit 1333 may supply the captured image to the encoding unit 1305 and the imaging guidance output control unit 1308.

The photogrammetry processing unit 1334 performs processing related to the photogrammetry on the second captured image. For example, the photogrammetry processing unit 1334 performs the second 3D modeling processing of the second 3D data generation processing 104 in Fig. 4. That is, the photogrammetry processing unit 1334 generates the second three-dimensional shape information on the basis of the second captured image generated by the imaging unit 1332.

For example, the SfM 1341 searches for a corresponding point between the second captured images, derives the position and orientation of the camera using epipolar constraint, determines the position of each corresponding point in the three-dimensional space using triangulation based on the position and orientation of the camera, optimizes all the determined three-dimensional point cloud using bundle adjustment, and supplies the optimized three-dimensional point cloud to the MVS 1342. For example, the MVS 1342 further performs a dense corresponding point search using the three-dimensional point cloud, adds three-dimensional points, and further performs meshing and texturing as postprocessing to generate the second 3D data. The MVS 1342 supplies the generated second 3D data to the encoding unit 1305.

The encoding unit 1305 encodes the supplied second 3D data, and supplies the encoded data to the storage unit 1306 and the communication unit 1307. Furthermore, the encoding unit 1305 may encode the supplied second captured image and supply the encoded data to the storage unit 1306 and the communication unit 1307.

The storage unit 1306 stores the supplied encoded data. The communication unit 1307 transmits the supplied encoded data to another information processing device (for example, a server or the like).

The imaging guidance output control unit 1308 performs processing related to the guidance for the second imaging. For example, the imaging guidance output control unit 1308 performs the imaging guidance output processing for second 3D modeling 105 in Fig. 4. That is, the imaging guidance output control unit 1308 generates guidance information for the second imaging and controls the output of the guidance information. For example, the imaging guidance output control unit 1308 generates the above-described guidance information on the basis of the supplied scoring result and the orientation information regarding the imaging device 1300. Furthermore, the imaging guidance output control unit 1308 may generate the guidance information on the basis of the supplied imaging timing information. The imaging guidance output control unit 1308 supplies the generated guidance information to the output unit 1309 to causes the output unit 1309 output the guidance information as, for example, an image, audio, or the like. Furthermore, the imaging guidance output control unit 1308 may superimpose the supplied captured image on the guidance information (image) for display.

The output unit 1309 outputs the guidance information as an image, audio, or the like according to the control of the imaging guidance output control unit 1308.

Such a configuration allows the imaging device 1300 to image the 3D object in a more appropriate position and orientation, and perform 3D modeling (second 3D modeling processing) using the captured image. Therefore, the imaging device 1300 can generate more accurate 3D data while suppressing an increase in the load of 3D modeling. Furthermore, the imaging device 1300 can output the guidance information so that the user can perform the second imaging in a more appropriate position and orientation. That is, the imaging device 1300 can perform 3D modeling (second 3D modeling processing) using the captured image. Therefore, the imaging device 1300 can generate more accurate 3D data while suppressing an increase in the load of 3D modeling. That is, the user can perform 3D modeling more easily.

<Flow of 3D modeling processing>

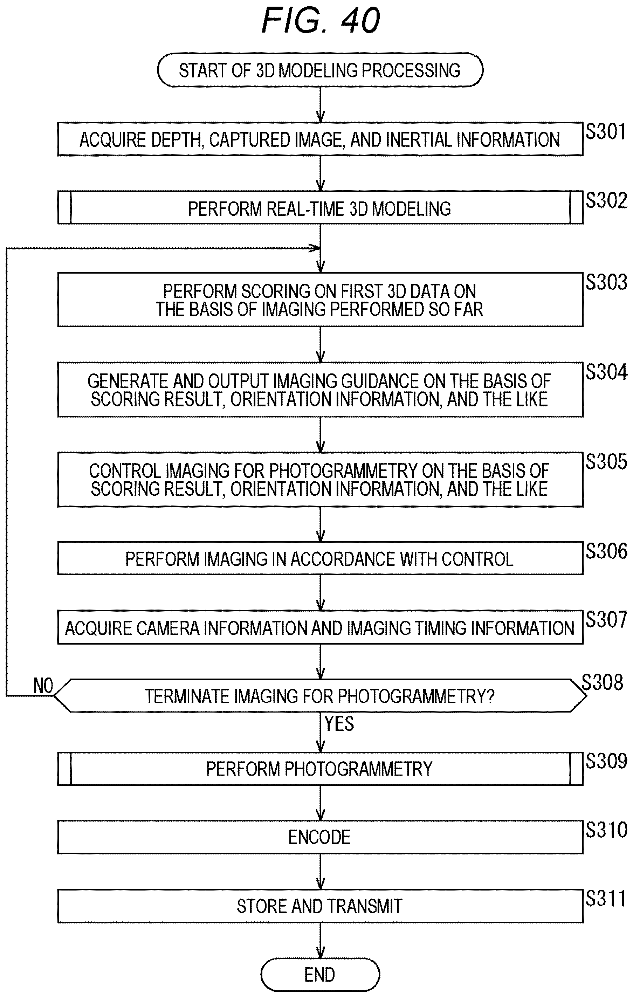

An example of a flow of the 3D modeling processing performed by the imaging device 1300 will be described with reference to a flowchart in Fig. 40.

Upon the start of the 3D modeling processing, the depth sensor 1311, the imaging unit 1312, and the IMU 1313 acquire a depth, a captured image, and inertial information in step S301.

In step S302, the real-time 3D modeling processing unit 1314 performs real-time 3D modeling processing to generate the first 3D data.

In step S303, the scoring processing unit 1302 performs scoring on the first 3D data on the basis of the second imaging performed so far.

In step S304, the imaging guidance output control unit 1308 generates imaging guidance (guidance information) for the second imaging on the basis of the scoring result, the orientation information, and the like. The output unit 1309 outputs the imaging guidance (guidance information).

In step S305, the imaging control unit 1303 controls imaging for photogrammetry (second imaging) on the basis of the scoring result, the orientation information, and the like.

In step S306, the imaging unit 1332 performs imaging (performs the second imaging) in accordance with the control.

In step S307, the imaging control unit 1303 and the imaging guidance output control unit 1308 acquire the camera information from the imaging unit 1332. Furthermore, the scoring processing unit 1302 acquires the imaging timing information from the imaging unit 1332.

In step S308, the imaging control unit 1303 determines whether or not to terminate the imaging for photogrammetry (second imaging). In a case where it is determined that the imaging for photogrammetry is not terminated, the processing returns to step S303. Furthermore, in a case where it is determined in step S308 that the imaging for photogrammetry is terminated, the processing proceeds to step S309.

In step S309, the photogrammetry processing unit 1334 performs photogrammetry processing to generate the second 3D data.

In step S310, the encoding unit 1305 encodes the second 3D data.

In step S311, the storage unit 1306 stores the encoded data. Furthermore, the communication unit 1307 transmits the encoded data to another device (for example, a server or the like).

The completion of step S311 brings the 3D modeling processing to an end.

<Flow of real-time 3D modeling processing>

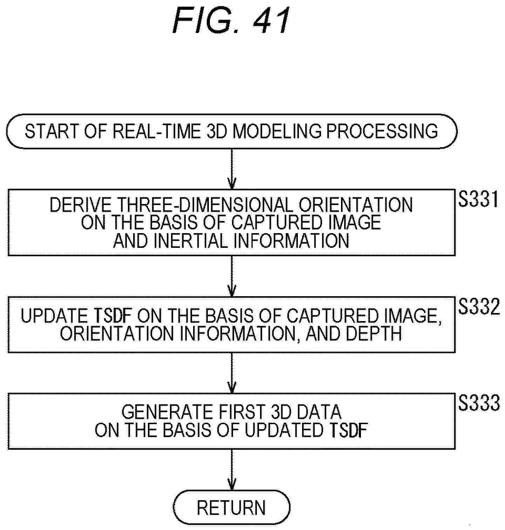

An example of a flow of the real-time 3D modeling processing performed in step S302 in Fig. 40 will be described with reference to a flowchart in Fig. 41.

Upon the start of the real-time 3D modeling processing, the SLAM 1321 derives orientation information indicating a three-dimensional orientation of the imaging device 1300 on the basis of the captured image and the inertial information in step S331.

In step S332, the TSDF update unit 1322 updates the TSDF on the basis of the captured image, the orientation information, and the depth.

In step S333, the mesh generation unit 1323 generates the first 3D data on the basis of the updated TSDF.

The completion of step S333 brings the real-time 3D modeling processing to an end, and the processing returns to Fig. 40.

<Flow of photogrammetry processing>

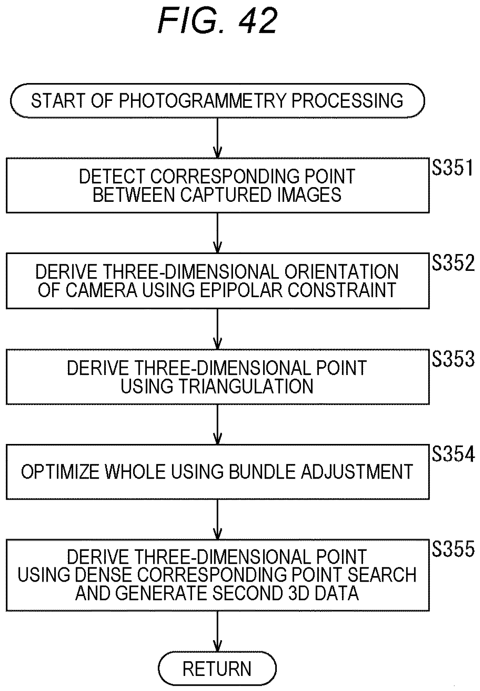

An example of a flow of the photogrammetry processing performed in step S309 in Fig. 40 will be described with reference to a flowchart in Fig. 42.

Upon the start of the photogrammetry processing, the SfM 1341 detects a corresponding point between the captured images in step S351.

In step S352, the SfM 1341 derives a three-dimensional orientation of the camera using epipolar constraint.

In step S353, the SfM 1341 derives a three-dimensional point using triangulation.

In step S354, the SfM 1341 optimizes the whole using bundle adjustment.

In step S355, the MVS 1342 derives a three-dimensional point by dense corresponding point search and generates the second 3D data.

The completion of step S355 bring the photogrammetry processing to an end, and the processing returns to Fig. 40.

By performing each processing as described above, the imaging device 1300 can image the 3D object in a more appropriate position and orientation, and can perform 3D modeling (second 3D modeling processing) using the captured image. Therefore, the imaging device 1300 can generate more accurate 3D data while suppressing an increase in the load of 3D modeling. Furthermore, the imaging device 1300 can output the guidance information so that the user can perform the second imaging in a more appropriate position and orientation. That is, the imaging device 1300 can perform 3D modeling (second 3D modeling processing) using the captured image. Therefore, the imaging device 1300 can generate more accurate 3D data while suppressing an increase in the load of 3D modeling. That is, the user can perform 3D modeling more easily.

<7. Second embodiment>

<Information processing system 1>

The present technology is not limited to the above-described examples, and can be applied to any configuration. For example, the present technology may be applied to an information processing system that performs 3D modeling.

For example, in an information processing system including an information processing device and an imaging device, the information processing device may include: a first 3D modeling processing unit that generates first three-dimensional shape information representing a three-dimensional shape of a 3D object on the basis of a first captured image generated by first imaging of imaging the 3D object; a scoring processing unit that uses the first three-dimensional shape information to evaluate accuracy of second three-dimensional shape information that can be generated using a second captured image generated by second imaging performed so far and generates a scoring result; an imaging control unit that generates imaging control information on the basis of which the second imaging of imaging the 3D object is controlled on the basis of a position and orientation of the imaging device and the scoring result; and a first communication unit that supplies the imaging control information to the imaging device. Furthermore, the imaging device may include: a second communication unit that acquires the imaging control information supplied from the information processing device; and an imaging unit that images the 3D object on the basis of the imaging control information to generate the second captured image.

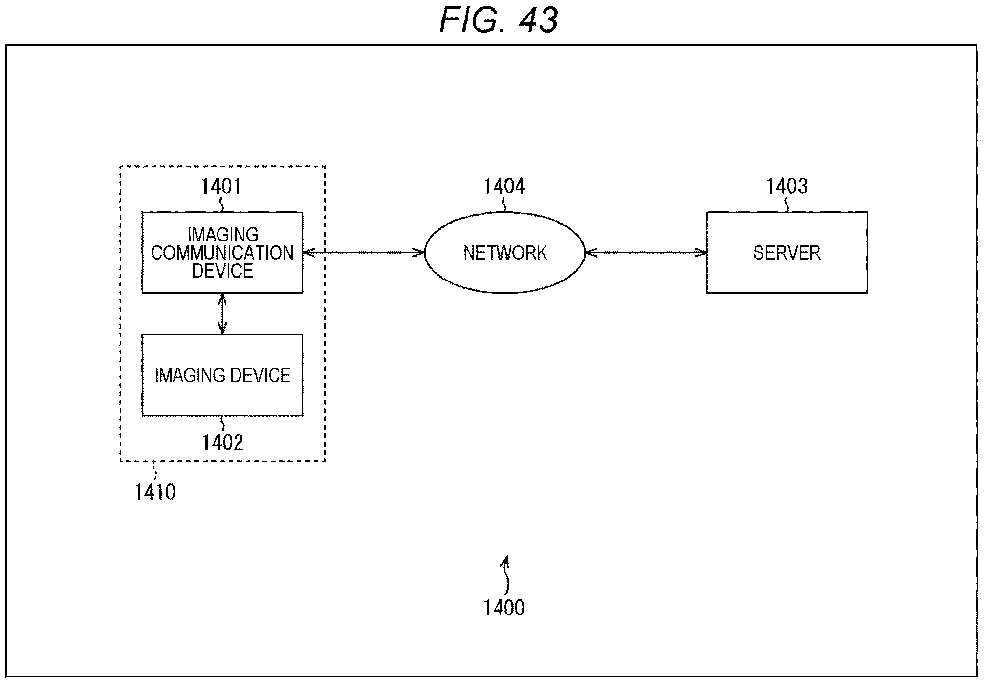

Fig. 43 is a diagram illustrating a configuration example of an aspect of the information processing system to which the present technology is applied. An information processing system 1400 illustrated in Fig. 43 is a system that images a 3D object and performs 3D modeling using the captured image. As illustrated in Fig. 43, the information processing system 1400 includes an imaging communication device 1401, an imaging device 1402, and a server 1403. The imaging communication device 1401 and the server 1403 are communicatively connected via a network 1404. The network 1404 is a communication path including any communication medium such as the Internet, a local area network (LAN), or a wireless LAN.

The imaging communication device 1401 is an information processing device having a communication function and an imaging function and capable of communicating with any device, such as a smartphone, via the network 1404. The imaging device 1402 is an information processing device having an imaging function, such as a digital camera. The imaging device 1402 can communicate only with the imaging communication device 1401. The imaging communication device 1401 and the imaging device 1402 are fixedly connected to each other, and are each used by the user as a terminal device 1410. The server 1403 acquires a second captured image generated in the terminal device 1410 (imaging device 1402), performs the second 3D modeling (photogrammetry processing) using the second captured image to generate the second 3D data, and stores (manages) the second 3D data.

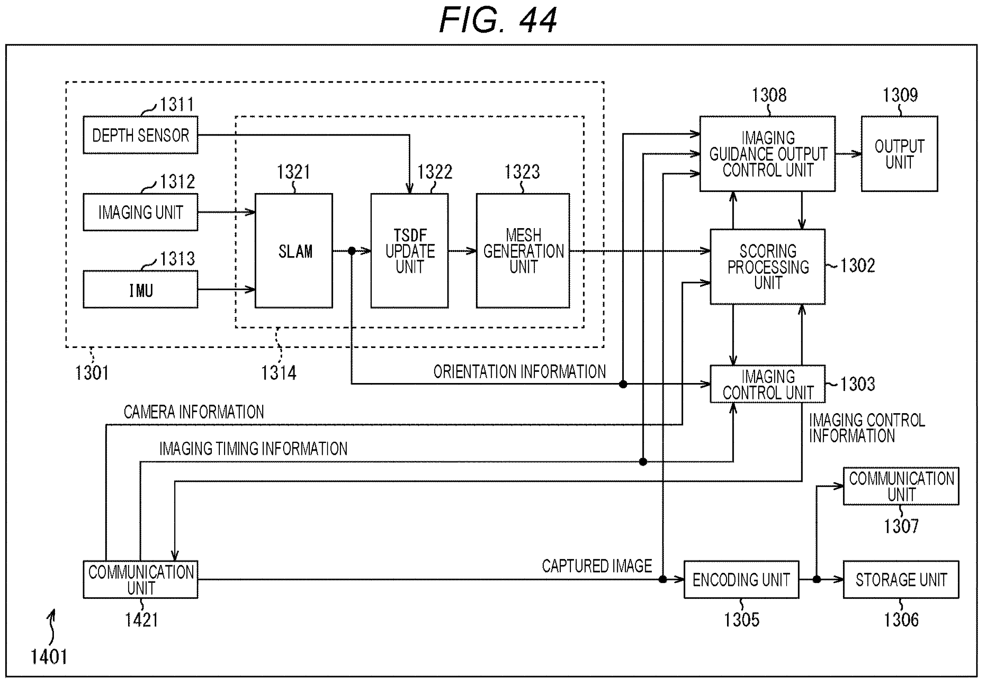

Fig. 44 is a block diagram illustrating a main configuration example of the imaging communication device 1401. Note that Fig. 44 illustrates a main configuration including processing units, data flows, and the like, and the processing units and the data flows illustrated in Fig. 44 are not necessarily all. That is, the imaging communication device 1401 may include a device or a processing unit not illustrated as a block in Fig. 44. Furthermore, there may be a data flow or processing that is not illustrated as an arrow or the like in Fig. 44.

As illustrated in Fig. 44, the imaging communication device 1401 includes a communication unit 1421 instead of the second 3D data generation unit 1304 that is a component of the imaging device 1300 (Fig. 39). That is, the other components are similar to those of the imaging device 1300.

The communication unit 1421 is communicatively connected to the imaging device 1402 and communicates with the imaging device 1402 to exchange information. For example, the communication unit 1421 may supply the imaging control information supplied from the imaging control unit 1303 to the imaging device 1402. Furthermore, the communication unit 1421 may acquire the second captured image generated by the imaging device 1402 and supply the second captured image to the encoding unit 1305 and the imaging guidance output control unit 1308. Furthermore, the communication unit 1421 may acquire the camera information supplied from the imaging device 1402 and supply the camera information to the scoring processing unit 1302. The camera information may include the internal parameter, external parameter, angle-of-view information, and the like of (the imaging unit 1332 of) the imaging device 1402. Furthermore, the communication unit 1421 may acquire the imaging timing information supplied from the imaging device 1402 and supply the imaging timing information to the imaging control unit 1303 and the imaging guidance output control unit 1308. This imaging timing information indicates the timing of imaging performed by (the imaging unit 1332 of) the imaging device 1402 without relying on the imaging control information.

Note that the communication unit 1307 is communicatively connected to the server 1403 via the network 1404, and communicates with the server 1403 to exchange information. For example, the encoding unit 1305 encodes the second captured image supplied from the communication unit 1421, and supplies the encoded data to the storage unit 1306 and the communication unit 1307. The storage unit 1306 stores the encoded data of the second captured image. The communication unit 1307 supplies the encoded data of the second captured image to the server 1403 via the network 1404.

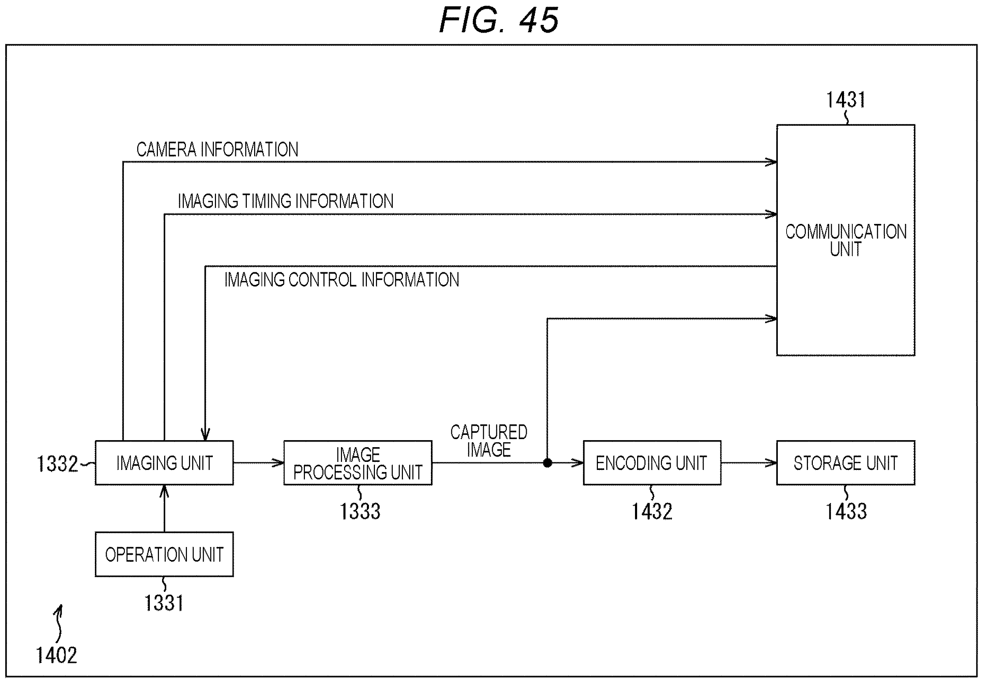

Fig. 45 is a block diagram illustrating a main configuration example of the imaging device 1402. Note that Fig. 45 illustrates a main configuration including processing units, data flows, and the like, and the processing units and the data flows illustrated in Fig. 45 are not necessarily all. That is, the imaging device 1402 may include a device or a processing unit not illustrated as a block in Fig. 45. Furthermore, there may be a data flow or processing that is not illustrated as an arrow or the like in Fig. 45.

As illustrated in Fig. 45, the imaging device 1402 includes an operation unit 1331, an imaging unit 1332, an image processing unit 1333, a communication unit 1431, an encoding unit 1432, and a storage unit 1433. The operation unit 1331, the imaging unit 1332, and the image processing unit 1333 perform processing similarly to the case of the imaging device 1300 in Fig. 39.

The communication unit 1431 is communicatively connected to the imaging communication device 1401 and communicates with the imaging communication device 1401 to exchange information. For example, the communication unit 1431 may acquire the imaging control information supplied from the imaging communication device 1401 and supply the imaging control information to the imaging unit 1332. Furthermore, the communication unit 1431 may acquire the camera information supplied from the imaging unit 1332 and supply the camera information to the imaging communication device 1401. The camera information may include the internal parameter, external parameter, angle of view information, and the like of the imaging unit 1332. Furthermore, the communication unit 1431 may acquire the imaging timing information supplied from the imaging unit 1332 and supply the imaging timing information to the imaging communication device 1401. The imaging timing information indicates the timing of imaging performed by the imaging unit 1332 without relying on the imaging control information. Furthermore, the communication unit 1431 may acquire the second captured image supplied from the image processing unit 1333 and supply the second captured image to the imaging communication device 1401.

The encoding unit 1432 encodes the second captured image supplied from the image processing unit 1333, and supplies the encoded data to the storage unit 1433. The storage unit 1433 stores the encoded data.

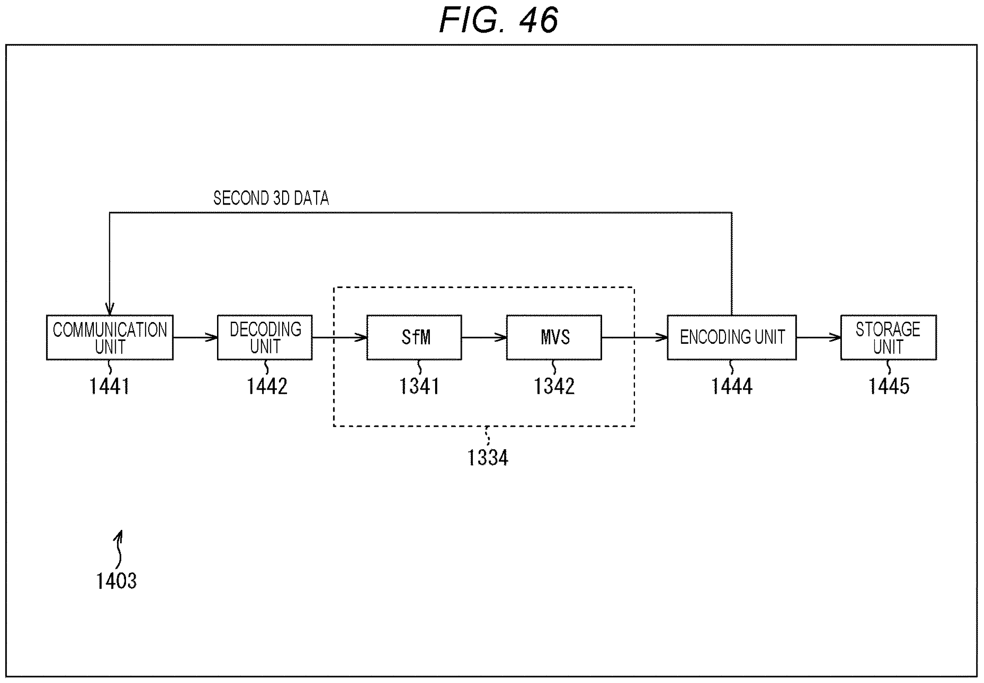

Fig. 46 is a block diagram illustrating a main configuration example of the server 1403. Note that Fig. 46 illustrates a main configuration including processing units, data flows, and the like, and the processing units and the data flows illustrated in Fig. 46 are not necessarily all. That is, the server 1403 may include a device or a processing unit not illustrated as a block in Fig. 46. Furthermore, there may be a data flow or processing that is not illustrated as an arrow or the like in Fig. 46.

As illustrated in Fig. 46, the server 1403 includes a communication unit 1441, a decoding unit 1442, a photogrammetry processing unit 1334, an encoding unit 1444, and a storage unit 1445. The photogrammetry processing unit 1334 has a configuration similar to that of the imaging device 1300 in Fig. 39, and performs similar processing.

The communication unit 1441 is communicatively connected to the imaging communication device 1401 via the network 1404 and communicates with other devices such as the imaging communication device 1401 to exchange information. For example, the communication unit 1441 acquires the encoded data of the second captured image supplied from the imaging communication device 1401, and supplies the encoded data to the decoding unit 1442. Furthermore, the communication unit 1441 may supply the encoded data of the second 3D data supplied from the encoding unit 1444 to another device (for example, the imaging communication device 1401) via the network 1404.

The decoding unit 1442 decodes the encoded data of the second captured image supplied from the communication unit 1441 to generate (restore) the second captured image. The decoding unit 1442 supplies the second captured image to the photogrammetry processing unit 1334 (SfM 1341). The photogrammetry processing unit 1334 performs second 3D modeling (photogrammetry processing) using the second captured image to generate the second 3D data. The photogrammetry processing unit 1334 (MVS 1342) supplies the generated second 3D data to the encoding unit 1444.

The encoding unit 1444 encodes the supplied second 3D data and supplies the encoded data to the storage unit 1445. Furthermore, the encoding unit 1444 may supply the encoded data of the second 3D data to the communication unit 1441. The storage unit 1445 stores the supplied encoded data of the second 3D data.

Since each device has such a configuration, the information processing system 1400 can image a 3D object in a more appropriate position and orientation and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Flow of 3D modeling processing>

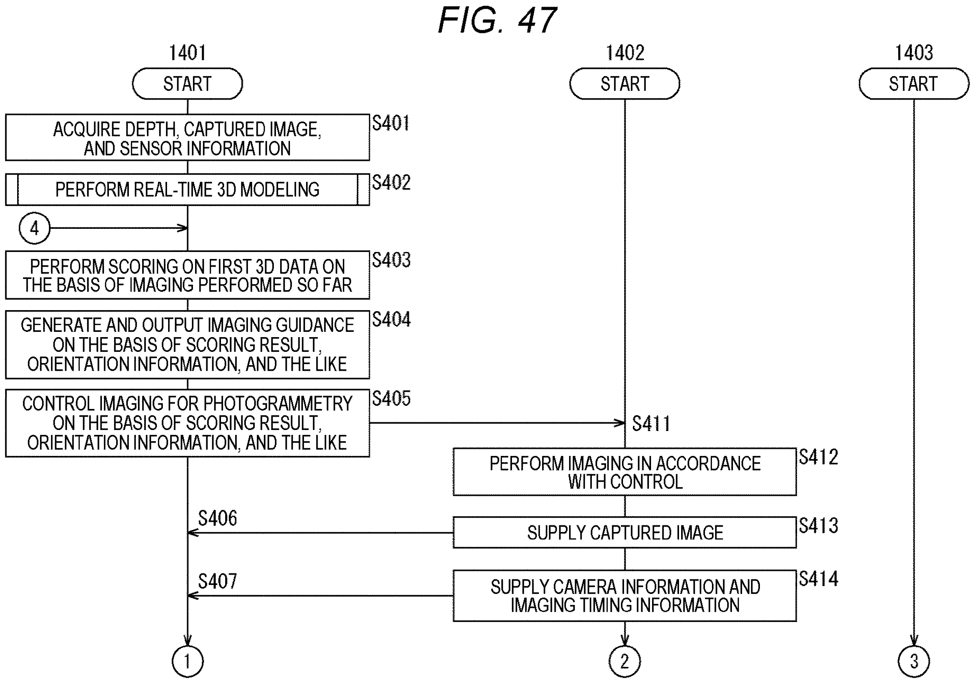

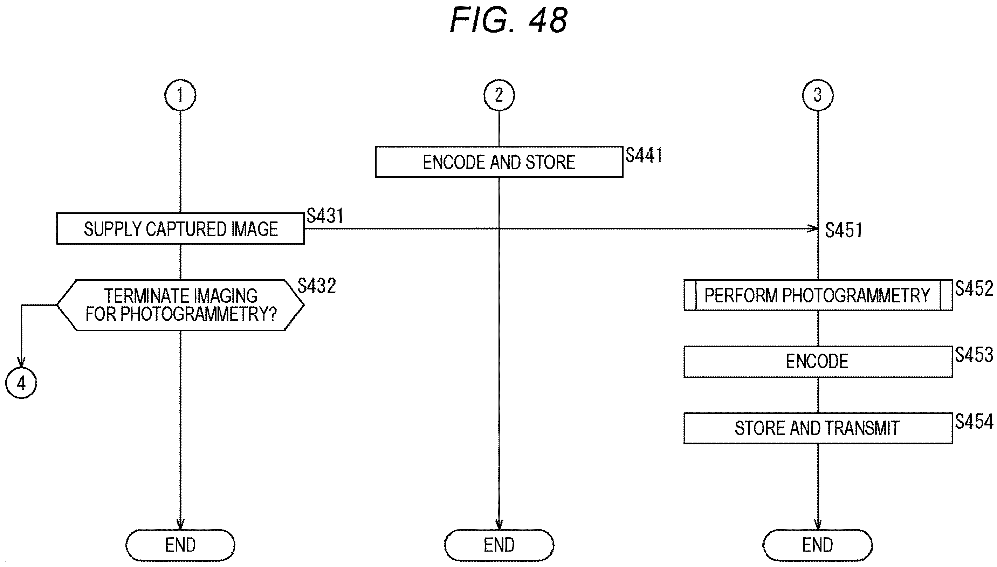

An example of a flow of the 3D modeling processing performed by the information processing system 1400 will be described with reference to flowcharts in Figs. 47 and 48.

Upon the start of the 3D modeling processing, the depth sensor 1311, the imaging unit 1312, and the IMU 1313 of the imaging communication device 1401 acquire a depth, a captured image, and inertial information in step S401 in Fig. 47.

In step S402, the real-time 3D modeling processing unit 1314 of the imaging communication device 1401 performs real-time 3D modeling processing to generate the first 3D data. This real-time 3D modeling processing is performed similarly to the example in Fig. 41.

In step S403, the scoring processing unit 1302 of the imaging communication device 1401 performs scoring on the first 3D data on the basis of the second imaging performed so far.

In step S404, the imaging guidance output control unit 1308 of the imaging communication device 1401 generates imaging guidance (guidance information) for the second imaging on the basis of the scoring result, the orientation information, and the like. The output unit 1309 outputs the imaging guidance (guidance information).

In step S405, the imaging control unit 1303 of the imaging communication device 1401 generates imaging control information on the basis of which the imaging for photogrammetry (second imaging) is controlled on the basis of the scoring result, the orientation information, and the like. The communication unit 1421 supplies the imaging control information to the imaging device 1402. In step S411, the communication unit 1431 of the imaging device 1402 acquires the imaging control information.

In step S412, the imaging unit 1332 of the imaging device 1402 performs imaging (performs the second imaging) in accordance with the control to generate the second captured image. The image processing unit 1333 performs predetermined image processing on the second captured image.

In step S413, the communication unit 1431 of the imaging device 1402 supplies the second captured image to the imaging communication device 1401. In step S406, the communication unit 1421 of the imaging communication device 1401 acquires the second captured image.

Furthermore, in step S414, the communication unit 1431 of the imaging device 1402 supplies the camera information and the imaging timing information regarding the imaging unit 1332 to the imaging communication device 1401. In step S407, the communication unit 1421 of the imaging communication device 1401 acquires the camera information and the imaging timing information.

In step S441 in Fig. 48, the encoding unit 1432 of the imaging device 1402 encodes the second captured image. The storage unit 1433 stores the encoded data of the second captured image.

In step S431, the encoding unit 1305 of the imaging communication device 1401 encodes the second captured image. The communication unit 1307 supplies the encoded data of the second captured image to the server 1403. In step S451, the communication unit 1441 of the server 1403 acquires the encoded data of the second captured image. The decoding unit 1442 decodes the encoded data to generate (restore) the second captured image.

In step S452, the photogrammetry processing unit 1334 of the server 1403 performs the photogrammetry processing to generate the second 3D data. This photogrammetry processing is performed similarly to the example in Fig. 42.

In step S453, the encoding unit 1444 of the server 1403 encodes the second 3D data.

In step S454, the storage unit 1445 of the server 1403 stores the encoded data. Furthermore, the communication unit 1441 transmits the encoded data to another device (for example, the imaging communication device 1401 or the like).

Furthermore, in step S432, the imaging control unit 1303 of the imaging communication device 1401 determines whether or not to terminate the imaging for photogrammetry (second imaging). In a case where it is determined that the imaging for photogrammetry is not terminated, the processing returns to step S403 in Fig. 47. Furthermore, in a case where it is determined in step S432 in Fig. 48 that the imaging for photogrammetry is terminated, the 3D modeling processing is brought to an end.

By performing each processing as described above, the information processing system 1400 can image the 3D object in a more appropriate position and orientation, and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Information processing system 2>

Note that, in the information processing system 1400, the scoring processing may be performed by the server 1403.

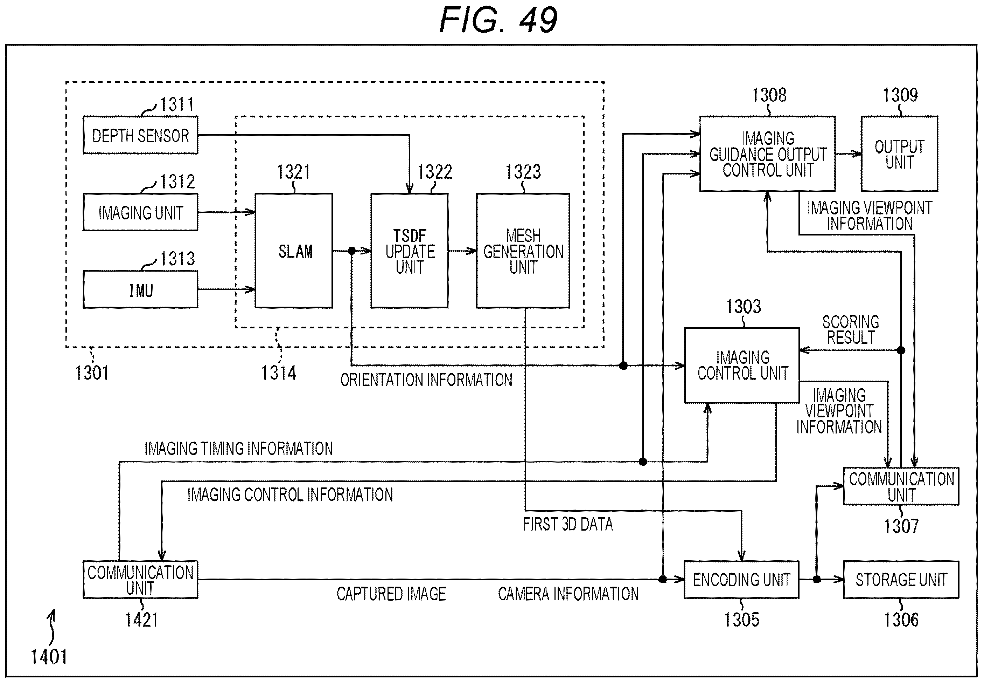

Fig. 49 illustrates a main configuration example of the imaging communication device 1401 in that case. Note that Fig. 49 illustrates a main configuration including processing units, data flows, and the like, and the processing units and the data flows illustrated in Fig. 49 are not necessarily all. That is, the imaging communication device 1401 may include a device or a processing unit not illustrated as a block in Fig. 49. Furthermore, there may be a data flow or processing that is not illustrated as an arrow or the like in Fig. 49.

As illustrated in Fig. 49, in the imaging communication device 1401 in this case, the scoring processing unit 1302 is omitted from the configuration in Fig. 44. In this case, the communication unit 1307 supplies the imaging viewpoint information supplied from the imaging control unit 1303 to the server 1403.

Furthermore, in this case, the real-time 3D modeling processing unit 1314 (mesh generation unit 1323) supplies the generated first 3D data to the encoding unit 1305. The encoding unit 1305 encodes the first 3D data and supplies the encoded data to the communication unit 1307. The communication unit 1307 supplies the encoded data of the first 3D data supplied from the encoding unit 1305 to the server 1403.

Furthermore, the communication unit 1307 acquires the scoring result derived by (the scoring processing unit 1302 of) the server 1403, and supplies the scoring result to the imaging control unit 1303 and the imaging guidance output control unit 1308.

Furthermore, similarly to the case in Fig. 45, the communication unit 1307 supplies, to the server 1403, the encoded data of the second captured image supplied from the encoding unit 1305.

Furthermore, in this case, the communication unit 1421 acquires the camera information (regarding the imaging unit 1332) supplied from the imaging device 1402, and supplies the camera information to the encoding unit 1305. The encoding unit 1305 encodes the camera information and supplies the encoded data to the communication unit 1307. The communication unit 1307 supplies the encoded data of the camera information to the server 1403.

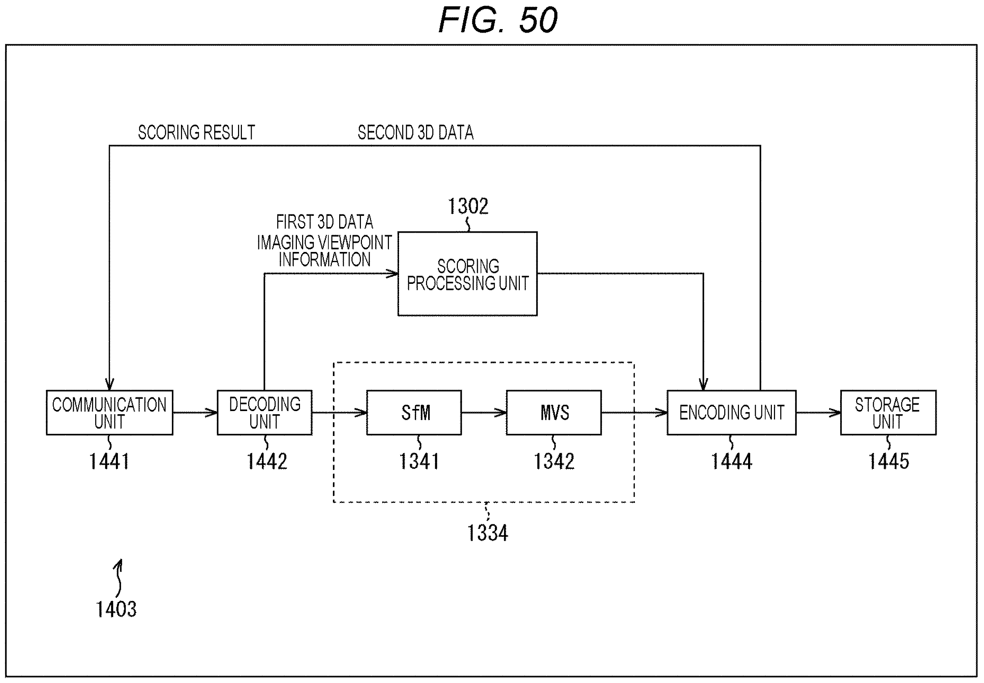

Fig. 50 is a block diagram illustrating a main configuration example of the server 1403. Note that Fig. 50 illustrates a main configuration including processing units, data flows, and the like, and the processing units and the data flows illustrated in Fig. 50 are not necessarily all. That is, the server 1403 may include a device or a processing unit not illustrated as a block in Fig. 50. Furthermore, there may be a data flow or processing that is not illustrated as an arrow or the like in Fig. 50.

As illustrated in Fig. 50, in this case, the server 1403 includes a scoring processing unit 1302 in addition to the components in Fig. 46. In this case, the communication unit 1441 acquires the encoded data of the first 3D data supplied from the imaging communication device 1401, and supplies the encoded data to the decoding unit 1442. The decoding unit 1442 decodes the encoded data to generate (restore) the first 3D data. The decoding unit 1442 supplies the first 3D data to the scoring processing unit 1302.

Furthermore, the communication unit 1441 acquires the imaging viewpoint information supplied from the imaging communication device 1401, and supplies the imaging viewpoint information to the decoding unit 1442. The decoding unit 1442 supplies the imaging control information to the scoring processing unit 1302.

Furthermore, the communication unit 1441 acquires the encoded data of the camera information supplied from the imaging communication device 1401, and supplies the encoded data to the decoding unit 1442. The decoding unit 1442 decodes the encoded data to generate (restore) the camera information. The decoding unit 1442 supplies the camera information to the scoring processing unit 1302.

Furthermore, similarly to the case in Fig. 46, the communication unit 1441 acquires the encoded data of the second captured image supplied from the imaging communication device 1401, and supplies the encoded data to the decoding unit 1442. The decoding unit 1442 decodes the encoded data to generate (restore) the second captured image. The decoding unit 1442 supplies the second captured image to the photogrammetry processing unit 1334.

In this case as well, the scoring processing unit 1302 performs the scoring processing 102 in Fig. 4 on the basis of the supplied first 3D data and imaging viewpoint information to derive the scoring result. Furthermore, the scoring processing unit 1302 may perform the scoring processing 102 on the basis of the camera information. The scoring processing unit 1302 supplies the scoring result to the encoding unit 1444. The encoding unit 1444 supplies the scoring result to the communication unit 1441. The communication unit 1441 supplies the scoring result to the imaging communication device 1401.

The other processing is similar to that in Fig. 46.

Since each device has such a configuration, the information processing system 1400 can also image the 3D object in a more appropriate position and orientation and perform 3D modeling (second 3D modeling processing) using the captured image in this case. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Flow of 3D modeling processing>

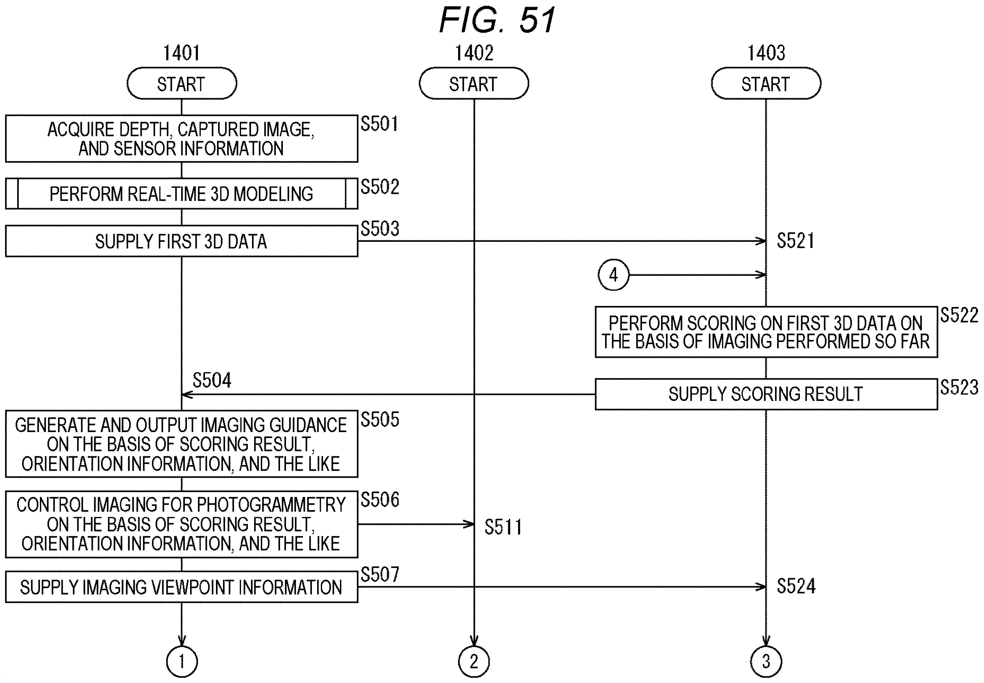

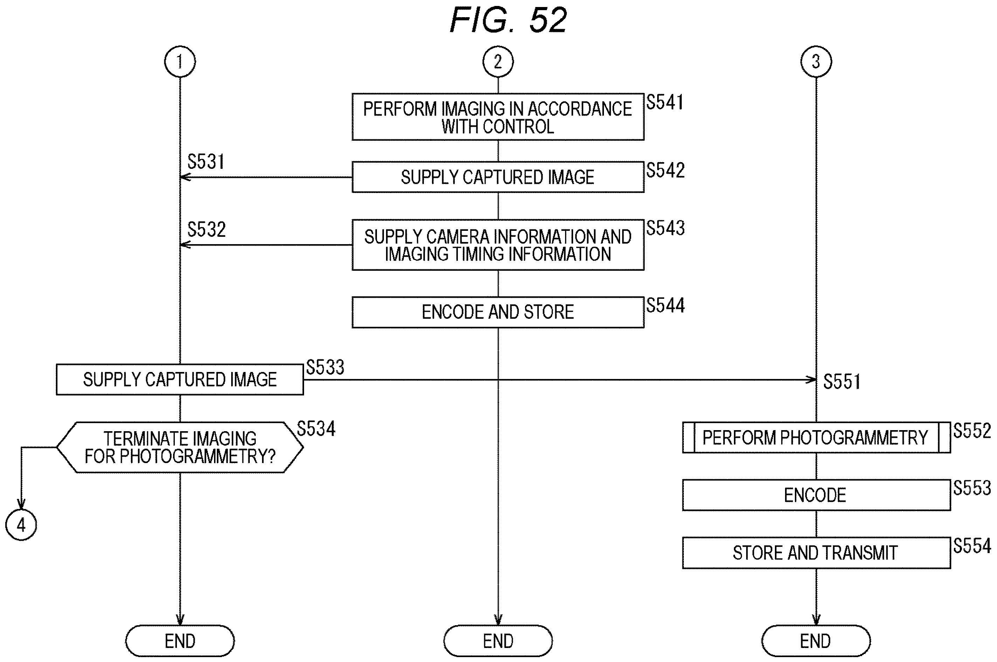

An example of a flow of the 3D modeling processing performed by the information processing system 1400 will be described with reference to flowcharts in Figs. 51 and 52.

Upon the start of the 3D modeling processing, the depth sensor 1311, the imaging unit 1312, and the IMU 1313 of the imaging communication device 1401 acquire a depth, a captured image, and inertial information in step S501 in Fig. 51.

In step S502, the real-time 3D modeling processing unit 1314 of the imaging communication device 1401 performs real-time 3D modeling processing to generate the first 3D data. This real-time 3D modeling processing is performed similarly to the example in Fig. 41.

In step S503, the communication unit 1307 of the imaging communication device 1401 supplies the generated first 3D data to the server 1403. In step S521, the communication unit 1441 of the server 1403 acquires the first 3D data.

In step S522, the scoring processing unit 1302 of the server 1403 performs scoring on the first 3D data on the basis of the second imaging performed so far.

In step S523, the communication unit 1441 of the server 1403 supplies the scoring result to the imaging communication device 1401. In step S504, the communication unit 1307 of the imaging communication device 1401 acquires the scoring result.

In step S505, the imaging guidance output control unit 1308 of the imaging communication device 1401 generates imaging guidance (guidance information) for the second imaging on the basis of the scoring result, the orientation information, and the like. The output unit 1309 outputs the imaging guidance (guidance information).

In step S506, the imaging control unit 1303 of the imaging communication device 1401 generates imaging control information on the basis of which the imaging for photogrammetry (second imaging) is controlled on the basis of the scoring result, the orientation information, and the like. The communication unit 1421 supplies the imaging control information to the imaging device 1402. In step S511, the communication unit 1431 of the imaging device 1402 acquires the imaging control information.

Furthermore, in step S507, the communication unit 1307 of the imaging communication device 1401 supplies the imaging viewpoint information to the server 1403. In step S524, the communication unit 1441 of the server 1403 acquires the imaging viewpoint information.

In step S541 in Fig. 52, the imaging unit 1332 of the imaging device 1402 performs imaging (performs the second imaging) in accordance with the imaging control information to generate the second captured image. The image processing unit 1333 performs predetermined image processing on the second captured image.

In step S542, the communication unit 1431 of the imaging device 1402 supplies the second captured image to the imaging communication device 1401. In step S531, the communication unit 1421 of the imaging communication device 1401 acquires the second captured image.

Furthermore, in step S543, the communication unit 1431 of the imaging device 1402 supplies the camera information and the imaging timing information regarding the imaging unit 1332 to the imaging communication device 1401. In step S532, the communication unit 1421 of the imaging communication device 1401 acquires the camera information and the imaging timing information.

In step S544, the encoding unit 1432 of the imaging device 1402 encodes the second captured image. The storage unit 1433 stores the encoded data of the second captured image.

In step S533, the encoding unit 1305 of the imaging communication device 1401 encodes the second captured image. The communication unit 1307 supplies the encoded data of the second captured image to the server 1403. In step S551, the communication unit 1441 of the server 1403 acquires the encoded data of the second captured image. The decoding unit 1442 decodes the encoded data to generate (restore) the second captured image.

In step S552, the photogrammetry processing unit 1334 of the server 1403 performs the photogrammetry processing to generate the second 3D data. This photogrammetry processing is performed similarly to the example in Fig. 42.

In step S553, the encoding unit 1444 of the server 1403 encodes the second 3D data.

In step S554, the storage unit 1445 of the server 1403 stores the encoded data. Furthermore, the communication unit 1441 transmits the encoded data to another device (for example, the imaging communication device 1401 or the like).

Furthermore, in step S534, the imaging control unit 1303 of the imaging communication device 1401 determines whether or not to terminate the imaging for photogrammetry (second imaging). In a case where it is determined that the imaging for photogrammetry is not terminated, the processing returns to step S522 in Fig. 51. Furthermore, in a case where it is determined in step S534 in Fig. 52 that the imaging for photogrammetry is terminated, the 3D modeling processing is brought to an end.

By performing each processing as described above, the information processing system 1400 can image the 3D object in a more appropriate position and orientation, and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<8. Third embodiment>

<Application of calibration processing to information processing system>

The present technology described above in <5. Calibration processing> can be applied to any information processing device. For example, the present technology can be applied to any of the systems and devices described in the first embodiment and the second embodiment.

For example, the present technology described above in <5. Calibration processing> can be applied to the information processing system 1400 in Fig. 43. Hereinafter, such a case will be described.

<Imaging communication device>

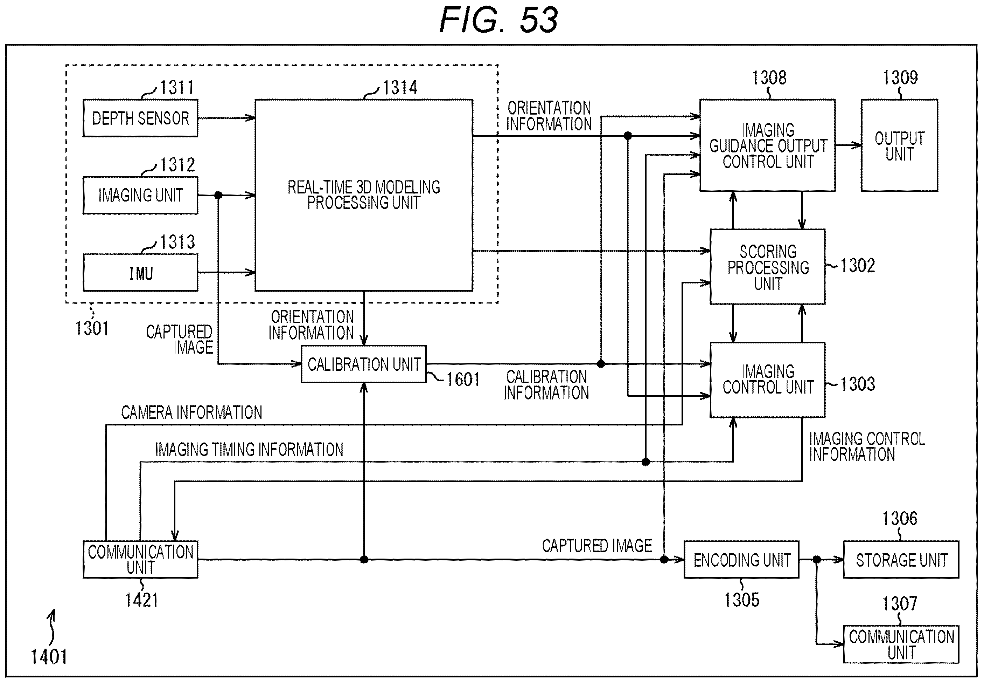

Fig. 53 is a block diagram illustrating a main configuration example of the imaging communication device 1401. Note that Fig. 53 illustrates a main configuration including processing units, data flows, and the like, and the processing units and the data flows illustrated in Fig. 53 are not necessarily all. That is, the imaging communication device 1401 may include a device or a processing unit not illustrated as a block in Fig. 53. Furthermore, there may be a data flow or processing that is not illustrated as an arrow or the like in Fig. 53.

As illustrated in Fig. 53, in this case, the imaging communication device 1401 includes a calibration unit 1601 in addition to the components (processing units) described with reference to Fig. 44. That is, the other components are similar to those in Fig. 44.

The calibration unit 1601 performs the calibration processing 106 in Fig. 4. That is, the calibration unit 1601 can perform each processing in Fig. 27 and each processing in Fig. 33. For example, calibration unit 1601 acquires the first captured image generated by the imaging unit 1312. Furthermore, the calibration unit 1601 acquires the first orientation information derived by the real-time 3D modeling processing unit 1314. Furthermore, the calibration unit 1601 acquires the second captured image generated by the imaging unit 1332 of the imaging device 1402 via the communication unit 1421. The calibration unit 1601 calibrates the second orientation information indicating the position and orientation of the imaging unit 1332 (second imaging unit) on the basis of these pieces of information, and generates configuration information as the calibration result. The calibration unit 1601 supplies the configuration information to the imaging control unit 1303, the imaging guidance output control unit 1308, or both.

The imaging control unit 1303 controls the second imaging using the calibration information supplied from the calibration unit 1601. Similarly, the imaging guidance output control unit 1308 generates guidance information for the second imaging using the calibration information supplied from the calibration unit 1601, and controls the output of the guidance information.

<Calibration unit>

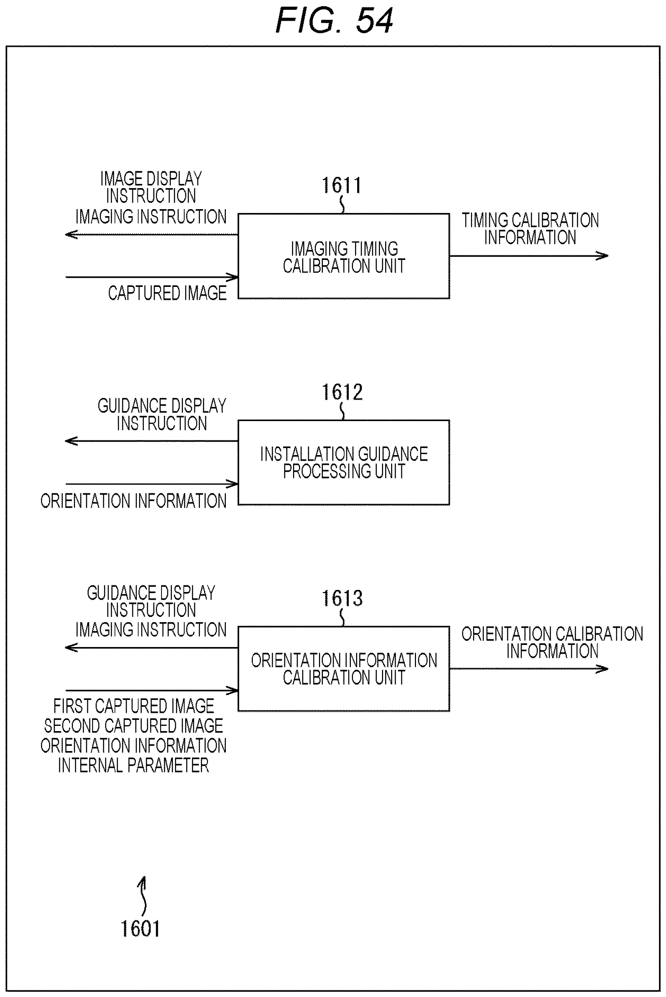

Fig. 54 is a block diagram illustrating a main configuration example of the calibration unit 1601. As illustrated in Fig. 54, the calibration unit 1601 includes an imaging timing calibration unit 1611, an installation guidance processing unit 1612, and an orientation information calibration unit 1613.

The imaging timing calibration unit 1611 performs the imaging timing calibration processing 341 in Fig. 27. For example, the imaging timing calibration unit 1611 supplies an image display instruction for instructing the display of the measurement image to the output unit 1309. Furthermore, the imaging timing calibration unit 1611 supplies an imaging instruction to the imaging unit 1312 and the imaging unit 1332 of the imaging device 1402. Furthermore, the imaging timing calibration unit 1611 acquires the first captured image supplied from the imaging unit 1312 and the second captured image supplied from the imaging unit 1332 of the imaging device 1402 as a response to the instruction. The imaging timing calibration unit 1611 calibrates the imaging timing of the second imaging unit on the basis of these pieces of information, and generates timing calibration information as the calibration result. The imaging timing calibration unit 1611 supplies the generated timing calibration information to the imaging control unit 1303.

The installation guidance processing unit 1612 performs the installation guidance processing 342 in Fig. 27. For example, the installation guidance processing unit 1612 instructs the output unit 1309 to display guidance (image) to prompt installation of the second imaging unit (ILC 302) in the correct relative position and orientation on the first imaging unit (smartphone 301). Furthermore, the installation guidance processing unit 1612 acquires a captured image obtained by imaging the guidance displayed on the output unit 1309.

The orientation information calibration unit 1613 performs the orientation information calibration processing 343 in Fig. 27. That is, the orientation information calibration unit 1613 can perform each processing in Fig. 33. For example, the orientation information calibration unit 1613 instructs display of guidance or instructs imaging. Furthermore, the orientation information calibration unit 1613 acquires the first captured image, the second captured image, the orientation information, the internal parameter, and the like. The orientation information calibration unit 1613 calibrates the orientation information using these pieces of information, and generates orientation calibration information as the calibration result. The orientation information calibration unit 1613 supplies the generated orientation calibration information to the imaging control unit 1303, the imaging guidance output control unit 1308, or both.

With such a configuration, the imaging communication device 1401 can control (instruct) the second imaging so that the second imaging is performed at appropriate timing (desired position). Furthermore, the imaging communication device 1401 can install the second imaging unit in the correct relative position and orientation on the first imaging unit. Furthermore, the imaging communication device 1401 can suppress a decrease in the accuracy of the position and orientation of the second imaging unit. Therefore, the imaging communication device 1401 can suppress a decrease in the accuracy of the navigation of the second imaging. Therefore, the imaging communication device 1401 can obtain a captured image in a more appropriate position and orientation, and can suppress a decrease in the accuracy of the 3D data obtained by the second 3D modeling. Furthermore, since the second imaging can be performed in a more appropriate position and orientation, the imaging communication device 1401 can suppress an increase in the number of captured images used in the second 3D modeling. Therefore, the imaging communication device 1401 can suppress an increase in the user's workload. Furthermore, the imaging communication device 1401 can suppress an increase in the load (processing volume, processing time, and the like) of the 3D modeling processing.

<Flow of 3D modeling processing>

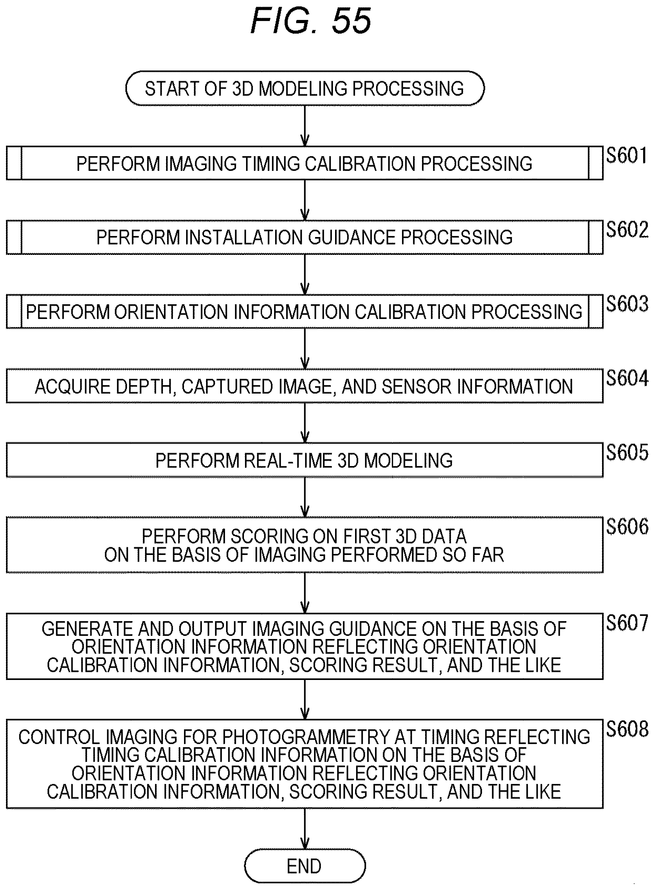

Next, an example of a flow of the 3D modeling processing performed by the imaging communication device 1401 in this case will be described with reference to a flowchart in Fig. 55.

Upon the start of the 3D modeling processing, the imaging timing calibration unit 1611 of the imaging communication device 1401 performs the imaging timing calibration processing in step S601.

In step S602, the installation guidance processing unit 1612 performs the installation guidance processing.

In step S603, the orientation information calibration unit 1613 performs the orientation information calibration processing.

Steps S604 to S606 are performed similarly to steps S301 to S303 in Fig. 40, respectively.

In step S607, the imaging guidance output control unit 1308 reflects the orientation calibration information in the second orientation information. Furthermore, the imaging guidance output control unit 1308 generates imaging guidance on the basis of the second orientation information reflecting the orientation calibration information, the scoring result, and the like, supplies the imaging guidance to the output unit 1309 for output.

In step S608, the imaging control unit 1303 reflects the orientation calibration information in the second orientation information. Furthermore, the imaging control unit 1303 controls the second imaging (imaging for photogrammetry) at the timing reflecting the timing calibration information on the basis of the second orientation information reflecting the orientation calibration information, the scoring result, and the like.

The completion of step S608 brings the 3D modeling processing to an end.

<Flow of imaging timing calibration processing>

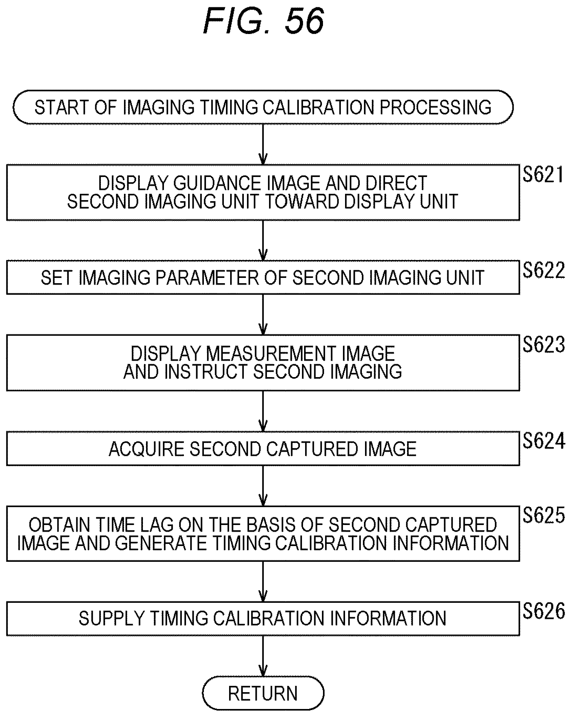

Next, an example of a flow of the imaging timing calibration processing performed in step S601 in Fig. 55 will be described with reference to a flowchart in Fig. 56.

Upon the start of the imaging timing calibration processing, the imaging timing calibration unit 1611 displays the guidance image to direct the second imaging unit toward the display unit in step S621.

In step S622, the imaging timing calibration unit 1611 sets an imaging parameter of the second imaging unit.

In step S623, the imaging timing calibration unit 1611 displays the measurement image and instructs the second imaging.

In step S624, the imaging timing calibration unit 1611 acquires the second captured image.

In step S625, the imaging timing calibration unit 1611 obtains a time lag on the basis of the second captured image, calibrates the second orientation information on the basis of the time lag, and generates timing calibration information as the calibration result. In step S626, the generated timing calibration information is supplied to the imaging control unit 1303. This allows the imaging control unit 1303 to control the second imaging using the timing calibration information.

The completion of step S625 bring the imaging timing calibration processing to an end, and the processing returns to Fig. 55.

<Flow of installation guidance processing>

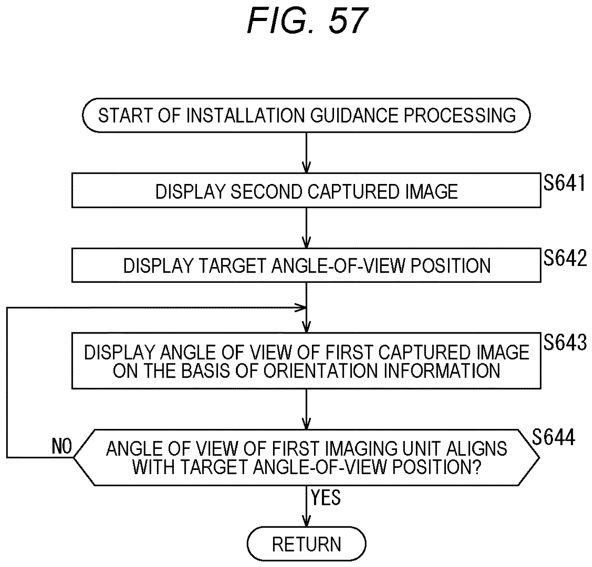

Next, an example of a flow of the installation guidance processing performed in step S602 in Fig. 55 will be described with reference to a flowchart in Fig. 57.

Upon the start of the installation guidance processing, the installation guidance processing unit 1612 displays the second captured image in step S641. In step S642, the installation guidance processing unit 1612 displays a target angle-of-view position. In step S643, the installation guidance processing unit 1612 displays the angle of view of the first imaging unit on the basis of the first orientation information.

In step S644, the installation guidance processing unit 1612 determines whether or not the angle of view of the first imaging unit aligns with the target angle-of-view position. In a case where it is determined that the angle of view of the first imaging unit is misaligned with the target angle-of-view position, the processing returns to step S643, and the subsequent processing is repeated.

Furthermore, in a case where it is determined in step S644 that the angle of view of the first imaging unit aligns with the target angle-of-view position as a result of moving, by the user, (the imaging communication device 1401 equipped with) the first imaging unit (the imaging unit 1312), the installation guidance processing is brought to an end, and the processing returns to Fig. 55.

<Flow of orientation information calibration processing>

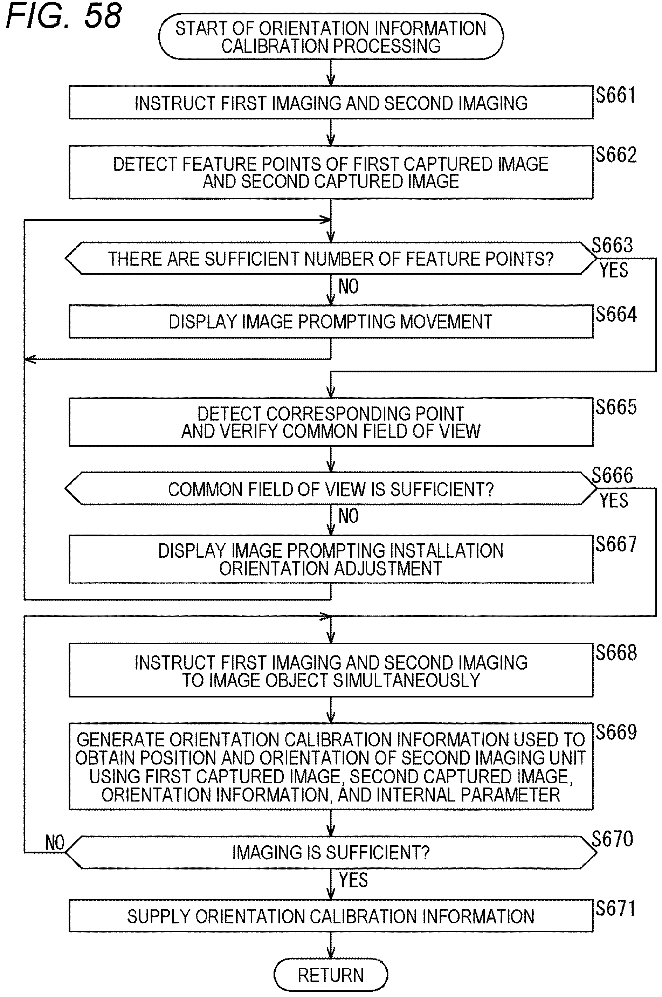

Next, an example of a flow of the orientation information calibration processing performed in step S603 in Fig. 55 will be described with reference to a flowchart in Fig. 58.

Upon the start of the orientation information calibration processing, the orientation information calibration unit 1613 instructs the first imaging and the second imaging in step S661.

In step S662, the orientation information calibration unit 1613 detects feature points of the first captured image and the second captured image. In step S663, the orientation information calibration unit 1613 determines whether or not there are sufficient number of detected feature points. In a case where it is determined that the number of feature points is not sufficient, the processing proceeds to step S664. In step S664, the orientation information calibration unit 1613 displays an image prompting movement.

Upon the completion of step S664, the processing returns to step S663, and the subsequent processing is repeated. Furthermore, in a case where it is determined in step S663 that a sufficient number of feature points have been detected, the processing proceeds to step S665.

In step S665, the orientation information calibration unit 1613 compares the detected feature points to detect a corresponding point between the first captured image and the second captured image, and verifies the common field of view between the first captured image and the second captured image.

In step S666, the orientation information calibration unit 1613 determines whether or not a sufficient common field of view is present. In a case where it is determined that a sufficient common field of view is not present, the processing proceeds to step S667.

In step S667, the orientation information calibration unit 1613 displays an image prompting installation orientation adjustment. Upon the completion of step S667, the processing returns to step S663, and the subsequent processing is repeated. Furthermore, in a case where it is determined in step S666 that a sufficient common field of view is present, the processing proceeds to step S668.

In step S668, the orientation information calibration unit 1613 instructs the first imaging and the second imaging to simultaneously image the object.

In step S669, the orientation information calibration unit 1613 generates orientation calibration information for obtaining the position and orientation of the second imaging unit using the first captured image, the second captured image, the orientation information, and the internal parameter.

In step S670, the orientation information calibration unit 1613 determines whether or not imaging is sufficient. In a case where it is determined that imaging is not sufficient, the processing returns to step S668, and the subsequent processing is repeated. Furthermore, in a case where it is determined in step S670 that imaging is sufficient, the processing proceeds to step S671.

In step S671, the orientation information calibration unit 1613 supplies the orientation calibration information to the imaging control unit 1303, the imaging guidance output control unit 1308, or both. This allows the imaging control unit 1303, the imaging guidance output control unit 1308, or both to control the second imaging using the orientation calibration information.

The completion of step S671 brings the orientation information calibration processing to an end, and the processing returns to Fig. 55.

As described above, by performing each processing, the imaging communication device 1401 can control (instruct) the second imaging so that the second imaging is performed at appropriate timing (desired position). Furthermore, the imaging communication device 1401 can install the second imaging unit in the correct relative position and orientation on the first imaging unit. Furthermore, the imaging communication device 1401 can suppress a decrease in the accuracy of the position and orientation of the second imaging unit. Therefore, the imaging communication device 1401 can suppress a decrease in the accuracy of the navigation of the second imaging. Therefore, the imaging communication device 1401 can obtain a captured image in a more appropriate position and orientation, and can suppress a decrease in the accuracy of the 3D data obtained by the second 3D modeling. Furthermore, since the second imaging can be performed in a more appropriate position and orientation, the imaging communication device 1401 can suppress an increase in the number of captured images used in the second 3D modeling. Therefore, the imaging communication device 1401 can suppress an increase in the user's workload. Furthermore, the imaging communication device 1401 can suppress an increase in the load (processing volume, processing time, and the like) of the 3D modeling processing.

<Regarding Example 2 of calibration processing>

<Calibration unit>

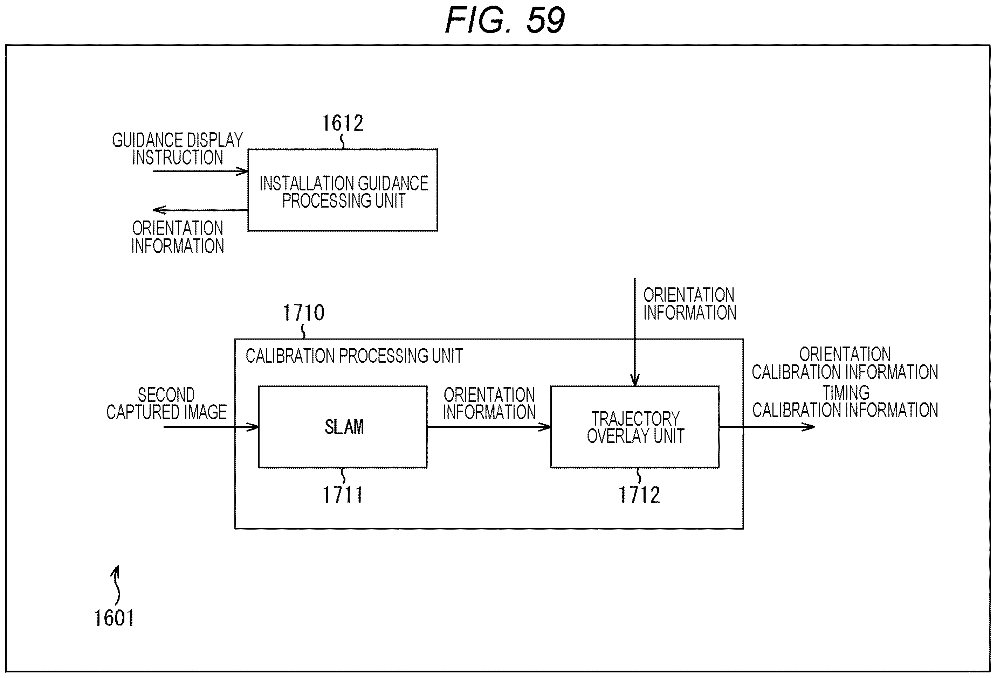

A case where the above-described example is applied in <Example 2 of calibration processing> will be described. Fig. 59 is a block diagram illustrating a main configuration example of the calibration unit 1601 in that case. In this case, the calibration unit 1601 includes an installation guidance processing unit 1612 and a calibration processing unit 1710. The installation guidance processing unit 1612 has a configuration similar to that of the case in Fig. 54 and performs similar processing. The calibration processing unit 1710 includes SLAM 1711 and a trajectory overlay unit 1712.

The SLAM 1711 acquires the second captured image, performs SLAM on the second captured image, performs self-localization, and generates orientation information (second orientation information) indicating the position and orientation of the second imaging unit (that is, the imaging unit 1332). The SLAM 1711 supplies the generated orientation information to the trajectory overlay unit 1712.

The trajectory overlay unit 1712 acquires the orientation information (second orientation information) supplied from the SLAM 1711. Furthermore, the trajectory overlay unit 1712 acquires the orientation information (first orientation information) supplied from the real-time 3D modeling processing unit 1314 (SLAM 1321). The trajectory overlay unit 1712 derives a trajectory of the first imaging unit (imaging unit 1312) on the basis of the orientation information (first orientation information) supplied from the real-time 3D modeling processing unit 1314 (SLAM 1321). Furthermore, the trajectory overlay unit 1712 derives a trajectory of the second imaging unit (imaging unit 1332) on the basis of the orientation information (second orientation information) supplied from the SLAM 1711. The trajectory overlay unit 1712 overlays the trajectories using a technique such as ICP, for example, and calibrates the second orientation information using the difference. The trajectory overlay unit 1712 generates orientation calibration information indicating the calibration result and supplies the orientation calibration information to the imaging control unit 1303, the imaging guidance output control unit 1308, or both.

Furthermore, the trajectory overlay unit 1712 applies, as latency, a time difference when the first imaging unit (the imaging unit 1312) and the second imaging unit (the imaging unit 1332) are located at the same physical position on the basis of the result of overlaying the trajectories, and calibrates the imaging timing of the second imaging unit. The trajectory overlay unit 1712 generates timing calibration information indicating the calibration result, and supplies the timing calibration information to the imaging control unit 1303, the imaging guidance output control unit 1308, or both.

With such a configuration, the imaging communication device 1401 can install the second imaging unit in the correct relative position and orientation on the first imaging unit. Furthermore, the imaging communication device 1401 can suppress a decrease in the accuracy of the position and orientation of the second imaging unit. Furthermore, the imaging communication device 1401 can control (instruct) the second imaging so that the second imaging is performed at appropriate timing (desired position). Therefore, the imaging communication device 1401 can suppress a decrease in the accuracy of the navigation of the second imaging. Therefore, the imaging communication device 1401 can obtain a captured image in a more appropriate position and orientation, and can suppress a decrease in the accuracy of the 3D data obtained by the second 3D modeling. Furthermore, since the second imaging can be performed in a more appropriate position and orientation, the imaging communication device 1401 can suppress an increase in the number of captured images used in the second 3D modeling. Therefore, the imaging communication device 1401 can suppress an increase in the user's workload. Furthermore, the imaging communication device 1401 can suppress an increase in the load (processing volume, processing time, and the like) of the 3D modeling processing.

<Flow of 3D modeling processing>

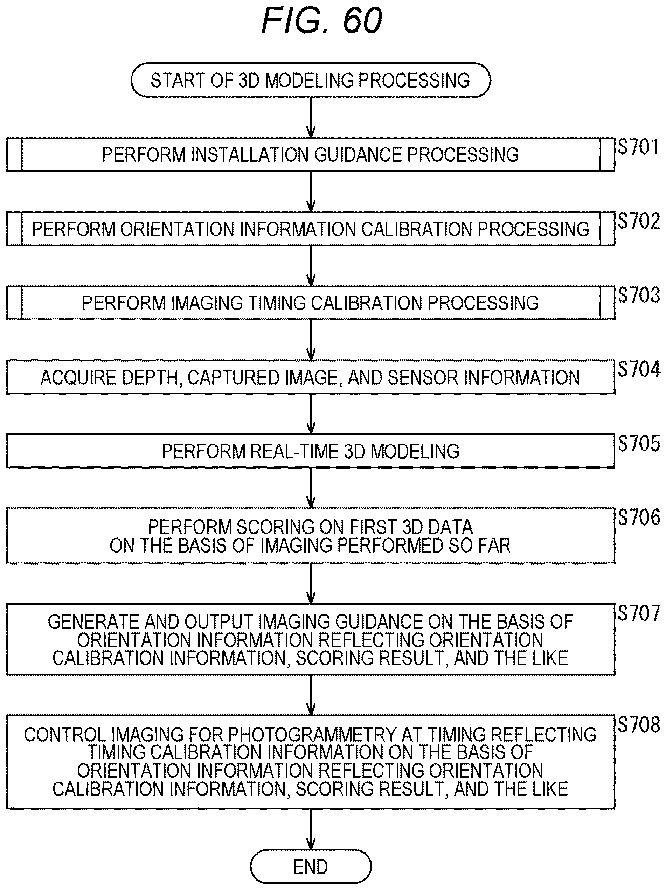

Next, an example of a flow of the 3D modeling processing performed by the imaging communication device 1401 in this case will be described with reference to a flowchart in Fig. 60.

Upon the start of the 3D modeling processing, the installation guidance processing unit 1612 performs the installation guidance processing. This processing is performed in a similar manner to the case described with reference to the flowchart in Fig. 57.

In step S702, the calibration processing unit 1710 performs the orientation information calibration processing. In step S703, the calibration processing unit 1710 performs the imaging timing calibration processing.

Steps S704 to S708 are performed similarly to steps S604 to S608 in Fig. 55, respectively.

The completion of step S708 brings the 3D modeling processing to an end.

<Flow of orientation information calibration processing>

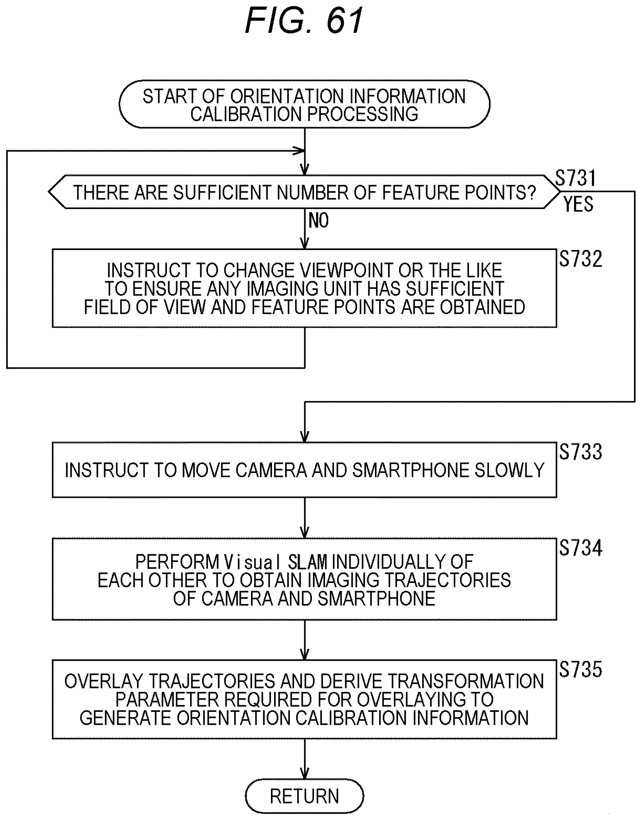

Next, an example of a flow of the orientation information calibration processing performed in step S702 in Fig. 60 will be described with reference to a flowchart in Fig. 61.

Upon the start of the orientation information calibration processing, the first captured image and the second captured image are captured as moving images. Then, in step S731, the calibration processing unit 1710 detects a feature point for each frame of the first captured image and the second captured image, and determines whether or not there are sufficient number of detected feature points. In a case where it is determined that the number of feature points is not sufficient (insufficient), the processing proceeds to step S732. In step S732, the calibration processing unit 1710 issues an instruction to change the viewpoint or the like to ensure that any imaging has a sufficient field of view and a sufficient number of feature points can be detected. For example, the calibration processing unit 1710 displays an image prompting movement.

Upon the completion of step S732, the processing returns to step S731. That is, steps S731 and S732 are repeated until it is determined in step S731 that there are a sufficient number of feature points. Then, in a case where it is determined in step S731 that a sufficient number of feature points have been detected, the processing proceeds to step S733.

In step S733, the calibration processing unit 1710 issues an instruction to move the imaging communication device 1401 (for example, the smartphone) and the imaging device 1402 (for example, the ILC) slowly. For example, the calibration processing unit 1710 displays an image prompting such movement (change in viewpoint).

In step S734, the calibration processing unit 1710 performs Visual SLAM on the first captured image and the second captured image independently of each other to derive the trajectory of the first imaging unit and the trajectory of the second imaging unit. For example, the SLAM 1321 performs Visual SLAM on each frame of the first captured image to derive the first orientation information. The trajectory overlay unit 1712 derives a trajectory of the first imaging unit on the basis of the first orientation information. Furthermore, the SLAM 1711 performs Visual SLAM on each frame of the second captured image to derive the second orientation information. The trajectory overlay unit 1712 derives a trajectory of the second imaging unit on the basis of the second orientation information.

In step S735, the trajectory overlay unit 1712 overlays the trajectories, derives a transformation parameter required for overlaying, and generates orientation calibration information. For example, the trajectory overlay unit 1712 overlays the trajectory of the first imaging unit and the trajectory of the second imaging unit using a technique such as ICP, and calibrates the second orientation information using the difference. The trajectory overlay unit 1712 generates orientation calibration information indicating the calibration result.

The completion of step S735 brings the orientation information calibration processing to an end, and the processing returns to Fig. 60.

<Flow of imaging timing calibration processing>

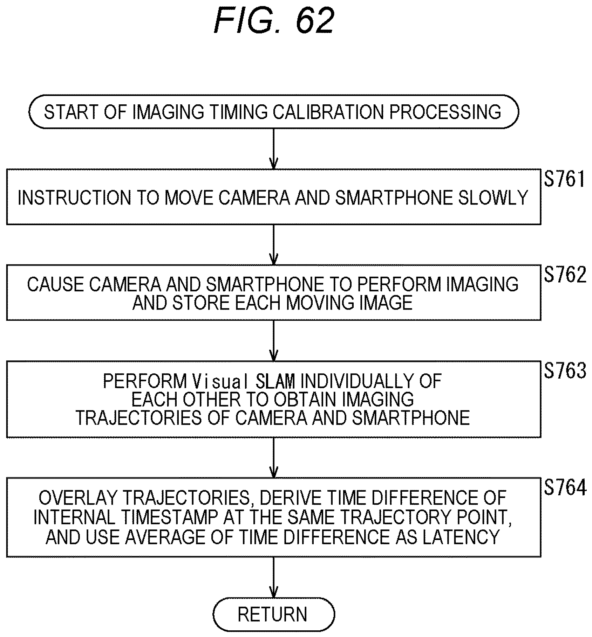

Next, an example of a flow of the imaging timing calibration processing performed in step S703 in Fig. 60 will be described with reference to a flowchart in Fig. 62.

Upon the start of the imaging timing calibration processing, the calibration processing unit 1710 issues an instruction to move the imaging communication device 1401 (for example, the smartphone) and the imaging device 1402 (for example, the ILC) slowly in step S761. For example, the calibration processing unit 1710 displays an image prompting such movement (change in viewpoint).

In step S762, the calibration processing unit 1710 causes the first imaging unit (imaging unit 1312) to perform the first imaging (capturing of a moving image). Furthermore, the calibration processing unit 1710 causes the second imaging unit (imaging unit 1332) to perform the second imaging (capturing of a moving image).

In step S763, the calibration processing unit 1710 performs Visual SLAM on the first captured image and the second captured image independently of each other to derive the trajectory of the first imaging unit and the trajectory of the second imaging unit. For example, the SLAM 1321 performs Visual SLAM on each frame of the first captured image to derive the first orientation information. The trajectory overlay unit 1712 derives a trajectory of the first imaging unit on the basis of the first orientation information. Furthermore, the SLAM 1711 performs Visual SLAM on each frame of the second captured image to derive the second orientation information. The trajectory overlay unit 1712 derives a trajectory of the second imaging unit on the basis of the second orientation information.

In step S764, the trajectory overlay unit 1712 overlays the trajectories, derives time differences of internal stamps at the same trajectory points (that is, a time difference when the first imaging unit (imaging unit 1312) and the second imaging unit (imaging unit 1332) are located at the same physical position), applies an average of the time differences as latency, and calibrates the imaging timing of the second imaging unit. The trajectory overlay unit 1712 generates timing calibration information indicating the calibration result.

The completion of step S764 bring the imaging timing calibration processing to an end, and the processing returns to Fig. 60.

By performing each processing as described above, the imaging communication device 1401 can install the second imaging unit in the correct relative position and orientation on the first imaging unit. Furthermore, the imaging communication device 1401 can suppress a decrease in the accuracy of the position and orientation of the second imaging unit. Furthermore, the imaging communication device 1401 can control (instruct) the second imaging so that the second imaging is performed at appropriate timing (desired position). Therefore, the imaging communication device 1401 can suppress a decrease in the accuracy of the navigation of the second imaging. Therefore, the imaging communication device 1401 can obtain a captured image in a more appropriate position and orientation, and can suppress a decrease in the accuracy of the 3D data obtained by the second 3D modeling. Furthermore, since the second imaging can be performed in a more appropriate position and orientation, the imaging communication device 1401 can suppress an increase in the number of captured images used in the second 3D modeling. Therefore, the imaging communication device 1401 can suppress an increase in the user's workload. Furthermore, the imaging communication device 1401 can suppress an increase in the load (processing volume, processing time, and the like) of the 3D modeling processing.

<Other application examples of present technology>

Note that, in the above description, a case where the present technology described above in <5. Calibration processing> is applied to the information processing system 1400 (imaging communication device 1401) in Fig. 43 has been described; however, the present technology can also be applied to devices other than the imaging communication device 1401.

For example, the present technology may be applied to the imaging device 1300 in Fig. 39. In that case, similarly to the case of the imaging communication device 1401 in Fig. 53, the imaging device 1300 in Fig. 39 may include the calibration unit 1601. Furthermore, in that case, the imaging device 1300 may perform the 3D modeling processing in Fig. 55.

<9. Appendix>

<Computer>

The above-described series of processing can be performed by hardware or software. In a case where the series of processing is performed by the software, a program that forms the software is installed in a computer. Here, examples of the computer include, for example, a computer that is built in dedicated hardware, a general-purpose personal computer that can perform various functions by being installed with various programs, and the like.

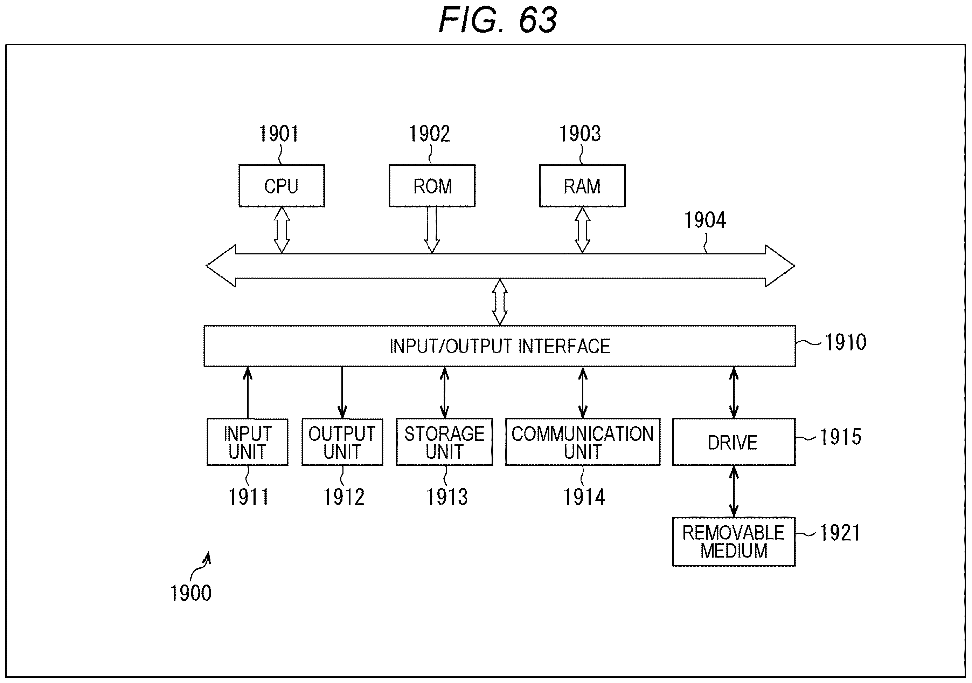

Fig. 63 is a block diagram illustrating a configuration example of hardware of the computer that performs the above-described series of processing by the program.

In a computer 1900 illustrated in Fig. 63, a central processing unit (CPU) 1901, a read only memory (ROM) 1902, and a random access memory (RAM) 1903 are interconnected via a bus 1904.

The bus 1904 is further connected with an input/output interface 1910. An input unit 1911, an output unit 1912, a storage unit 1913, a communication unit 1914, and a drive 1915 are connected to the input/output interface 1910.

The input unit 1911 includes, for example, a keyboard, a mouse, a microphone, a touch panel, an input terminal, or the like. The output unit 1912 includes, for example, a display, a speaker, an output terminal, or the like. The storage unit 1913 includes, for example, a hard disk, a RAM disk, a non-volatile memory, or the like. The communication unit 1914 includes, for example, a network interface. The drive 1915 drives a removable recording medium 1921 such as a magnetic disk, an optical disc, a magneto-optical disk, or a semiconductor memory.

In the computer configured as described above, for example, the CPU 1901 loads a program stored in the storage unit 1913 into the RAM 1903 via the input/output interface 1910 and the bus 1904 and executes the program. As a result, the series of processing described above is performed. The RAM 1903 may appropriately store data and the like necessary for the CPU 1901 to perform various types of processing.

The program executed by the computer may be recorded in the removable recording medium 1921 as a package medium or the like and applied, for example. In that case, the program may be read from the removable recording medium 1921 attached to the drive 1915 and installed in the storage unit 1913 via the input/output interface 1910.

Furthermore, this program may be provided via any wired or wireless transmission medium such as a local area network, the Internet, or digital satellite broadcasting. In this case, the program may be received by the communication unit 1914 and installed in the storage unit 1913 via the input/output interface 1910.

Furthermore, the program may be installed in the ROM 1902, the storage unit 1913, or both in advance.

<Applicable target of present technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that, herein, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

<Others>

Note that, herein, the term "associating" means, for example, when processing one data, allowing other data to be used (to be linked), for example. That is, the data associated with each other may be collected as one data or may be made individual data. For example, information associated with certain data may be transmitted on a transmission path different from that of the data. Furthermore, for example, the information associated with certain data may be recorded in a recording medium different from that of the data (or another recording area of the same recording medium). Note that, this "association" may be of not entire data but a part of data. For example, moving 3D data and information corresponding to the moving 3D data may be associated with each other in any unit such as a plurality of frames, one frame, or a part within a frame.

Note that, herein, terms such as "combine", "multiplex", "add", "merge", "include", "store", "put in", "introduce", and "insert" mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the above-described programs may be executed in any device. In this case, the device is only required to have a necessary function (functional block or the like) and obtain necessary information.

Furthermore, for example, each step in one flowchart may be performed by one device, or may be shared and performed by a plurality of devices. Moreover, in a case where a plurality of pieces of processing is included in one step, the plurality of pieces of processing may be performed by one device, or may be shared and performed by a plurality of devices. In other words, the plurality of pieces of processing included in one step can also be performed as pieces of processing of a plurality of steps. Conversely, processing described as a plurality of steps can also be collectively performed as one step.

Furthermore, for example, in the program executed by the computer, processing of steps describing the program may be performed in time series in the order described herein, or may be performed in parallel or individually at necessary timing such as when a call is made. That is, the pieces of processing of the respective steps may be performed in an order different from the above-described order as long as there is no contradiction. Moreover, the processing of steps for describing the program may be performed in parallel with processing of another program, or may be performed in combination with processing of another program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that the present technology may also have the following configurations.

(1) An information processing device including:

a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object;
a calibration unit that calibrates second orientation information indicating a position and orientation of a second imaging unit that performs second imaging on the basis of the first captured image, the first orientation information, and a second captured image generated by the second imaging of imaging the 3D object; and

an imaging control unit that reflects a calibration result in the second orientation information and controls the second imaging to generate second three-dimensional shape information representing the three-dimensional shape of the 3D object on the basis of the second orientation information reflecting the calibration result and the first three-dimensional shape information.

(2) The information processing device according to (1), in which
the calibration unit calibrates the second orientation information on the basis of the first captured image and the second captured image, both captured at same timing, and the first orientation information obtained at the timing.
(3) The information processing device according to (2), in which

the calibration unit
detects feature points of the first captured image and the second captured image,
obtains corresponding points between the feature points of the first captured image and the feature points of the second captured image,
identifies a scale of the 3D object on the basis of the first orientation information, and
calibrates the second orientation information on the basis of the corresponding points and the scale so that a reprojection error becomes sufficiently small.

(4) The information processing device according to (3), in which

the calibration unit further calibrates the second orientation information using an internal parameter of the second imaging unit so that the reprojection error becomes sufficiently small.
(5) The information processing device according to (4), in which
the internal parameter includes a preset value preset for the second imaging unit or an optical system unit used in the second imaging unit.
(6) The information processing device according to (2), in which

the calibration unit
outputs guidance to prompt movement of the first imaging unit and the second imaging unit, and
calibrates the second orientation information on the basis of a plurality of the first captured images and the second captured images obtained by performing the first imaging and the second imaging in a plurality of different positions in accordance with the guidance.

(7) The information processing device according to (2), in which

in a case where the calibration of the second orientation information has succeeded, the calibration unit outputs a notification indicating that the successful calibration, and
in a case where the calibration of the second orientation information has failed, the calibration unit outputs guidance to prompt re-imaging.

(8) The information processing device according to (1), in which
the calibration unit outputs guidance to prompt installation of the second imaging unit in a correct relative position and orientation with respect to the first imaging unit.
(9) The information processing device according to (1), in which

the calibration unit further calibrates imaging timing of the second imaging, and
when controlling the second imaging, the imaging control unit instructs the second imaging at instruction timing that ensures the imaging timing reflecting a calibration result is appropriate.

(10) The information processing device according to (9), in which
the calibration unit calibrates the imaging timing on the basis of the second captured image obtained by capturing a measurement image that changes over time.
(11) The information processing device according to (10), in which
the calibration unit outputs guidance to prompt capturing of the measurement image in a correct position.
(12) The information processing device according to (1), further including:

a scoring processing unit that uses the first three-dimensional shape information to evaluate accuracy of the second three-dimensional shape information that can be generated using the second captured image generated by the second imaging performed so far, and generates a scoring result, in which
the imaging control unit controls the second imaging to generate the second three-dimensional shape information on the basis of the second orientation information reflecting the calibration result, the first three-dimensional shape information, and the scoring result.

(13) The information processing device according to (1), in which
the first 3D modeling processing unit includes:

an orientation information generation unit that generates the first orientation information on the basis of acceleration and angular velocity of the first imaging unit; and
a three-dimensional shape generation unit that generates the first three-dimensional shape information on the basis of the first orientation information and a depth of the 3D object.

(14) The information processing device according to (13), in which
the first three-dimensional shape information includes a mesh representing the three-dimensional shape of the 3D object through vertexes and connections, and a texture applied to a surface of the mesh.
(15) The information processing device according to (13), further including:

a depth detection unit that detects the depth;
the first imaging unit; and
an inertial measurement unit that detects the acceleration and the angular velocity.

(16) The information processing device according to (1), further including:
the second imaging unit.
(17) The information processing device according to (1), further including:
an association unit that associates the second orientation information reflecting the calibration result with the second captured image.
(18) An information processing method including:

generating first orientation information indicating a position and orientation of a first imaging unit that performs first imaging and first three-dimensional shape information representing a three-dimensional shape of a 3D object on the basis of a first captured image generated by the first imaging of imaging the 3D object;
calibrating second orientation information indicating a position and orientation of a second imaging unit that performs second imaging on the basis of the first captured image, the first orientation information, and a second captured image generated by the second imaging of imaging the 3D object; and
reflecting a calibration result in the second orientation information and controlling the second imaging to generate second three-dimensional shape information representing the three-dimensional shape of the 3D object on the basis of the second orientation information reflecting the calibration result and the first three-dimensional shape information.

(21) An information processing device including:

a first 3D modeling processing unit that generates first orientation information indicating a position and orientation of a first imaging unit that performs first imaging and first three-dimensional shape information representing a three-dimensional shape of a 3D object on the basis of a first captured image generated by the first imaging of imaging the 3D object;
a calibration unit that calibrates second orientation information indicating a position and orientation of a second imaging unit that performs second imaging on the basis of the first captured image, the first orientation information, and a second captured image generated by the second imaging of imaging the 3D object; and
a guidance information output control unit that reflects a calibration result in the second orientation information, generates guidance information for the second imaging to generate second three-dimensional shape information representing the three-dimensional shape of the 3D object on the basis of the second orientation information reflecting the calibration result and the first three-dimensional shape information, and controls output of the guidance information.

(22) The information processing device according to (21), in which
the calibration unit calibrates the second orientation information on the basis of the first captured image and the second captured image, both captured at same timing, and the first orientation information obtained at the timing.
(23) The information processing device according to (22), in which

the calibration unit detects feature points of the first captured image and the second captured image,
obtains corresponding points between the feature points of the first captured image and the feature points of the second captured image,
identifies a scale of the 3D object on the basis of the first orientation information, and
calibrates the second orientation information on the basis of the corresponding points and the scale so that a reprojection error becomes sufficiently small.

(24) The information processing device according to (23), in which
the calibration unit further calibrates the second orientation information using an internal parameter of the second imaging unit so that the reprojection error becomes sufficiently small.
(25) The information processing device according to (24), in which
the internal parameter includes a preset value preset for the second imaging unit or an optical system unit used in the second imaging unit.
(26) The information processing device according to (22), in which
the calibration unit outputs guidance to prompt movement of the first imaging unit and the second imaging unit, and calibrates the second orientation information on the basis of a plurality of the first captured images and the second captured images obtained by performing the first imaging and the second imaging in a plurality of different positions in accordance with the guidance.
(27) The information processing device according to (22), in which

> in a case where the calibration of the second orientation information has succeeded, the calibration unit outputs a notification indicating that the successful calibration, and
> in a case where the calibration of the second orientation information has failed, the calibration unit outputs guidance to prompt re-imaging.

(28) The information processing device according to (21), in which
the calibration unit outputs guidance to prompt installation of the second imaging unit in a correct relative position and orientation with respect to the first imaging unit.
(29) The information processing device according to (21), further including:

> a scoring processing unit that uses the first three-dimensional shape information to evaluate accuracy of the second three-dimensional shape information that can be generated using the second captured image generated by the second imaging performed so far, and generates a scoring result, in which
> the guidance information output control unit generates the guidance information on the basis of the second orientation information reflecting the calibration result, the first three-dimensional shape information, and the scoring result and outputs the guidance information.

(30) The information processing device according to (21), in which
the first 3D modeling processing unit includes:

an orientation information generation unit that generates the first orientation information on the basis of acceleration and angular velocity of the first imaging unit; and
a three-dimensional shape generation unit that generates the first three-dimensional shape information on the basis of the first orientation information and a depth of the 3D object.

(31) The information processing device according to (30), in which
the first three-dimensional shape information includes a mesh representing the three-dimensional shape of the 3D object through vertexes and connections, and a texture applied to a surface of the mesh.
(32) The information processing device according to (30), further including:

> a depth detection unit that detects the depth;
> the first imaging unit; and
> an inertial measurement unit that detects the acceleration and the angular velocity.

(33) The information processing device according to (21), further including:
the second imaging unit.
(34) The information processing device according to (21), further including:
an association unit that associates the second orientation information reflecting the calibration result with the second captured image.
(35) An information processing method including:

> generating first orientation information indicating a position and orientation of a first imaging unit that performs first imaging and first three-dimensional shape information representing a three-dimensional shape of a 3D object on the basis of a first captured image generated by the first imaging of imaging the 3D object;
> calibrating second orientation information indicating a position and orientation of a second imaging unit that performs second imaging on the basis of the first captured image, the first orientation information, and a second captured image generated by the second imaging of imaging the 3D object; and
> reflecting a calibration result in the second orientation information, generating guidance information for the second imaging to generate second three-dimensional shape information representing the three-dimensional shape of the 3D object on the basis of the second orientation information reflecting the calibration result and the first three-dimensional shape information, and controlling output of the guidance information.

REFERENCE SIGNS LIST

| | |
|---|---|
| 101 | First 3D data generation processing |
| 102 | Scoring processing |
| 103 | Imaging control processing for second 3D modeling |
| 104 | Second 3D data generation processing |
| 105 | Imaging guidance output processing for second 3D modeling |
| 106 | Calibration processing |
| 1300 | Imaging device |
| 1301 | First 3D data generation unit |
| 1302 | Scoring processing unit |
| 1303 | Imaging control unit |
| 1304 | Second 3D data generation unit |
| 1305 | Encoding unit |
| 1306 | Storage unit |
| 1307 | Communication unit |
| 1308 | Imaging guidance output control unit |
| 1309 | Output unit |
| 1311 | Depth sensor |
| 1312 | Imaging unit |
| 1313 | IMU |
| 1314 | Real-time 3D modeling processing unit |
| 1321 | SLAM |
| 1322 | TSDF update unit |
| 1323 | Mesh generation unit |
| 1331 | Operation unit |
| 1332 | Imaging unit |
| 1333 | Image processing unit |
| 1334 | Photogrammetry processing unit |
| 1341 | SfM |
| 1342 | MVS |
| 1400 | Information processing system |
| 1401 | Imaging communication device |
| 1402 | Imaging device |
| 1403 | Server |
| 1404 | Network |
| 1410 | Terminal device |
| 1421 | Communication unit |
| 1431 | Communication unit |
| 1432 | Encoding unit |
| 1433 | Storage unit |
| 1441 | Communication unit |
| 1442 | Decoding unit |
| 1444 | Encoding unit |
| 1445 | Storage unit |
| 1601 | Calibration unit |
| 1611 | Imaging timing calibration unit |
| 1612 | Installation guidance processing unit |
| 1613 | Orientation information calibration unit |
| 1710 | Calibration processing unit |
| 1711 | SLAM |
| 1712 | Trajectory overlay unit |
| 1900 | Computer |

**Claims**

1. An information processing device comprising:

a first 3D modeling processing unit that generates first orientation information indicating a position and orientation of a first imaging unit that performs first imaging and first three-dimensional shape information representing a three-dimensional shape of a 3D object on a basis of a first captured image generated by the first imaging of imaging the 3D object;
a calibration unit that calibrates second orientation information indicating a position and orientation of a second imaging unit that performs second imaging on a basis of the first captured image, the first orientation information, and a second captured image generated by the second imaging of imaging the 3D object; and
an imaging control unit that reflects a calibration result in the second orientation information and controls the second imaging to generate second three-dimensional shape information representing the three-dimensional shape of the 3D object on a basis of the second orientation information reflecting the calibration result and the first three-dimensional shape information.

2. The information processing device according to claim 1, wherein
the calibration unit calibrates the second orientation information on a basis of the first captured image and the second captured image, both captured at same timing, and the first orientation information obtained at the timing.

3. The information processing device according to claim 2, wherein

the calibration unit
detects feature points of the first captured image and the second captured image,
obtains corresponding points between the feature points of the first captured image and the feature points of the second captured image,
identifies a scale of the 3D object on a basis of the first orientation information, and
calibrates the second orientation information on a basis of the corresponding points and the scale so that a reprojection error becomes sufficiently small.

4. The information processing device according to claim 3, wherein
the calibration unit further calibrates the second orientation information using an internal parameter of the second imaging unit so that the reprojection error becomes sufficiently small.

**5.** The information processing device according to claim 4, wherein
the internal parameter includes a preset value preset for the second imaging unit or an optical system unit used in the second imaging unit.

**6.** The information processing device according to claim 2, wherein

the calibration unit
outputs guidance to prompt movement of the first imaging unit and the second imaging unit, and
calibrates the second orientation information on a basis of a plurality of the first captured images and the second captured images obtained by performing the first imaging and the second imaging in a plurality of different positions in accordance with the guidance.

**7.** The information processing device according to claim 2, wherein

in a case where the calibration of the second orientation information has succeeded, the calibration unit outputs a notification indicating that the successful calibration, and
in a case where the calibration of the second orientation information has failed, the calibration unit outputs guidance to prompt re-imaging.

**8.** The information processing device according to claim 1, wherein
the calibration unit outputs guidance to prompt installation of the second imaging unit in a correct relative position and orientation with respect to the first imaging unit.

**9.** The information processing device according to claim 1, wherein

the calibration unit further calibrates imaging timing of the second imaging, and
when controlling the second imaging, the imaging control unit instructs the second imaging at instruction timing that ensures the imaging timing reflecting a calibration result is appropriate.

**10.** The information processing device according to claim 9, wherein
the calibration unit calibrates the imaging timing on a basis of the second captured image obtained by capturing a measurement image that changes over time.

**11.** The information processing device according to claim 10, wherein
the calibration unit outputs guidance to prompt capturing of the measurement image in a correct position.

**12.** The information processing device according to claim 1, further comprising:

a scoring processing unit that uses the first three-dimensional shape information to evaluate accuracy of the second three-dimensional shape information that can be generated using the second captured image generated by the second imaging performed so far, and generates a scoring result, wherein
the imaging control unit controls the second imaging to generate the second three-dimensional shape information on a basis of the second orientation information reflecting the calibration result, the first three-dimensional shape information, and the scoring result.

**13.** The information processing device according to claim 1, wherein
the first 3D modeling processing unit includes:

an orientation information generation unit that generates the first orientation information on a basis of acceleration and angular velocity of the first imaging unit; and
a three-dimensional shape generation unit that generates the first three-dimensional shape information on a basis of the first orientation information and a depth of the 3D object.

**14.** The information processing device according to claim 13, wherein
the first three-dimensional shape information includes a mesh representing the three-dimensional shape of the 3D object through vertexes and connections, and a texture applied to a surface of the mesh.

**15.** The information processing device according to claim 13, further comprising:

a depth detection unit that detects the depth;
the first imaging unit; and
an inertial measurement unit that detects the acceleration and the angular velocity.

**16.** The information processing device according to claim 1, further comprising:
the second imaging unit.

**17.** The information processing device according to claim 1, further comprising:
an association unit that associates the second orientation information reflecting the calibration result with the second captured image.

**18.** An information processing method comprising:

generating first orientation information indicating a position and orientation of a first imaging unit that performs first imaging and first three-dimensional shape information representing a three-dimensional shape of a 3D object on a basis of a first captured image generated by the first imaging of imaging the 3D object; calibrating second orientation information indicating a position and orientation of a second imaging unit that performs second imaging on a basis of the first captured image, the first orientation information, and a second captured image generated by the second imaging of imaging the 3D object; and reflecting a calibration result in the second orientation information and controlling the second imaging to generate second three-dimensional shape information representing the three-dimensional shape of the 3D object on a basis of the second orientation information reflecting the calibration result and the first three-dimensional shape information.

**19.** An information processing device comprising:

a first 3D modeling processing unit that generates first orientation information indicating a position and orientation of a first imaging unit that performs first imaging and first three-dimensional shape information representing a three-dimensional shape of a 3D object on a basis of a first captured image generated by the first imaging of imaging the 3D object; a calibration unit that calibrates second orientation information indicating a position and orientation of a second imaging unit that performs second imaging on a basis of the first captured image, the first orientation information, and a second captured image generated by the second imaging of imaging the 3D object; and a guidance information output control unit that reflects a calibration result in the second orientation information, generates guidance information for the second imaging to generate second three-dimensional shape information representing the three-dimensional shape of the 3D object on a basis of the second orientation information reflecting the calibration result and the first three-dimensional shape information, and controls output of the guidance information.

**20.** An information processing method comprising:

generating first orientation information indicating a position and orientation of a first imaging unit that performs first imaging and first three-dimensional shape information representing a three-dimensional shape of a 3D object on a basis of a first captured image generated by the first imaging of imaging the 3D object; calibrating second orientation information indicating a position and orientation of a second imaging unit that performs second imaging on a basis of the first captured image, the first orientation information, and a second captured image generated by the second imaging of imaging the 3D object; and reflecting a calibration result in the second orientation information, generating guidance information for the second imaging to generate second three-dimensional shape information representing the three-dimensional shape of the 3D object on a basis of the second orientation information reflecting the calibration result and the first three-dimensional shape information, and controlling output of the guidance information.

## FIG. 1

SfM+MVS+Meshing

## FIG. 2

SLAM+TSDF+MC

EP 4 651 503 A1

## FIG. 3

| | REAL-TIME 3D MODELING | PHOTOGRAMMETRY |
|---|---|---|
| METHOD | SELF-LOCALIZATION + TSDF | SfM (INCLUDING SELF-LOCALIZATION) + MVS |
| DATA | DEPTH + ORIENTATION DATA (+IMAGE) | ONLY IMAGE DATA |
| PROCESSING TIME | REAL TIME (>30fps) | LONG TIME (SEVERAL MINUTES TO SEVERAL TENS OF HOURS) |
| REQUIRED COMPUTATION | MOBILE AP LEVEL | HIGH-END CPU + GPU LEVEL |
| MODEL RESOLUTION | LOW (DEPENDS ON SENSOR/SELF-LOCALIZATION ACCURACY) | HIGH RESOLUTION TO ULTRA-HIGH RESOLUTION (DEPENDS ON INPUT IMAGE SIZE, AMOUNT, AND IMAGING METHOD) |
| INTERNAL EXPRESSION OF THREE-DIMENSIONAL DATA | Voxel-BASED | POINT CLOUD-BASED |
| SUBJECT SIZE/ RESOLUTION CONSTRAINTS | YES/SENSOR-DEPENDENT (PHYSICAL ABSOLUTE AMOUNT) | NO (RELATIVE DUE TO PIXEL-BASED) |
| MODEL ABSOLUTE ACCURACY | LOW (DEPENDS ON SENSOR/SELF-LOCALIZATION ACCURACY) | HIGH (OPTIMIZATION USING BUNDLE ADJUSTMENT) |
| SCALE | UNIQUELY IDENTIFIED (ABSOLUTE SIZE IS KNOWN) | VARIABLE (SIZE IS UNKNOWN) |

## FIG. 4

SCORING RESULT OUTPUT
OVERLAP INFORMATION OUTPUT
IMAGING ASSIST INFORMATION OUTPUT
CAPTURED IMAGE DISPLAY

101 FIRST 3D DATA GENERATION PROCESSING

FIRST 3D DATA

102 SCORING PROCESSING

SCORING RESULT

IMAGING VIEWPOINT INFORMATION

105 IMAGING GUIDANCE OUTPUT PROCESSING FOR SECOND 3D MODELING

106 CALIBRATION PROCESSING

103 IMAGING CONTROL PROCESSING FOR SECOND 3D MODELING

IMAGING CONTROL INFORMATION

IMAGING TIMING INFORMATION

104 SECOND 3D DATA GENERATION PROCESSING

SECOND 3D DATA

MANUAL IMAGING

CAMERA INFORMATION

CAPTURED IMAGE
IMAGING TIMING INFORMATION

# FIG. 5

FIG. 6

FIG. 7

FIG. 8

EP 4 651 503 A1

FIG. 9

EP 4 651 503 A1

FIG. 10

EP 4 651 503 A1

FIG. 11

EP 4 651 503 A1

FIG. 12

EP 4 651 503 A1

*FIG. 13*

FIG. 14

EP 4 651 503 A1

FIG. 15

EP 4 651 503 A1

FIG. 16

EP 4 651 503 A1

FIG. 17

EP 4 651 503 A1

FIG. 18

EP 4 651 503 A1

FIG. 19

EP 4 651 503 A1

*FIG. 20*

## FIG. 21

IDEAL POSITION ▶

CURRENT POSITION ◁

260

261

260

261

## FIG. 22

FAR SIDE

RIGHT POSITION

NEAR SIDE

CURRENT POSITION

IDEAL POSITION

260

261

FIG. 23

EP 4 651 503 A1

# FIG. 24

DIRECTLY FACING
DIRECTIONS ARE
ALIGNED

273

272

DIRECTLY FACING
DIRECTIONS ARE
SLIGHTLY APART

273

272

NEED TO GET CLOSER

273

272

WITHIN IDEAL
POSITION RANGE

274

273

272

NEED TO MOVE AWAY
BECAUSE TOO CLOSE

273

272

IMAGING FROM
PERFECT DIRECTION

274

273

272

# FIG. 25

281

280

283   282

EP 4 651 503 A1

# FIG. 26

# FIG. 27

IMAGE DISPLAY
INSTRUCTION
IMAGING INSTRUCTION

CAPTURED IMAGE

IMAGING TIMING
CALIBRATION PROCESSING

TIMING CALIBRATION
INFORMATION

341

GUIDANCE DISPLAY
INSTRUCTION

ORIENTATION IMAGE

INSTALLATION GUIDANCE
PROCESSING

342

GUIDANCE DISPLAY
INSTRUCTION
IMAGING INSTRUCTION

ORIENTATION INFORMATION
CALIBRATION PROCESSING

ORIENTATION CALIBRATION
INFORMATION

FIRST CAPTURED IMAGE
SECOND CAPTURED IMAGE
ORIENTATION INFORMATION
INTERNAL PARAMETER

343

106

# FIG. 28

ISSUE COMMAND     SCREEN CHANGE     IMAGING

| DISPLAY | DISPLAY LATENCY | 1 | 2 | 3 | 4 | 5 | 6 |

| IMAGING | COMMUNICATION LATENCY | SHUTTER TIME LAG |

T

351

EP 4 651 503 A1

FIG. 29

EP 4 651 503 A1

# FIG. 30

# FIG. 31

## FIG. 32

# FIG. 33

FIRST CAPTURED IMAGE
SECOND CAPTURED IMAGE →
**FEATURE POINT VERIFICATION PROCESSING**

401

↓

**COMMON FIELD-OF-VIEW VERIFICATION PROCESSING**

402

↓

IMAGING INSTRUCTION ←
**IMAGING CONTROL PROCESSING**

403

↓

FIRST CAPTURED IMAGE
SECOND CAPTURED IMAGE
ORIENTATION INFORMATION
INTERNAL PARAMETER →
**ORIENTATION INFORMATION CALIBRATION PROCESSING**
→ ORIENTATION CALIBRATION INFORMATION

404

343

# FIG. 34

WITH CAMERA FIXED TO SMARTPHONE,
MOVE IT SLOWLY LEFT, RIGHT, UP, AND DOWN

~301-11

~371

CALIBRATION HAS SUCCEEDED

~301-12

~371

· TRY AGAIN IN AREA WITH TEXTURE
· FIX CAMERA FIRMLY TO SMARTPHONE

~301-13

~371

# FIG. 35

# FIG. 36

*FIG. 37*

## FIG. 38

GUIDANCE DISPLAY
INSTRUCTION

⟵ INSTALLATION GUIDANCE
PROCESSING

ORIENTATION INFORMATION ⟶

342

GUIDANCE DISPLAY
INSTRUCTION
IMAGING INSTRUCTION

⟵ ORIENTATION INFORMATION
CALIBRATION PROCESSING ⟶ ORIENTATION CALIBRATION
INFORMATION

FIRST CAPTURED IMAGE
SECOND CAPTURED IMAGE ⟶
ORIENTATION INFORMATION
INTERNAL PARAMETER

541

GUIDANCE DISPLAY
INSTRUCTION
IMAGING INSTRUCTION

⟵ IMAGING TIMING
CALIBRATION PROCESSING ⟶ TIMING CALIBRATION
INFORMATION

FIRST CAPTURED IMAGE
SECOND CAPTURED IMAGE ⟶
ORIENTATION INFORMATION
INTERNAL PARAMETER

542

106

FIG. 39

# FIG. 40

```
( START OF 3D MODELING PROCESSING )
                    │
                    ▼
┌─────────────────────────────────────────────────────────┐ S301
│ ACQUIRE DEPTH, CAPTURED IMAGE, AND INERTIAL INFORMATION  │
└─────────────────────────────────────────────────────────┘
                    │
                    ▼
┌─────────────────────────────────────────────────────────┐ S302
│            PERFORM REAL-TIME 3D MODELING                 │
└─────────────────────────────────────────────────────────┘
                    │
                    ▼
┌─────────────────────────────────────────────────────────┐ S303
│        PERFORM SCORING ON FIRST 3D DATA ON               │
│        THE BASIS OF IMAGING PERFORMED SO FAR             │
└─────────────────────────────────────────────────────────┘
                    │
                    ▼
┌─────────────────────────────────────────────────────────┐ S304
│  GENERATE AND OUTPUT IMAGING GUIDANCE ON THE BASIS OF    │
│  SCORING RESULT, ORIENTATION INFORMATION, AND THE LIKE   │
└─────────────────────────────────────────────────────────┘
                    │
                    ▼
┌─────────────────────────────────────────────────────────┐ S305
│  CONTROL IMAGING FOR PHOTOGRAMMETRY ON THE BASIS OF      │
│  SCORING RESULT, ORIENTATION INFORMATION, AND THE LIKE   │
└─────────────────────────────────────────────────────────┘
                    │
                    ▼
┌─────────────────────────────────────────────────────────┐ S306
│        PERFORM IMAGING IN ACCORDANCE WITH CONTROL        │
└─────────────────────────────────────────────────────────┘
                    │
                    ▼
┌─────────────────────────────────────────────────────────┐ S307
│ ACQUIRE CAMERA INFORMATION AND IMAGING TIMING INFORMATION│
└─────────────────────────────────────────────────────────┘
                    │
                    ▼
NO  ◁── TERMINATE IMAGING FOR PHOTOGRAMMETRY? ──▷  S308
                    │ YES
                    ▼
┌─────────────────────────────────────────────────────────┐ S309
│              PERFORM PHOTOGRAMMETRY                       │
└─────────────────────────────────────────────────────────┘
                    │
                    ▼
┌─────────────────────────────────────────────────────────┐ S310
│                     ENCODE                               │
└─────────────────────────────────────────────────────────┘
                    │
                    ▼
┌─────────────────────────────────────────────────────────┐ S311
│                STORE AND TRANSMIT                        │
└─────────────────────────────────────────────────────────┘
                    │
                    ▼
                ( END )
```

# FIG. 41

START OF REAL-TIME 3D MODELING PROCESSING

DERIVE THREE-DIMENSIONAL ORIENTATION
ON THE BASIS OF CAPTURED IMAGE
AND INERTIAL INFORMATION                    S331

UPDATE TSDF ON THE BASIS OF CAPTURED IMAGE,
ORIENTATION INFORMATION, AND DEPTH          S332

GENERATE FIRST 3D DATA
ON THE BASIS OF UPDATED TSDF                S333

RETURN

# FIG. 42

START OF PHOTOGRAMMETRY PROCESSING

DETECT CORRESPONDING POINT
BETWEEN CAPTURED IMAGES ⟩ S351

DERIVE THREE-DIMENSIONAL ORIENTATION
OF CAMERA USING EPIPOLAR CONSTRAINT ⟩ S352

DERIVE THREE-DIMENSIONAL POINT
USING TRIANGULATION ⟩ S353

OPTIMIZE WHOLE USING BUNDLE ADJUSTMENT ⟩ S354

DERIVE THREE-DIMENSIONAL POINT
USING DENSE CORRESPONDING POINT SEARCH
AND GENERATE SECOND 3D DATA ⟩ S355

RETURN

FIG. 43

# FIG. 44

1301
- 1311 DEPTH SENSOR
- 1312 IMAGING UNIT
- 1313 IMU

1314
- 1321 SLAM
- 1322 TSDF UPDATE UNIT
- 1323 MESH GENERATION UNIT

1308 IMAGING GUIDANCE OUTPUT CONTROL UNIT
1309 OUTPUT UNIT
1302 SCORING PROCESSING UNIT
1303 IMAGING CONTROL UNIT
IMAGING CONTROL INFORMATION
1307 COMMUNICATION UNIT
1306 STORAGE UNIT
1305 ENCODING UNIT
CAPTURED IMAGE
ORIENTATION INFORMATION

CAMERA INFORMATION
IMAGING TIMING INFORMATION
1421 COMMUNICATION UNIT

1401

# FIG. 45

# FIG. 46

## FIG. 47

**1401**
START

ACQUIRE DEPTH, CAPTURED IMAGE, AND SENSOR INFORMATION  S401

PERFORM REAL-TIME 3D MODELING  S402

④

PERFORM SCORING ON FIRST 3D DATA ON THE BASIS OF IMAGING PERFORMED SO FAR  S403

GENERATE AND OUTPUT IMAGING GUIDANCE ON THE BASIS OF SCORING RESULT, ORIENTATION INFORMATION, AND THE LIKE  S404

CONTROL IMAGING FOR PHOTOGRAMMETRY ON THE BASIS OF SCORING RESULT, ORIENTATION INFORMATION, AND THE LIKE  S405

S406

S407

①

**1402**
START

S411

PERFORM IMAGING IN ACCORDANCE WITH CONTROL  S412

SUPPLY CAPTURED IMAGE  S413

SUPPLY CAMERA INFORMATION AND IMAGING TIMING INFORMATION  S414

②

**1403**
START

③

# FIG. 48

ENCODE AND STORE — S441

SUPPLY CAPTURED IMAGE — S431

S451

TERMINATE IMAGING
FOR PHOTOGRAMMETRY? — S432

PERFORM PHOTOGRAMMETRY — S452

ENCODE — S453

STORE AND TRANSMIT — S454

(1) (2) (3) (4)

END   END   END

## FIG. 49

EP 4 651 503 A1

FIG. 50

## FIG. 51

## FIG. 52

# FIG. 53

# FIG. 54

IMAGE DISPLAY INSTRUCTION
IMAGING INSTRUCTION

1611

IMAGING TIMING CALIBRATION UNIT

CAPTURED IMAGE

TIMING CALIBRATION INFORMATION

GUIDANCE DISPLAY INSTRUCTION

1612

INSTALLATION GUIDANCE PROCESSING UNIT

ORIENTATION INFORMATION

GUIDANCE DISPLAY INSTRUCTION
IMAGING INSTRUCTION

1613

ORIENTATION INFORMATION CALIBRATION UNIT

ORIENTATION CALIBRATION INFORMATION

FIRST CAPTURED IMAGE
SECOND CAPTURED IMAGE
ORIENTATION INFORMATION
INTERNAL PARAMETER

1601

# FIG. 55

```
START OF 3D MODELING PROCESSING
```

↓

| PERFORM IMAGING TIMING CALIBRATION PROCESSING | S601 |

↓

| PERFORM INSTALLATION GUIDANCE PROCESSING | S602 |

↓

| PERFORM ORIENTATION INFORMATION CALIBRATION PROCESSING | S603 |

↓

| ACQUIRE DEPTH, CAPTURED IMAGE, AND SENSOR INFORMATION | S604 |

↓

| PERFORM REAL-TIME 3D MODELING | S605 |

↓

| PERFORM SCORING ON FIRST 3D DATA ON THE BASIS OF IMAGING PERFORMED SO FAR | S606 |

↓

| GENERATE AND OUTPUT IMAGING GUIDANCE ON THE BASIS OF ORIENTATION INFORMATION REFLECTING ORIENTATION CALIBRATION INFORMATION, SCORING RESULT, AND THE LIKE | S607 |

↓

| CONTROL IMAGING FOR PHOTOGRAMMETRY AT TIMING REFLECTING TIMING CALIBRATION INFORMATION ON THE BASIS OF ORIENTATION INFORMATION REFLECTING ORIENTATION CALIBRATION INFORMATION, SCORING RESULT, AND THE LIKE | S608 |

↓

```
END
```

# FIG. 56

START OF IMAGING TIMING CALIBRATION PROCESSING

DISPLAY GUIDANCE IMAGE AND DIRECT
SECOND IMAGING UNIT TOWARD DISPLAY UNIT   S621

SET IMAGING PARAMETER OF SECOND IMAGING UNIT   S622

DISPLAY MEASUREMENT IMAGE
AND INSTRUCT SECOND IMAGING   S623

ACQUIRE SECOND CAPTURED IMAGE   S624

OBTAIN TIME LAG ON THE BASIS OF SECOND CAPTURED
IMAGE AND GENERATE TIMING CALIBRATION INFORMATION   S625

SUPPLY TIMING CALIBRATION INFORMATION   S626

RETURN

# FIG. 57

```
( START OF INSTALLATION GUIDANCE PROCESSING )
                         │
                         ▼
┌─────────────────────────────────────────────┐  S641
│        DISPLAY SECOND CAPTURED IMAGE         │
└─────────────────────────────────────────────┘
                         │
                         ▼
┌─────────────────────────────────────────────┐  S642
│     DISPLAY TARGET ANGLE-OF-VIEW POSITION    │
└─────────────────────────────────────────────┘
                         │
         ┌──────────────►│
         │               ▼
┌────────┴────────────────────────────────────┐  S643
│ DISPLAY ANGLE OF VIEW OF FIRST CAPTURED IMAGE │
│     ON THE BASIS OF ORIENTATION INFORMATION   │
└─────────────────────────────────────────────┘
         │               │
         │               ▼
         │    ╱─────────────────────────────────╲  S644
     NO  │   ╱ ANGLE OF VIEW OF FIRST IMAGING UNIT ALIGNS ╲
         └──┤  WITH TARGET ANGLE-OF-VIEW POSITION?          │
             ╲─────────────────────────────────╱
                         │ YES
                         ▼
                    ( RETURN )
```

## FIG. 58

```
        ┌─────────────────────────────────────┐
        │  START OF ORIENTATION INFORMATION   │
        │       CALIBRATION PROCESSING        │
        └─────────────────────────────────────┘
                          │
        ┌─────────────────────────────────────┐ S661
        │ INSTRUCT FIRST IMAGING AND SECOND IMAGING │
        └─────────────────────────────────────┘
                          │
        ┌─────────────────────────────────────┐ S662
        │ DETECT FEATURE POINTS OF FIRST CAPTURED IMAGE │
        │       AND SECOND CAPTURED IMAGE     │
        └─────────────────────────────────────┘
                          │
        ┌─────────────────────────────────────┐ S663
        │ THERE ARE SUFFICIENT NUMBER OF FEATURE POINTS? │─── YES
        └─────────────────────────────────────┘
                          │ NO
        ┌─────────────────────────────────────┐ S664
        │     DISPLAY IMAGE PROMPTING MOVEMENT │
        └─────────────────────────────────────┘
                          │
        ┌─────────────────────────────────────┐ S665
        │       DETECT CORRESPONDING POINT    │
        │     AND VERIFY COMMON FIELD OF VIEW │
        └─────────────────────────────────────┘
                          │
        ┌─────────────────────────────────────┐ S666
        │    COMMON FIELD OF VIEW IS SUFFICIENT? │─── YES
        └─────────────────────────────────────┘
                          │ NO
        ┌─────────────────────────────────────┐ S667
        │ DISPLAY IMAGE PROMPTING INSTALLATION │
        │       ORIENTATION ADJUSTMENT        │
        └─────────────────────────────────────┘
                          │
        ┌─────────────────────────────────────┐ S668
        │ INSTRUCT FIRST IMAGING AND SECOND IMAGING │
        │      TO IMAGE OBJECT SIMULTANEOUSLY │
        └─────────────────────────────────────┘
                          │
        ┌─────────────────────────────────────┐ S669
        │ GENERATE ORIENTATION CALIBRATION INFORMATION USED TO │
        │ OBTAIN POSITION AND ORIENTATION OF SECOND IMAGING UNIT │
        │   USING FIRST CAPTURED IMAGE, SECOND CAPTURED IMAGE, │
        │    ORIENTATION INFORMATION, AND INTERNAL PARAMETER │
        └─────────────────────────────────────┘
                          │
  NO ───┌─────────────────────────────────────┐ S670
        │         IMAGING IS SUFFICIENT?      │
        └─────────────────────────────────────┘
                          │ YES
        ┌─────────────────────────────────────┐ S671
        │ SUPPLY ORIENTATION CALIBRATION INFORMATION │
        └─────────────────────────────────────┘
                          │
                   ┌──────────────┐
                   │    RETURN    │
                   └──────────────┘
```

FIG. 59

EP 4 651 503 A1

# FIG. 60

START OF 3D MODELING PROCESSING

↓

PERFORM INSTALLATION GUIDANCE PROCESSING — S701

↓

PERFORM ORIENTATION INFORMATION CALIBRATION PROCESSING — S702

↓

PERFORM IMAGING TIMING CALIBRATION PROCESSING — S703

↓

ACQUIRE DEPTH, CAPTURED IMAGE, AND SENSOR INFORMATION — S704

↓

PERFORM REAL-TIME 3D MODELING — S705

↓

PERFORM SCORING ON FIRST 3D DATA
ON THE BASIS OF IMAGING PERFORMED SO FAR — S706

↓

GENERATE AND OUTPUT IMAGING GUIDANCE ON THE BASIS OF
ORIENTATION INFORMATION REFLECTING ORIENTATION
CALIBRATION INFORMATION, SCORING RESULT, AND THE LIKE — S707

↓

CONTROL IMAGING FOR PHOTOGRAMMETRY AT TIMING REFLECTING
TIMING CALIBRATION INFORMATION ON THE BASIS OF
ORIENTATION INFORMATION REFLECTING ORIENTATION
CALIBRATION INFORMATION, SCORING RESULT, AND THE LIKE — S708

↓

END

# FIG. 61

START OF ORIENTATION INFORMATION
CALIBRATION PROCESSING

THERE ARE SUFFICIENT NUMBER OF FEATURE POINTS? — S731
YES

NO

INSTRUCT TO CHANGE VIEWPOINT OR THE LIKE
TO ENSURE ANY IMAGING UNIT HAS SUFFICIENT
FIELD OF VIEW AND FEATURE POINTS ARE OBTAINED — S732

INSTRUCT TO MOVE CAMERA AND SMARTPHONE SLOWLY — S733

PERFORM Visual SLAM INDIVIDUALLY OF
EACH OTHER TO OBTAIN IMAGING TRAJECTORIES
OF CAMERA AND SMARTPHONE — S734

OVERLAY TRAJECTORIES AND DERIVE TRANSFORMATION
PARAMETER REQUIRED FOR OVERLAYING TO
GENERATE ORIENTATION CALIBRATION INFORMATION — S735

RETURN

# FIG. 62

START OF IMAGING TIMING CALIBRATION PROCESSING

INSTRUCTION TO MOVE CAMERA AND SMARTPHONE SLOWLY  |S761

CAUSE CAMERA AND SMARTPHONE TO PERFORM IMAGING  |S762
AND STORE EACH MOVING IMAGE

PERFORM Visual SLAM INDIVIDUALLY OF  |S763
EACH OTHER TO OBTAIN IMAGING
TRAJECTORIES OF CAMERA AND SMARTPHONE

OVERLAY TRAJECTORIES, DERIVE TIME DIFFERENCE OF  |S764
INTERNAL TIMESTAMP AT THE SAME TRAJECTORY POINT,
AND USE AVERAGE OF TIME DIFFERENCE AS LATENCY

RETURN

*FIG. 63*

## INTERNATIONAL SEARCH REPORT

| | International application No. |
|---|---|
| | **PCT/JP2023/045703** |

**A. CLASSIFICATION OF SUBJECT MATTER**

*H04N 23/60*(2023.01)i; *G06T 7/55*(2017.01)i; *G06T 7/70*(2017.01)i; *H04N 23/63*(2023.01)i
FI:  H04N23/60 100; G06T7/55; G06T7/70 Z; H04N23/63 300

According to International Patent Classification (IPC) or to both national classification and IPC

**B. FIELDS SEARCHED**

Minimum documentation searched (classification system followed by classification symbols)

H04N23/60; G06T7/55; G06T7/70; H04N23/63

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-114498 A (KABUSHIKI KAISHA TOSHIBA) 10 June 2013 (2013-06-10) paragraphs [0024]-[0032], [0035]-[0040], fig. 4 | 1-6, 8-9, 12-20 |
| A | paragraphs [0024]-[0032], [0035]-[0040], fig. 4 | 7, 10-11 |
| A | JP 2020-036163 A (SZ DJI TECHNOLOGY CO., LTD.  ) 05 March 2020 (2020-03-05) paragraphs [0092]-[0093] | 10-11 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/045703**

| Patent document cited in search report | | | Publication date (day/month/year) | Patent family member(s) | | | Publication date (day/month/year) |
|---|---|---|---|---|---|---|---|
| JP | 2013-114498 | A | 10 June 2013 | US | 2013/0136341 | A1 | |
| | | | | paragraphs [0035]-[0043], [0046]-[0051], fig. 4 | | | |
| JP | 2020-036163 | A | 05 March 2020 | US | 2021/0185235 | A1 | |
| | | | | paragraphs [0081]-[0082] | | | |
| | | | | WO | 2020/042980 | A1 | |
| | | | | CN | 111213107 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063693 A